(19) Europäisches Patentamt

European Patent Office

Office européen des brevets

(11) **EP 4 765 968 A1**

(12) **EUROPEAN PATENT APPLICATION**
published in accordance with Art. 153(4) EPC

(43) Date of publication:
**24.06.2026 Bulletin 2026/26**

(21) Application number: **23957369.4**

(22) Date of filing: **03.11.2023**

(51) International Patent Classification (IPC):
*H04W 64/00* (2009.01)

(52) Cooperative Patent Classification (CPC):
**H04W 64/00**

(86) International application number:
**PCT/CN2023/129790**

(87) International publication number:
**WO 2025/091513 (08.05.2025 Gazette 2025/19)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventors:
• **ZHANG, Jinyu
Dongguan, Guangdong 523860 (CN)**
• **HU, Rongyi
Dongguan, Guangdong 523860 (CN)**

(74) Representative: **Novagraaf Technologies
2 rue Sarah Bernhardt
CS90017
92665 Asnières-sur-Seine Cedex (FR)**

(54) **MEASUREMENT TIME DETERMINATION METHOD AND APPARATUS, DEVICE, AND STORAGE MEDIUM**

(57)    The present application belongs to the field of sidelink communications. Disclosed are a measurement time determination method and apparatus, a device, and a storage medium. The method comprises: according to the measurement capability of a sidelink terminal, determining a measurement parameter, the measurement parameter being used for determining a measurement time of a sidelink positioning reference signal, and the measurement capability being used for reflecting the capability of the sidelink terminal measuring the sidelink positioning reference signal. The present application provides an implementation mode for determining a measurement time of a sidelink positioning reference signal on the basis of the measurement capability of a sidelink terminal.

602

Determining a measurement parameter based on a measurement capability of a sidelink terminal

FIG. 6

EP 4 765 968 A1

**Description**

**TECHNICAL FIELD**

The present disclosure relates to the field of sidelink (SL) communications, and in particular, relates to a method and apparatus for determining a measurement time, a device, and a storage medium.

**RELATED ART**

In the protocols of the 3rd generation partnership project (3GPP), positioning technology is mainly implemented via a Uu link. For example, positioning is achieved by acquiring information such as delay, angle, and energy based on measurements of downlink (DL) and uplink (DL) positioning reference signals (PRSs).

SLPRSs may not be transmitted according to a fixed periodicity and time-frequency resource position as the Uu-link PRS is. The determination mode of a measurement time of the SL PRS requires further discussion and study.

**SUMMARY**

The present disclosure provides a method and apparatus for determining a measurement time, a device, and a storage medium. The technical solutions are as follows.

According to one aspect of the present disclosure, a method for determining a measurement time is provided. The method is performed by a sidelink terminal. The method includes:

determining a measurement parameter based on a measurement capability of the sidelink terminal;
wherein the measurement parameter is used for determining a measurement time of a sidelink positioning reference signal, and the measurement capability is used to reflect a capability of the sidelink terminal to measure the sidelink positioning reference signal.

According to one aspect of the present disclosure, an apparatus for determining a measurement time is provided. The apparatus includes:

determining a measurement parameter based on a measurement capability of the apparatus;
wherein the measurement parameter is used for determining a measurement time of a sidelink positioning reference signal, and the measurement capability is used to reflect a capability of the apparatus to measure the sidelink positioning reference signal.

According to another aspect of the present disclosure, a sidelink terminal is provided. The sidelink terminal includes: a processor; a transceiver, connected to the processor; and a memory, configured to store one or more executable instructions of the processor; wherein the sidelink terminal is configured to load and execute the one or more executable instructions to perform the method for determining the measurement time as described in the above aspect.

According to another aspect of the present disclosure, a computer-readable storage medium is provided. The computer-readable storage medium stores one or more executable instructions. The one or more executable instructions, when loaded and executed by a processor, cause the processor to perform the method for determining the measurement time as described in the above aspect.

According to another aspect of the present disclosure, a chip is provided. The chip includes programmable logic circuitry and/or one or more program instructions. The chip, when running the programmable logic circuitry and/or the one or more program instructions on a computer device, is caused to perform the method for determining the measurement time as described in the above aspect.

According to another aspect of the present disclosure, a computer program product or a computer program is provided. The computer program product or the computer program includes one or more computer instructions stored in a computer-readable storage medium. The one or more computer instructions, when read from the computer-readable storage medium and executed by a processor of a computer device, cause the computer device to perform the method for determining the measurement time as described in the above aspect.

The technical solutions according to the embodiments of the present disclosure include at least the following beneficial effects.

The measurement parameter is determined based on the measurement capability of the sidelink terminal, and the measurement time of the sidelink positioning reference signal is determined based on the measurement parameter, thereby providing an implementation mode for determining the measurement time of the sidelink positioning reference signal based on the measurement capability of the sidelink terminal. In addition, for sidelink terminals with different measurement capabilities, the determined measurement time matches the measurement capabilities of the sidelink terminals.

## BRIEF DESCRIPTION OF DRAWINGS

To describe the technical solutions according to the embodiments of the present disclosure more clearly, the following briefly describes the accompanying drawings required for describing the embodiments. Apparently, the accompanying drawings in the following description show merely some embodiments of the present disclosure, and those of ordinary skill in the art may still derive other accompanying drawings from these accompanying drawings without creative efforts.

FIG. 1 is a schematic diagram of sidelink communication within a network coverage according to some exemplary embodiments of the present disclosure;

FIG. 2 is a schematic diagram of sidelink communication within a partial network coverage according to some exemplary embodiments of the present disclosure;

FIG. 3 is a schematic diagram of sidelink communication outside a network coverage according to some exemplary embodiments of the present disclosure;

FIG. 4 is a schematic diagram of activation of a PRS according to some exemplary embodiments of the present disclosure;

FIG. 5 is a schematic diagram of a system architecture of a communication system according to some embodiments of the present disclosure;

FIG. 6 is a flowchart of a method for determining a measurement time according to some exemplary embodiments of the present disclosure;

FIG. 7 is a flowchart of a method for determining a measurement time according to some exemplary embodiments of the present disclosure;

FIG. 8 is a schematic diagram of resources of an SL PRS according to some exemplary embodiments of the present disclosure;

FIG. 9 is a schematic diagram of resources of an SL PRS according to some exemplary embodiments of the present disclosure;

FIG. 10 is a schematic diagram of resources of an SL PRS according to some exemplary embodiments of the present disclosure;

FIG. 11 is a flowchart of a method for determining a measurement time according to some exemplary embodiments of the present disclosure;

FIG. 12 is a schematic diagram of a single-sided round trip time (RTT) measurement according to some exemplary embodiments of the present disclosure;

FIG. 13 is a flowchart of a method for determining a measurement time according to some exemplary embodiments of the present disclosure;

FIG. 14 is a schematic diagram of a double-sided RTT measurement according to some exemplary embodiments of the present disclosure;

FIG. 15 is a schematic diagram of a double-sided RTT measurement according to some exemplary embodiments of the present disclosure;

FIG. 16 is a block diagram of an apparatus for determining a measurement time according to some exemplary embodiments of the present disclosure; and

FIG. 17 is a schematic structural diagram of a communication device according to some exemplary embodiments of the present disclosure.

## DETAILED DESCRIPTION

For clearer descriptions of the objectives, technical solutions, and advantages of the present disclosure, embodiments of the present disclosure are further described in detail hereinafter with reference to the accompanying drawings. Reference may be made in detail to the embodiments, examples of which are illustrated in the accompanying drawings. When the following description involves the accompanying drawings, the same numbers in different accompanying drawings represent the same or similar elements unless otherwise indicated. The embodiments described hereinafter do not represent all embodiments consistent with the present disclosure. Rather, these embodiments are merely examples of apparatus and methods consistent with some aspects of the present disclosure, as detailed in the appended claims.

The terms used in the present disclosure are for the purpose of describing particular embodiments only and are not intended to be limiting to the present disclosure. As used in the present disclosure and the appended claims, the singular forms "a," "an," and "the" are intended to include the plural forms as well, unless the context clearly indicates otherwise. It should also be understood that the term "and/or" as used herein refers to and encompasses any or all possible combinations of one or more associated listed items.

It should be understood that although the terms "first," "second," "third," and the like may be used in the present disclosure to describe various information, such information should not be limited to these terms. These terms are only used to distinguish one type of information from another. For example, first information may be referred to as second information, and similarly, second information may be referred to as first information, without departing from the scope of the present disclosure. The word "if," as used herein, may be interpreted as "in the case where," "when," or "in response to determining that," depending on the context.

Some terms involved in the embodiments of the present disclosure are described as follows.

**Introduction to Uu-link PRS Measurement:**

In the protocols of the 3GPP, the positioning technology is mainly implemented via a Uu link, for example, by acquiring information such as delay, angle, and energy based on measurements of the DL PRS and the UL SRS. Exemplarily, Table 1 illustrates the correspondence between the positioning methods supported by Uu-link PRS measurements, the reference signals and measurement quantities. The measurement behavior and metrics on the user side are an important direction. Based on a radio resource control (RRC) state of the user, measurements are simply divided into RRC inactive-state measurements and RRC connected-state measurements. The RRC connected-state measurements are further divided into gap-based measurements and gapless measurements. Usually, the measurement time is defined based on different measurement quantities, and the measurement time under each measurement quantity is obtained by summing the measurement times of the frequency points to be measured.

Table 1

| Positioning Method | Reference Signal | Measurement Quantity |
|---|---|---|
| DL enhanced cell identifier (enhanced cell ID, E-CID) | Synchronization signal block (SSB) / channel-state information reference signal (CSI-RS) | Synchronization signal (SS) - reference signal received power (RSRP) / SS - reference signal received quality (RSRQ) / CSI-RSRP / CSI-RSRQ |
| DL - time difference of arrival (TDOA) | DL PRS | PRS - reference signal time difference (RSTD) as a primary metric, and optionally PRS-RSRP as an auxiliary metric |
| UL-TDOA | Sounding reference signal (SRS) | UL - relative time of arrival (RTOA) |
| DL - angle of departure (AOD) | DL PRS | PRS-RSRP |
| UL - angle of arrival (AOA) | SRS | AOA / zenith angle of arrival (ZOA), SRS-RSRP |
| Multi-round trip time (RTT) | DL PRS | Terminal receive-transmit time difference (Rx-Tx time difference) as a primary metric, and optionally PRS-RSRP as an auxiliary metric |
| | SRS | Network device Rx-Tx time difference |

Taking gap-based RSTD measurement in the RRC connected state as an example, the total measurement time is the sum of the measurement times for the positioning frequency layers (PFLs). The measurement time of each PFL is calculated based on the number of samples $N_{sample}$, the shared scaling factor CSSF, the receive beam sweeping factor $N_{RxBeam}$, the effective measurement time unit $T_{effect}$, etc., which refer to the following formulas.

$$T_{RSTD,Total} = \sum_{i=1}^{L} T_{RSTD,i} + (L-1) * max(T_{effect,i});$$

[0042]
$$T_{RSTD,i} = \left( k_{multiTEG,i} * CSSF_{PRS,i} * ceil(K_{p,PRS,i}) * N_{RxBeam,i} * \left\lceil \frac{N_{PRS,i}^{slot}}{N'} \right\rceil \left\lceil \frac{L_{available\_PRS,i}}{N} \right\rceil * N_{sample} - 1 \right) * T_{effect,i} + T_{last,i};$$

$$T_{effect,i} = \left\lceil \frac{T_i}{T_{available\_PRS,i}} \right\rceil * T_{available\_PRS,i};$$

$$T_{available\_PRS,i} = LCM \left( T_{PRS,i}, MGRP_i \right).$$

The square brackets in the formulas denote rounding up.

· CSSF is a shared scaling factor that takes into account PRS measurements and measurement-gap-based measurement objects (MOs). For example, in the case where the terminal is further configured with two additional SSB-based MOs, CSSF is equal to 3, and the measurement time is increased by 3 times.

· $N_{RxBeam}$ represents the number of receive beams (Rx beams) that the terminal needs to traverse when measuring the PRS. For frequency range 1 (FR 1) band, $N_{RxBeam}$ = 1. For frequency range 2 (FR 2) band, $N_{RxBeam}$ = 8, or parameters of the receive beams are determined based on the report capability of the terminal.

· $k_{multiTEG}$ represents a scaling factor related to the terminal Rx timing error group (TEG). In the case where the location management function (LMF) does not configure the terminal to use several different Rx TEGs for one PRS measurement, the parameter defaults to 1; in the case where the LMF configures the terminal to use $N_{TEG,i}$ TEGs for one PRS measurement, and the terminal does not support simultaneous measurement of several TEG groups, the value is $N_{TEG,i}$; in the case where the LMF configures the terminal to use $N_{TEG,i}$ TEGs for one PRS measurement, and the terminal supports simultaneous measurement of $k_{TEG,simul}$ TEG groups, the value is $\left\lceil \frac{N_{TEG,i}}{k_{TEG,simul,i}} \right\rceil$. TEG is usually intended for timing-based measurements, such as RSTD, Rx-Tx time difference measurements, and other types of measurement; for RSRP, RSRPP, angle measurements, and the like, TEG is not considered.

· $K_p$ represents a scaling factor related to MG configuration: the scaling factor is introduced when gaps associated with the PRS measurement need to discard part of gap occasions due to gap conflicts and the like in the case where the concurrent gap is configured, and the value is the ratio of the total number of gap occasions within a specific window to the actual number of available gap occasions. In the case where there is no concurrent gap, or in the case where the PRS is measured outside of gaps, the parameter is not considered.

· $N_{PRS}^{slot}$ represents the maximum number of resources of the PRS configured within one slot, and N' represents the number of resources of the PRS that are processable by the sidelink terminal within one slot. The two numbers are compared and rounded up. For example, in the case where $N_{PRS}^{slot} = 5$ and N' = 2, the scaling factor = 3.

· $L_{available\_PRS}$ represents the length of the resources of the PRS in the gap (in ms), and N represents the terminal capability and indicates that the PRS of N ms is processable within each T ms. Similarly, the two values are compared and rounded up. For example, in the case where $L_{available\_PRS}$ = 2 ms and N = 1 ms, $\left\lceil \frac{L_{available\_PRS}}{N} \right\rceil = 2$.

· $T_{available\_PRS,i}$ = LCM ($T_{PRS,i}$, $MGRP_i$) represents the least common multiple of the PRS period and the measurement gap repetition period (MGRP).

· $T_{last}$: in the case where all resources of the PRS to be measured are in one MG occasion, $T_{last}$ is equal to a sum of the MGL (the length of the MG) and the processing time $T_i$; otherwise, $T_{last}$ is equal to a sum of $T_{available\_PRS}$ and the processing time $T_i$.

· N, T, the terminal capability indicates that the terminal ia capable of processing a PRS length of N ms within each T ms. In the above formulas, $T_i$ and $N_i$ indicate the corresponding capability on PFL #i.

**Introduction to SL Communication:**

SL communications (SL-based communication) are classified into the following three types based on a network coverage situation of terminals performing communication: an SL communication within a network coverage, an SL communication within a partial network coverage, and an SL communication outside a network coverage.

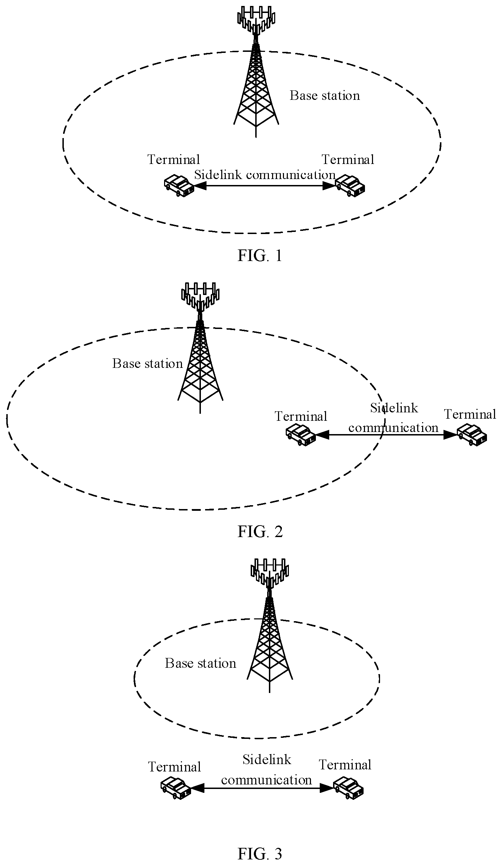

For example, FIG. 1 is a schematic diagram of an SL communication within a network coverage according to some embodiments of the present disclosure, FIG. 2 is a schematic diagram of an SL communication within a partial network coverage according to some embodiments of the present disclosure, and FIG. 3 is a schematic diagram of an SL communication outside a network coverage according to some embodiments of the present disclosure.

As illustrated in FIG. 1, during the SL communication within the network coverage, all terminals performing the SL communication are within a coverage of a same base station. In this way, the terminals are capable of performing the SL communication based on a same SL configuration by receiving configuration signaling from the base station. The SL configuration includes a time-frequency resource for the SL communication.

As illustrated in FIG. 2, during the SL communication within the partial network coverage, a first part of terminals performing the SL communication is within a coverage of a base station and is capable of receiving configuration signaling from the base station to perform the SL communication based on a configuration of the base station. A second part of the terminals performing the SL communication is outside the network coverage and is incapable of receiving the configuration signaling from the base station. In this case, the terminal outside the network coverage determines an SL configuration based on pre-configured information and information carried in a physical sidelink broadcast channel (PSBCH) transmitted by the terminal within the network coverage, to perform the SL communication.

As illustrated in FIG. 3, during the SL communication outside the network coverage, all terminals performing the SL communication are outside the network coverage. All terminals performing the SL communication determine an SL configuration based on pre-configured information to perform the SL communication.

**Introduction to SL PRS and SL PRS Measurement:**

The SL PRS is designed to be greatly different from the Uu-link PRS. SL PRS transmission may not follow a fixed periodicity and time-frequency resource position as the Uu-link PRS is. Especially, in the case where the SL PRS uses the resource allocation scheme 2, the transmitter selects the transmission resources used for the SL PRS by sensing-based and random selection. In this way, the actual position (e.g., slot) of the transmitted SL PRS is indeterminate. For example, terminal-A needs to transmit an SL PRS with a period of 10 ms, the first transmission is in slot #0, and the second transmission is expected to be in slot #10. However, in the case where no suitable resource is selected in slot #10, the transmission may be postponed to slot #11 or slot #12. Similarly, the third transmission may occur around slot #20. Therefore, the actual transmission period of the SL PRS does not strictly follow the 10 ms period.

The provisions for supporting SL PRS resource allocation are as follows:

· Resource allocation schemes 1 and 2 are present, where scheme 1 corresponds to network-centric SL PRS resource allocation, and scheme 2 corresponds to terminal-autonomous SL PRS resource allocation.

· For the resource allocation mechanism of the SL PRS in solution 2:

Research and specify support for sensing-based resource allocation and/or random resource selection. Research and specify solutions for congestion control for SL PRS and/or inter-terminal coordination of the SL PRS.

· Resource allocation of a shared resource pool for sidelink communication in R16/R17/R18 and a dedicated resource pool for the SL PRS are supported. For (pre-)configuration of SL positioning resources in a shared resource pool for sidelink communication in R16/R17/R18, backward compatibility with legacy R16/R17 terminals should be ensured.

It is mentioned in some practices that the SL-PRS supports the resource allocation schemes 1 and 1. The scheme 2 includes a resource sensing scheme and a random resource selection scheme. A dedicated resource pool is configured for the SL PRS, or the resource pool is shared with sidelink communication of R16/R17/R18.

The SL PFL is not defined in some practices. The RS for SL positioning is defined directly with respect to a single SL band width part (BWP) and a carrier, and is contained within the carrier. The SL PRS has only one frequency point without considering serial or parallel measurements on different PFLs; that is, it is not necessary to calculate the total measurement time by summation as on the Uu link. In addition, since the SL PRS is in the SL BWP and the carrier, the receiver does not need to perform radio frequency switching, and therefore, MG is not required.

In some practices, the calculation method of the RSTD measurement time is provided, in which some parameters, such as the scaling factor and $T_{last}$, have not been determined. The determination mode of a measurement time of RSTD based on SL PRS is as shown in the following formula:

$$T_{SL\ RSTD} = \left[ \sum_{s=1}^{S-1} T_{effect,s} + T_{last} \right];$$

The square brackets in the formula are ordinary square brackets.

· S = scaling factor $\times$ $N_{sample}$, where the scaling factor remains to be studied in the future.

· $T_{effect,s} = t_{s+1} - t_s$, where $t_s$ represents the start of the slot of the SL PRS that the terminal needs to measure for the sth time, and $t_{s+1}$ represents the start of the slot of the SL PRS that the terminal needs to measure for the (s+1)-th time. The conditions that $T_{effect,s}$ needs to satisfy remain to be studied in the future.

· $T_{last}$ remains to be studied in the future.

· For $N_{sample}$, the following two options are further discussed.

Option 1: Define the requirement on the number of samples as 1, and leave the case of 4 for future study.

Option 2: Define the requirement on the number of samples as 1 and 4.

The measurement time of the SL PRS by the terminal may be related to the terminal capability. Exemplarily, Table 2 illustrates some related terminal capabilities.

Table 2

| Component | Annotation | Description |
|---|---|---|
| Component 1: the maximum SL PRS bandwidth (in MHz) in the resource pool for positioning, which is supported and reported by the terminal for performing SL-PRS measurements. | Candidate values: FR 1 band: {5, 10, 20, 40, 50, 80, 100}; FR 2 band: {50, 100, 200, 400}. | Component 1 indicates the maximum SL PRS bandwidth supported by the terminal, in MHz. |
| Component 2: within the range of the maximum SL PRS bandwidth (in MHz), | Candidate values: FR 1 band: {1, 2, 4, 6, 8, | Component 2 indicates the maximum number of |
| the maximum number of resources of the activated SL PRSs in all configured resource pools (RP), which is supported and reported by the terminal. | 12, 16, [24, 32, 48, 64, 128]} corresponding subcarrier spacings (SCS): 15 kHz, 30 kHz, 60 kHz; FR 2 band: {1, 2, 4, 6, 8, 12, 16, 24, 32, 48, 64, 128} corresponding SCS: 60 kHz, 120 kHz. | resources of the activated SL PRS supported by the terminal within the maximum bandwidth range, and it is necessary to take into account the resources of the SL PRSs in all resource pools. |
| Component 3: within the range of the maximum SL PRS bandwidth (in MHz), the maximum number of slots carrying resources of the activated SL PRSs in all configured RPs. | Candidate values: to be studied in the future. | Component 3 indicates the maximum number of slots, within the maximum bandwidth range, that are supported by the terminal and include activated SL PRS. |
| Component 4: within the ranges of the maximum number of symbols and maximum bandwidth, the shortest time for the terminal to complete SL PRS resource processing [preparation of a positioning measurement report] after the end of the slot carrying the resources of the activated SL PRSs [assuming that, during this period, the resources of the activated SL PRSs have not yet exceeded the support and reporting capabilities of the terminal]. | Candidate values: {30 ms, 40 ms, 50 ms, 100 ms}. | Component 4 indicates, within the maximum bandwidth range and symbol number capability range of the terminal, the minimum time required for the terminal to complete the processing of the resources of the SL PRSs, starting from the end time of a slot that contains the resources of the SL PRSs. |

(continued)

| Component | Annotation | Description |
|---|---|---|
| Component 5: SL PRS buffering capability. | Candidate values: Type 1 - sub-slot/symbol level buffering; Type 2 - slot level buffering. | Component 5 indicates the capability of terminal buffering, which may be at the symbol level or at the slot level. |
| Note: The resource of the SL PRS is regarded as activated when the last symbol of the physical sidelink control channel (PSCCH) of the sidelink control information (SCI) triggered by the resource of the SL PRS ends, and releases its occupancy when the time indicated in component 4 ends. It is necessary for the location server/service terminal to learn whether the feature is supported. | | The resource of the SL PRS is considered to be in an active state only during the period from the start of the last symbol of the PSCCH of the SCI triggered by the resource of the SL PRS until the end of the time axis indicated by |
| | component 4. | |

It should be noted that the processing time of component 4 in the above capability is calculated from the end position of the slot containing the PRS, whereas the activation time of the resource of the SL PRS is calculated from the last symbol of the PSCCH of the corresponding SCI.

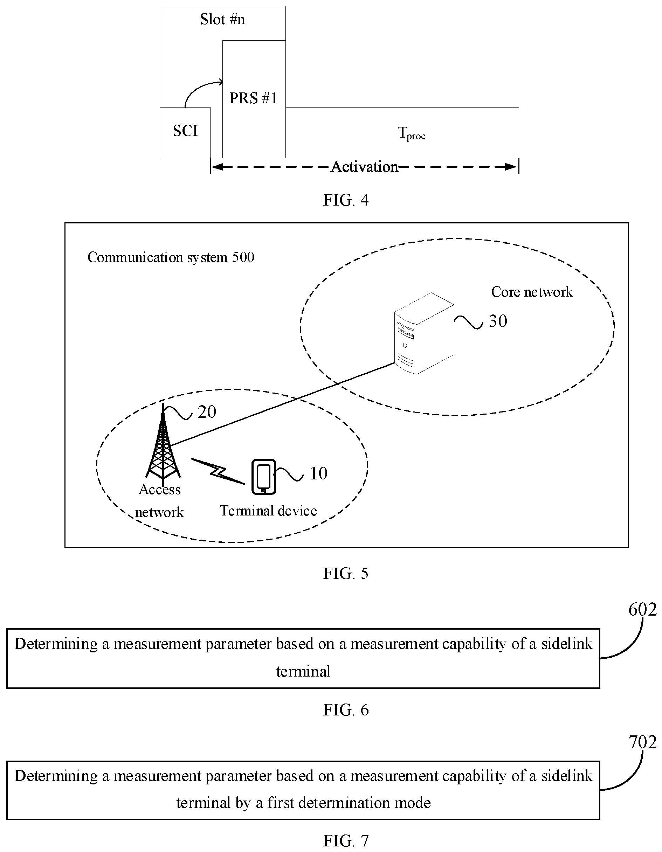

Exemplarily, FIG. 4 is a schematic diagram of activation of a PRS according to some exemplary embodiments of the present disclosure. As shown in FIG. 4, starting from the end position of slot #n carrying the SL PRS, the $T_{proc}$ portion represents the processing time indicated by component 4, and then, the SL PRS is considered to be activated starting from the last symbol of the PSCCH corresponding to the SCI until the processing time ends.

For the measurement of the Rx-Tx time difference of the terminal, the following capabilities illustrated in Table 3 are also supported.

Table 3

| Component 1: SL PRS measurement of terminal Rx-Tx time difference (without Tx timestamp). 1. Support terminal Rx-Tx time difference measurement based on SL PRS. 2. Support terminal Rx-Tx time difference measurement reporting (without Tx timestamp). Future study reports N Rx-Tx measurement results of different SL PRS receptions for the same pair of terminals. | It is necessary for the location server/service terminal to learn whether this feature is supported. For future study, candidate values N = {1, 2, 3, 4}. | |
|---|---|---|
| Component 2: SL PRS measurement of the terminal Rx-Tx time difference that requires a Tx timestamp. 1. Support terminal Rx-Tx time difference measurement based on SL PRS. 2. Support terminal Rx-Tx time difference measurement repoeting with a Tx timestamp. 3. Report M Rx-Tx measurement results for the same SL PRS transmission (or reception) and different SL PRS receptions (or transmissions) of the same pair of terminals. Future study reports N Rx-Tx measurement results of different SL PRS receptions for the same pair of terminals. | It is necessary for the location server/service terminal to learn whether this feature is supported. Candidate values M = {1, 2, 3, 4}. Candidate values for future study N = {1, 2, 3, 4}. | This means that, for the same terminal pair, for the same SL PRS transmission (or reception) and several different SL PRS receptions (or transmissions), M Rx-Tx measurement results are reported. |

Unlike the time-frequency position of the DL PRS (such as specific periods and physical resource block (PRB) resources), which is pre-configured and predictable, the transmission manner of the SL PRS, like that of SL data, needs to be adjusted based on the listening result of a terminal on the channel. In this case, the measurement time is not directly determined based on the PRS period, but instead the intervals $T_{effect}$ and $T_{last}$ between all adjacent SL PRSs are added together as the measurement time. Some practices only provide a calculation framework for the measurement time of the SL PRS RSTD, in which some parameters have not yet been finally determined, such as the scaling factor and the value of $T_{last}$ described above. Considering that the terminal measurement capability for the SL PRS is different from that for the DL PRS, the calculation formula for the measurement time of the DL PRS cannot be directly applied, and therefore, it is necessary to clarify the determination mode of related parameters. In addition, in the SL RTT positioning solution, a double-sided Rx-Tx time difference measurement solution is also provided to address errors caused by reducing clock offset. This requires the user, for one SL PRS transmission, to measure several Rx-Tx time difference results, and the measurement time also needs to be modified accordingly.

The method according to the present disclosure provides a solution for determining a measurement time of a sidelink positioning reference signal based on the measurement capability of a terminal. The solution includes: (1) determining $T_{effect}$ and $T_{last}$ based on a processing delay of a sidelink terminal (corresponding to component 4 in Table 2); (2) determining an S/scaling factor based on a maximum number of resources of the activated sidelink positioning reference signal that is measurable by the sidelink terminal (corresponding to component 2 in Table 2) and/or a maximum number of time-domain units of the activated sidelink positioning reference signal that is measurable by the sidelink terminal (corresponding to component 3 in Table 2); and (3) for the Rx-Tx time difference measurement, further increasing the measurement time based on the difference in measurement definitions (corresponding to Table 3) and the measurement configuration N of several Rx-Tx time differences. According to the above solution, the measurement time of the sidelink positioning reference signal is determined, thereby providing an implementation mode for determining the measurement time of the sidelink positioning reference signal based on the measurement capability of the sidelink terminal. In addition, for sidelink terminals with different measurement capabilities, the determined measurement time matches the measurement capabilities of the sidelink terminals.

FIG. 5 illustrates a schematic diagram of a system architecture of a communication system 500 according to some embodiments of the present disclosure. The system architecture may include a terminal 10, an access network device 20, and a core network device 30.

The terminal 10 may refer to a user equipment (UE), an access terminal, a subscriber unit, a subscriber station, a mobile station, a mobile terminal, a remote station, a remote terminal, a mobile device, a wireless communication device, a user agent, or a user apparatus. In some embodiments, the terminal is also a cellular phone, a cordless phone, a session initiation protocol (SIP) phone, a wireless local loop (WLL) station, personal digital assistant (PDA), a handheld device with wireless communication function, a computing device, or another processing device connected to a wireless modem, a vehicle-mounted device, a wearable device, a terminal in a 5th generation system (5GS), or a terminal in a public land mobile network (PLMN) evolved in the future, or the like, which is not limited in the embodiments of the present disclosure. For convenience of description, the devices described above are collectively referred to as terminals.

It should be noted that a plurality of terminals 10 are usually deployed, and one or more terminals 10 may be distributed in a cell managed by each access network device 20. In addition, one or more terminals 10 may also be distributed outside the cell managed by the access network device 20. Different terminals 10 may communicate with each other based on an SL.

The access network device 20 is a device deployed in an access network to provide a wireless communication function for the terminal 10. The access network device 20 may include various forms of macro base stations, micro base stations, relay stations, access points, or the like. In systems using different radio access technologies, a device with the functionality of an access network device may have different names. For example, the device is referred to as gNodeB or gNB in the 5G NR system. As communication technologies evolve, the name "access network device" may change. For convenience of description, in the embodiments of the present disclosure, the above apparatuses for providing the terminals 10 with the wireless communication function are collectively referred to as access network devices. In some embodiments, a communication relationship is established between the terminal 10 and the core network device 30 through the access network device 20. Exemplarily, in a long-term evolution (LTE) system, the access network device 20 is an evolved universal terrestrial radio access network (EUTRAN) or one or more eNodeBs in EUTRAN; and in a 5G NR system, the access network device 20 is a radio access network (RAN) or one or more gNBs in the RAN.

The core network device 30 mainly functions to provide user connections, user management, and service bearing, and serves as a bearer network to provide an interface to an external network. For example, the core network device in the 5G NR system includes an access and mobility management function (AMF) entity, a user plane function (UPF) entity, a session management function (SMF) entity, or the like. The access network device 20 and the core network device 30 are collectively referred to as network devices.

In some embodiments, the access network device 20 and the core network device 30 communicate with each other over an air technology, such as an NG interface in the 5G NR system. The access network device 20 and the terminal 10 communicate with each other over an air technology, such as a Uu interface. The terminal 10 and the terminal 10 communicate with each other over an air technology, such as a PC5 interface.

FIG. 6 is a flowchart of a method for determining a measurement time according to some exemplary embodiments of the present disclosure. The method is performed by a sidelink terminal. The method includes the following processes.

**In S602**, a measurement parameter is determined based on the measurement capability of the sidelink terminal.

The sidelink terminal includes a terminal that supports the sidelink communication. The measurement parameter is used for determining the measurement time, by the sidelink terminal, of the sidelink positioning reference signal. The measurement capability is used to reflect the capability of the sidelink terminal to measure the sidelink positioning reference signal, for example, the related capability shown in Table 2 above. The sidelink positioning reference signal includes a reference signal used for positioning that is transmitted over a sidelink, for example, an SL PRS.

In some embodiments, according to the difference in the measurement quantity (measurement scheme) for the sidelink positioning reference signal, the determination of the measurement time includes the following three determination modes.

**For the first determination mode:**

In some embodiments, the measurement scheme for the sidelink positioning reference signal corresponding to the first determination mode includes at least one of:

· an RSTD measurement;
· an RTOA measurement;
· an RSRP measurement;
· an RSRPP measurement;
· an AOA measurement;
· a ZOA measurement; or
· an Rx-Tx time difference measurement.

The Rx-Tx time difference measurement is implemented by the sidelink terminal by receiving and transmitting the sidelink positioning reference signal. For example, sidelink terminal B needs to transmit the SL PRS to sidelink terminal A after receiving the SL PRS transmitted by sidelink terminal A, such that a single-sided RTT value is measured. In some embodiments, the Rx-Tx time difference measurement includes two definitions: (1) the sidelink terminal determines the measurement result of the Rx-Tx time difference without an actual transmission of an SL PRS; (2) the sidelink terminal needs to wait for an actual transmission of an SL PRS to determine the Rx-Tx time difference measurement result. In some embodiments, for the Rx-Tx time difference measurement, in the case where it is not required to use an actual transmission time of the sidelink positioning reference signal to determine a measurement result of the Rx-Tx time difference (definition 1), that is, in the case where it is not necessary to consider the sidelink positioning reference signal actually transmitted by the sidelink terminal to another sidelink terminal, the first determination mode is adopted to determine the measurement time.

In some embodiments, the measurement parameter includes at least one of:

· a first parameter;
· a second parameter; or
· a third parameter.

The first parameter is used to reflect the interval between the $s^{th}$ and $(s+1)^{th}$ measurements (receptions) of the sidelink positioning reference signal by the sidelink terminal. s is a positive integer and not greater than S. The second parameter is used to reflect the time of the last measurement of the sidelink positioning reference signal by the sidelink terminal. The third parameter is used to reflect the number of times the sidelink terminal measures the sidelink positioning reference signal. Exemplarily, the first parameter is $T_{effect}$, the second parameter is $T_{last}$, and the third parameter is S.

In some embodiments, the sidelink terminal determines, based on a position difference between a first time-domain position and a second time-domain position as well as a first condition, a first parameter for the $s^{th}$ measurement of the sidelink positioning reference signal by the sidelink terminal. The first time-domain position is a time-domain position of a resource of the sidelink positioning reference signal measured by the sidelink terminal for the $s^{th}$ time, for example, a time-domain start position of the resource of the sidelink positioning reference signal measured by the sidelink terminal for the $s^{th}$ time. The second time-domain position is a time-domain position of a resource of the sidelink positioning reference signal measured by the sidelink terminal for the $(s+1)^{th}$ time, for example, a time-domain start position of the resource of the sidelink positioning reference signal measured by the sidelink terminal for the $(s+1)^{th}$ time. The first condition is used to limit the position difference to be greater than the sum of a duration of the $s^{th}$ measurement and a first measurement capability. The duration of the $s^{th}$ measurement is used to reflect the duration of the resource of the sidelink positioning reference signal measured by the sidelink terminal for the $s^{th}$ time, and the first measurement capability is used to reflect the minimum processing time for the sidelink terminal to receive the resource of the sidelink positioning reference signal.

Exemplarily, the above process is expressed as $T_{effect,s} = t_{s+1} - t_s$, and $T_{effect,s} > T_{slprs,dur,s} + T_{proc}$. $T_{effect,s}$ represents the first parameter of the $s^{th}$ measurement of the sidelink positioning reference signal by the sidelink terminal, $t_{s+1}$ represents the second time-domain position, $t_s$ represents the first time-domain position, $T_{slprs,dur,s}$ represents the duration of the resource of the sidelink positioning reference signal measured by the sidelink terminal for the $s^{th}$ time, and $T_{proc}$ represents the first measurement capability (corresponding to component 4 in Table 2).

In some embodiments, in the case where a resource of a sidelink positioning reference signal of the next period that belongs to the same sidelink positioning reference signal resource group as one sidelink positioning reference signal appears during the processing time of the one sidelink positioning reference signal by the sidelink terminal, the sidelink terminal discards the one sidelink positioning reference signal. In some embodiments, for sidelink positioning reference signals within one time-domain unit (for example, a slot), whether the sidelink positioning reference signals belong to the same sidelink positioning reference signal resource is indicated by an identifier document (ID). A plurality of periodic resources of the sidelink positioning reference signal transmitted by the same sidelink terminal may be regarded as one sidelink positioning reference signal resource group/set.

In some embodiments, in the case where the sidelink terminal only needs to measure one sidelink positioning reference signal resource group, $T_{slprs,dur}$ represents the time of one time-domain unit (for example, a slot). In the case where the measurement time is calculated in ms, one slot of 15 kHz corresponds to 1 ms, i.e., $T_{slprs,dur} = 1$ ms.

In some embodiments, in the case where the sidelink terminal needs to measure a plurality of sidelink positioning reference signal resource groups, $T_{slprs,dur}$ represents the total duration of the resources of the sidelink positioning reference signal processed each time. In this case, the value of $T_{slprs,dur}$ is the total duration of the plurality of resources of the sidelink positioning reference signal within each sampling/or each occasion/or each period, for example, from the start position of the slot of the first sidelink positioning reference signal resource to the end position of the slot of the last sidelink positioning reference signal resource, and any empty slots therebetween also need to be included. Similarly, the total duration may be converted into units such as ms according to the number of slots.

In some embodiments, the sidelink terminal determines the second parameter based on a sum of a duration of a last measurement and a first measurement capability. The duration of the last measurement is used to reflect the duration of the resource of the sidelink positioning reference signal measured by the sidelink terminal for the last time, and the first measurement capability is used to reflect the minimum processing time for the sidelink terminal to receive the resource of the sidelink positioning reference signal.

Exemplarily, the above process is expressed as: $T_{last} = T_{slprs,dur,S} + T_{proc}$. $T_{last}$ represents the second parameter, and $T_{slprs,dur,s}$ represents the duration (time duration) of resources of the sidelink positioning reference signal in the last measurement/last period/$S^{th}$ measurement by the sidelink terminal. For the determination mode, reference may be made to the relevant content described above. $T_{proc}$ represents the first measurement capability (corresponding to component 4 in Table 2).

In some embodiments, the third parameter is positively correlated with at least one of the following parameters:

· a number of samples;
· a receive beam factor;
· a timing error group factor;
· a number of measurements; or
· a scaling factor.

The number of samples is used to reflect a number of samples of the sidelink positioning reference signal sampled by the sidelink terminal, the receive beam factor is used to reflect a number of receive beams traversed by the sidelink terminal in a process of measuring the sidelink positioning reference signal, the timing error group factor is related to a timing error group adopted by the sidelink terminal for measuring the sidelink positioning reference signal, and the number of measurements is used to reflect a number of resources of the sidelink positioning reference signal measured by the sidelink terminal. In some embodiments, the value of the third parameter is at least related to the number of samples.

Exemplarily, the number of samples is denoted as $N_{sample}$, and typically $N_{sample}$ is equal to 4 or 1, depending on the measurement capability of the sidelink terminal. The receive beam factor is denoted as $N_{RxBeam}$; for example, in the case where the sidelink positioning reference signal supports FR 2, $N_{RxBeam}$ is equal to 8, or the receive beam factor is a Rx beam sweeping factor parameter reported by the sidelink terminal. The timing error group factor is denoted as $k_{multiTEG}$, and reference may be made to the description of the DL PRS above. In some embodiments, for the determination of the two parameters $N_{RxBeam}$ and $k_{multiTEG}$, reference may be made to the measurement of the DL PRS; for example, in the case where the sidelink positioning reference signal also supports FR 2 or a TEG function, those in the DL PRS may be adopted.

In some embodiments, the sidelink terminal determines the scaling factor based on the configuration of the sidelink positioning reference signal that needs to be measured. For example, in the case where the number of resources of the activated sidelink positioning reference signal exceeds the measurement capability of the sidelink terminal at a moment, or in the case where the number of time-domain units (slots) carrying the activated sidelink positioning reference signal exceeds the measurement capability of the sidelink terminal at a moment, the measurement time needs to be further extended.

In some embodiments, the scaling factor is related to at least one of a second measurement capability and a third measurement capability of a sidelink terminal. The second measurement capability is used to reflect the maximum number of resources of the activated sidelink positioning reference signal that are supported and processed by the sidelink terminal (corresponding to component 2 in Table 2), and the third measurement capability is used to reflect the maximum number of time-domain units carrying the activated sidelink positioning reference signal that are supported and processed by the sidelink terminal (corresponding to component 3 in Table 2). In some embodiments, the time-domain unit includes a slot. In some embodiments, the scaling factor includes at least one of a first scaling factor and a second scaling factor.

In some embodiments, the sidelink terminal determines the first scaling factor based on a ratio of first information to the second measurement capability, to determine the third parameter. The first information includes a number of configured resources of the sidelink positioning reference signal to be measured by the sidelink terminal. Exemplarily, the number of configured resources of the sidelink positioning reference signal to be measured by the sidelink terminal is denoted as $X\_cfg$, and the second measurement capability is denoted as $X\_ue$. Assuming that in a worst-case scenario where all sidelink positioning reference signals are activated simultaneously, the first scaling factor S1 is related to $(X\_cfg/X\_ue)$, for example, rounding up or rounding down $(X\_cfg/X\_ue)$, for example, $S1 = ceil(X\_cfg/X\_ue)$.

In some embodiments, the sidelink terminal determines the first scaling factor based on a ratio of second information to the second measurement capability, to determine the third parameter. The second information includes a number of actually simultaneously activated resources of the sidelink positioning reference signal, or a maximum value of the number of actually simultaneously activated resources of the sidelink positioning reference signal. The numbers of simultaneously activated resources at different times may be different; for example, the sidelink terminal is configured to measure ten resources of the sidelink positioning reference signal, but the ten resources are scattered in the time domain, and the number of actually simultaneously activated resources may only be two. Exemplarily, the number of actually simultaneously activated resources of the sidelink positioning reference signal is denoted as $X\_act$, the maximum value of the number of actually simultaneously activated resources of the sidelink positioning reference signal is denoted as $X\_act=max(X\_act, i)$, the second measurement capability is denoted as $X\_ue$, and the first scaling factor S1 is related to $(X\_act/X\_ue)$, for example, rounding up or rounding down $(X\_cfg/X\_ue)$, for example, $S1 = ceil(X\_act/X\_ue)$.

In some embodiments, the sidelink terminal determines the first scaling factor based on a ratio of third information to the second measurement capability, to determine the third parameter. The third information includes a minimum value in first information and fourth information, the first information includes a number of configured resources of the sidelink positioning reference signal to be measured by the sidelink terminal, the fourth information is determined based on fifth information and sixth information, the fifth information includes a number of time-domain units corresponding to a first measurement capability, the sixth information includes a maximum value of the number of resources of the sidelink positioning reference signal configured on each time-domain unit, and the first measurement capability is used to reflect a minimum processing time for the sidelink terminal to receive the resource of the sidelink positioning reference signal. Exemplarily, the third information is denoted as $X\_3 = min(X\_cfg, (Npro + second value) * K)$, where K represents the maximum value of the number of resources of the sidelink positioning reference signal configured on each time-domain unit (slot). Npro represents the number of slots corresponding to $T_{proc}$ (ms) of the sidelink terminal. Here, it is assumed that the periodicity of the sidelink positioning reference signal is greater than the processing time of the sidelink terminal; otherwise, resources of a plurality of periods of the same sidelink positioning reference signal might reappear within the Npro processing delay. In some embodiments, the second value is 1, and in this case, the slot where the sidelink positioning reference signal itself is located is considered. The first scaling factor is related to $(X\_3/X\_ue)$, for example, rounding up or rounding down $(X\_3/X\_ue)$, for example, $S1 = ceil(X\_3/X\_ue)$.

In some embodiments, the sidelink terminal determines the second scaling factor based on a ratio of seventh information to the third measurement capability, to determine the third parameter. The seventh information is used to reflect a number of configured time-domain units carrying the sidelink positioning reference signal, and the seventh information is equal to first information; the first information includes a number of configured resources of the sidelink positioning reference signal to be measured by the sidelink terminal. Exemplarily, the number of slots carrying the sidelink positioning reference signal is determined as $Y\_cfg=X\_cfg$ based on the configuration, and the third measurement capability is denoted as $Y\_ue$. Here, $Y\_cfg$ is acquired assuming a worst-case scenario where all resources of the sidelink positioning reference signal are scattered in different slots and are activated simultaneously. The second scaling factor S2 is related to $(Y\_cfg/Y\_ue)$, for example, rounding up or rounding down $(Y\_cfg/Y\_ue)$, for example, $S2 = ceil(Y\_cfg/Y\_ue)$.

In some embodiments, the sidelink terminal determines the second scaling factor based on a ratio of eighth information to the third measurement capability, to determine the third parameter. The eighth information includes a number of actually simultaneously activated time-domain units corresponding to the sidelink positioning reference signal, or a maximum value of the number of actually simultaneously activated time-domain units corresponding to the sidelink positioning reference signal. The number of resources activated simultaneously at different times may be different. Exemplarily, the number of actually simultaneously activated slots corresponding to the sidelink positioning reference signal is denoted as Y_act, the maximum value of the number of actually simultaneously activated slots corresponding to the sidelink positioning reference signal is denoted as Y_act=max(Y_act, i), and the second scaling factor S2 is related to (Y_act/Y_ue), for example, rounding up or rounding down (Y_act/Y_ue), for example, S2 = ceil(Y_act/Y_ue).

In some embodiments, the sidelink terminal determines the second scaling factor based on a ratio of ninth information to the third measurement capability, to determine the third parameter. The ninth information includes a minimum value in first information and information determined based on fifth information, the first information includes a number of configured resources of the sidelink positioning reference signal to be measured by the sidelink terminal, the fifth information includes a number of time-domain units corresponding to a first measurement capability, and the first measurement capability is used to reflect a minimum processing time for the sidelink terminal to receive the resource of the sidelink positioning reference signal. Exemplarily, based on the configuration, the number of slots containing the sidelink positioning reference signal (the ninth information) is determined as Y_cfg=min(X_cfg, Npro+1), and the third measurement capability is denoted as Y_ue. Y_cfg is acquired assuming a worst-case scenario where all resources of the sidelink positioning reference signal are scattered in different slots and are activated simultaneously. Npro represents the number of slots corresponding to $T_{proc}$ (ms) of the sidelink terminal. In some embodiments, a third value is 1. The second scaling factor S2 is related to (Y_cfg/Y_ue), for example, rounding up or rounding down (Y_cfg/Y_ue), for example, S2 = ceil and (Y_cfg/Y_ue).

In some embodiments, in the case where the third measurement capability of the sidelink terminal is not defined, or the third measurement capability defaults to be very large, S2 = 1.

In some embodiments, the first scaling factor and the second scaling factor are multiplied by the number of samples and/or other scaling factors used for determining the third parameter, thereby obtaining the third parameter. For example, $S = S1 \times S2 \times N_{sample} \times k_{multiTEG} \times N_{RxBeam}$, or $S = ceil(S1 \times S2 \times N_{sample} \times k_{multiTEG} \times N_{RxBeam})$. In this case, rounding is skipped first when calculating S1 or S2, and the rounding is performed after multiplying all scaling factors to calculate the final S.

In some embodiments, in the case where periodicities of resources of the sidelink positioning reference signal measured by the sidelink terminal are different, the above-mentioned parameters are determined based on the resource of the sidelink positioning reference signal with the maximum periodicity.

In some embodiments, the third parameter is related to the number of resources of the sidelink positioning reference signal measured by the sidelink terminal, for example, S = a number of resources of the measured SL PRS $\times$ $N_{sample}$. In this case, $T_{effect}$ represents a time interval between every two adjacent resources of the sidelink positioning reference signal.

In some embodiments, the sidelink terminal determines a measurement time according to the formula

$$T_{SL\ RSTD} = \left[ \sum_{s=1}^{S-1} T_{effect,s} + T_{last} \right]$$

after determining the first parameter, the second parameter, and the third parameter. $T_{SL\ RSTD}$ represents the calculated measurement time, S represents the third parameter, $T_{effect,s}$ represents the first parameter corresponding to the $s^{th}$ measurement, and $T_{last}$ represents the second parameter.

**For the second determination mode:**

In some embodiments, the measurement scheme for the sidelink positioning reference signal corresponding to the second determination mode includes the Rx-Tx time difference measurement. The Rx-Tx time difference measurement is implemented by the sidelink terminal by receiving and transmitting the sidelink positioning reference signal. In some embodiments, as described above, the Rx-Tx time difference measurement includes two definitions. In some embodiments, for the Rx-Tx time difference measurement, in the case where it is necessary to wait for the end of the sidelink positioning reference signal actually transmitted by the sidelink terminal to other sidelink terminals to determine a measurement result of the Rx-Tx time difference (definition 2), the second determination mode is adopted to determine the measurement time. In some embodiments, the measurement scheme for the sidelink positioning reference signal corresponding to the second determination mode includes a single-sided RTT measurement based on the Rx-Tx time difference.

In some embodiments, the second determination mode further includes the following two determination modes.

**For mode 1:**

In some embodiments, the measurement parameter includes at least one of:

· a first parameter;
· a second parameter; or

· a third parameter.

The first parameter is used to reflect the interval between the $s^{th}$ and $(s+1)^{th}$ measurements of the sidelink positioning reference signal by the sidelink terminal. s is a positive integer. The second parameter is used to reflect the time of the last measurement and transmission of the sidelink positioning reference signal by the sidelink terminal. The third parameter is used to reflect the number of times the sidelink terminal measures the sidelink positioning reference signal. Exemplarily, the first parameter is $T_{effect}$, the second parameter is $T_{last}$, and the third parameter is S.

In some embodiments, the sidelink terminal determines, based on a position difference between a first time-domain position and a second time-domain position as well as a first condition, a first parameter for the $s^{th}$ measurement of the sidelink positioning reference signal by the sidelink terminal. The first time-domain position is a time-domain position of a resource of the sidelink positioning reference signal measured by the sidelink terminal for the $s^{th}$ time. In some embodiments, the time-domain position includes time-domain positions of resources for receiving and transmitting the sidelink positioning reference signal corresponding to the $s^{th}$ measurement. The second time-domain position is a time-domain position of a resource of the sidelink positioning reference signal measured by the sidelink terminal for the $(s+1)^{th}$ time. In some embodiments, the time-domain position includes time-domain positions of resources for receiving and transmitting the sidelink positioning reference signal corresponding to the $(s+1)^{th}$ measurement. The first condition is used to limit the position difference to be greater than the sum of a duration of the $s^{th}$ measurement and a first measurement capability. The duration of the $s^{th}$ measurement is used to reflect a duration of the resource of the sidelink positioning reference signal measured by the sidelink terminal for the $s^{th}$ time. In some embodiments, the sidelink positioning reference signal measured for the $s^{th}$ time includes received and transmitted sidelink positioning reference signals corresponding to the $s^{th}$ measurement. The first measurement capability includes a reception processing time or a maximum value of the reception processing time and a transmission processing time. The reception processing time is used to reflect the minimum processing time for the sidelink terminal to receive the resource of the sidelink positioning reference signal (corresponding to component 4 in Table 2), and the transmission processing time is used to reflect the minimum processing time for the sidelink terminal to determine the Rx-Tx time difference based on the resource of the transmitted sidelink positioning reference signal.

In some embodiments, the transmission processing time is different from the reception processing time. In some embodiments, the transmission processing time is the same as the reception processing time. In some embodiments, the transmission processing time is the same capability shared with the reception processing time.

Exemplarily, the above process is expressed as $T_{effect,s} = t_{s+1} - t_s$, and $T_{effect,s} > T_{slprs,dur,s} + T_{proc}$. $T_{effect,s}$ represents the first parameter of the $s^{th}$ measurement of the sidelink positioning reference signal by the sidelink terminal, $t_{s+1}$ represents the second time-domain position, $t_s$ represents the first time-domain position, $T_{slprs,dur,s}$ represents the duration of the resource of the sidelink positioning reference signal measured by the sidelink terminal for the $s^{th}$ time, and $T_{proc}$ represents the first measurement capability.

In some embodiments, mode 1 is applicable to the case where each reception of the sidelink positioning reference signal by the sidelink terminal corresponds to one transmission of the sidelink positioning reference signal, and/or the case where the time when the sidelink terminal transmits the sidelink positioning reference signal is not later than reception of the sidelink positioning reference signal in the next period.

In some embodiments, the sidelink terminal determines the second parameter based on a sum of a duration of a last measurement and a first measurement capability. The duration of the last measurement is used to reflect the duration of the resource of the sidelink positioning reference signal measured (received) and transmitted by the sidelink terminal for the last time. The first measurement capability includes a reception processing time or a maximum value of the reception processing time and a transmission processing time. The reception processing time is used to reflect the minimum processing time for the sidelink terminal to receive the resource of the sidelink positioning reference signal, and the transmission processing time is used to reflect the minimum processing time for the sidelink terminal to determine the Rx-Tx time difference based on the resource of the transmitted sidelink positioning reference signal.

Exemplarily, the above process is expressed as: $T_{last} = T_{slprs,dur,S} + T_{proc}$. $T_{last}$ represents the second parameter, and $T_{slprs,dur,S}$ represents the duration (time duration) of resources of the sidelink positioning reference signal received and transmitted in the last measurement/last period/$S^{th}$ measurement by the sidelink terminal. $T_{proc}$ represents the first measurement capability. For example, in the case where sidelink terminal B receives the SL PRS of the last slot in slot #n and transmits the SL PRS of the last slot in slot #m, $T_{slprs,dur,S}$ is from a start time of slot #n to an end time of slot #m, that is, $(m - n + 1)$ slots. In some embodiments, in the case where the SL PRS used for measuring the Rx-Tx time difference is transmitted before the reception of the SL PRS, i.e., $m < n$, $T_{slprs,dur,S}$ only needs to consider the duration of the received SL PRS. In this case, $T_{slprs,dur,S}$ represents $(n - m + 1)$ slots. Reference may be made to relevant content in the first determination mode.

In some embodiments, the third parameter is positively correlated with at least one of the following parameters:

· a number of samples;

· a receive beam factor;
· a timing error group factor;
· a number of measurements;
· a scaling factor.

The number of samples is used to reflect a number of samples of the sidelink positioning reference signal sampled by the sidelink terminal, the receive beam factor is used to reflect a number of receive beams traversed by the sidelink terminal in a process of measuring the sidelink positioning reference signal, the timing error group factor is related to a timing error group adopted by the sidelink terminal for measuring the sidelink positioning reference signal, and the number of measurements is used to reflect a number of resources of the sidelink positioning reference signal measured by the sidelink terminal. In some embodiments, the value of the third parameter is at least related to the number of samples. Exemplarily, the number of samples is denoted as $N_{sample}$, the receive beam factor is denoted as $N_{RxBeam}$, and the timing error group factor is denoted as $k_{multiTEG}$. It should be noted that for the determination mode of the scaling factor, reference may be made to relevant content in the first determination mode described above, and details are not repeated herein in the embodiments of the present disclosure.

In some embodiments, the sidelink terminal determines a measurement time according to the formula

$$T_{SL\ RSTD} = \left[ \sum_{s=1}^{S-1} T_{effect,s} + T_{last} \right]$$ after determining the first parameter, the second parameter, and the third parameter. $T_{SL\ RSTD}$ represents the calculated measurement time, S represents the third parameter, $T_{effect,s}$ represents the first parameter corresponding to the $s^{th}$ measurement, and $T_{last}$ represents the second parameter.

**For mode 2:**

In some embodiments, the measurement parameter includes at least one of:

· a first parameter;
· a second parameter; or
· a third parameter.

The first parameter is used to reflect the interval between resources of adjacent sidelink positioning reference signals of the sidelink terminal. The second parameter is used to reflect the time of the last measurement or transmission of the sidelink positioning reference signal by the sidelink terminal. The third parameter is used to reflect the number of resources of the sidelink positioning reference signal of the sidelink terminal. Exemplarily, the positioning reference signal of the sidelink terminal includes a received sidelink positioning reference signal and a transmitted sidelink positioning reference signal by the sidelink terminal during a measurement process. The adjacent sidelink positioning reference signals may be classified into the following cases: the transmitted sidelink positioning reference signal - the received sidelink positioning reference signal, the received sidelink positioning reference signal - the transmitted sidelink positioning reference signal, the transmitted sidelink positioning reference signal - the transmitted sidelink positioning reference signal, and the received sidelink positioning reference signal - the received sidelink positioning reference signal.

In some embodiments, the sidelink terminal determines the first parameter of the adjacent sidelink positioning reference signals based on a position difference between a first time-domain position and a second time-domain position as well as a first condition. The first time-domain position is a time-domain position of a resource of a preceding sidelink positioning reference signal among the adjacent sidelink positioning reference signals. The preceding sidelink positioning reference signal is a sidelink positioning reference signal received by the sidelink terminal or a sidelink positioning reference signal transmitted by the sidelink terminal. The second time-domain position is a time-domain position of a resource of a succeeding sidelink positioning reference signal among the adjacent sidelink positioning reference signals. The succeeding sidelink positioning reference signal is a sidelink positioning reference signal received by the sidelink terminal or a sidelink positioning reference signal transmitted by the sidelink terminal. The first condition is used to limit the position difference to be greater than a sum of a duration of the resource of the preceding sidelink positioning reference signal and a first measurement capability. The first measurement capability includes a reception processing time, a transmission processing time, or a maximum value of the reception processing time and the transmission processing time. The reception processing time is used to reflect the minimum processing time for the sidelink terminal to receive the resource of the sidelink positioning reference signal (corresponding to component 4 in Table 2), and the transmission processing time is used to reflect the minimum processing time for the sidelink terminal to determine the Rx-Tx time difference based on the resource of the transmitted sidelink positioning reference signal.

In some embodiments, the transmission processing time is different from the reception processing time. In some embodiments, the transmission processing time is the same as the reception processing time. In some embodiments, the transmission processing time is the same capability shared with the reception processing time.

Exemplarily, the above process is expressed as $T_{effect,s} = t_{s+1} - t_s$, and $T_{effect,s} > T_{slprs,dur,s} + T_{proc}$. $T_{effect,s}$ represents the first parameter corresponding to the $s^{th}$ and $(s+1)^{th}$ sidelink positioning reference signals of the sidelink terminal, $t_{s+1}$ represents the second time-domain position, $t_s$ represents the first time-domain position, $T_{slprs,dur,s}$ represents the duration of the resource of the $s^{th}$ sidelink positioning reference signal of the sidelink terminal, and $T_{proc}$ represents the first measurement capability.

In some embodiments, the sidelink terminal determines the second parameter based on a sum of a duration of a last measurement or transmission and a first measurement capability. The duration of the last measurement or transmission is used to reflect the duration of the resource of the sidelink positioning reference signal measured or transmitted by the sidelink terminal for the last time, and the first measurement capability includes a reception processing time, a transmission processing time, or a maximum value of the reception processing time and the transmission processing time. The reception processing time is used to reflect the minimum processing time for the sidelink terminal to receive the resource of the sidelink positioning reference signal, and the transmission processing time is used to reflect the minimum processing time for the sidelink terminal to determine the Rx-Tx time difference based on the resource of the transmitted sidelink positioning reference signal. For example, the sidelink terminal determines whether to adopt the reception processing time or the transmission processing time based on whether the sidelink positioning reference signal is actually received before transmitted or transmitted before received.

Exemplarily, the above process is expressed as: $T_{last} = T_{slprs,dur,S} + T_{proc}$. $T_{last}$ represents the second parameter, and $T_{slprs,dur,S}$ represents the duration (time duration) of the resource of the sidelink positioning reference signal received or transmitted by the sidelink terminal in the last measurement/last period/$S^{th}$ measurement. $T_{proc}$ represents the first measurement capability.

In some embodiments, the third parameter is positively correlated with at least one of the following parameters:

· a number of samples;
· a receive beam factor;
· a timing error group factor;
· a number of measurements;
· a scaling factor; or
· a specified coefficient.

The number of samples is used to reflect a number of samples of the sidelink positioning reference signal sampled by the sidelink terminal, the receive beam factor is used to reflect a number of receive beams traversed by the sidelink terminal in a process of measuring the sidelink positioning reference signal, the timing error group factor is related to a timing error group adopted by the sidelink terminal for measuring the sidelink positioning reference signal, and the number of measurements is used to reflect a number of resources of the sidelink positioning reference signal measured by the sidelink terminal. In some embodiments, the value of the third parameter is at least related to the number of samples. Exemplarily, the number of samples is denoted as $N_{sample}$, the receive beam factor is denoted as $N_{RxBeam}$, and the timing error group factor is denoted as $k_{multiTEG}$. It should be noted that for the determination mode of the scaling factor, reference may be made to relevant content in the first determination mode described above, and details are not repeated herein in the embodiments of the present disclosure.

In some embodiments, the specified coefficient is 2. Exemplarily, the calculation method of the third parameter is $S = 2 \times S1 \times S2 \times N_{sample} \times k_{multiTEG} \times N_{RxBeam}$, which is considered as the specified coefficient scaling up S by a factor of 2, that is, increasing the number of measurements by 2 times. This is used to reflect that transmission and reception corresponding to the measurement of the sidelink terminal each correspond to one resource of the sidelink positioning reference signal.

In some embodiments, the sidelink terminal determines a measurement time according to the formula

$$T_{SL\ RSTD} = \left[ \sum_{s=1}^{S-1} T_{effect,s} + T_{last} \right]$$ after determining the first parameter, the second parameter, and the third parameter. $T_{SL\ RSTD}$ represents the calculated measurement time, S represents the third parameter, $T_{effect,s}$ represents the first parameter corresponding to the $s^{th}$ adjacent sidelink positioning reference signal, and $T_{last}$ represents the second parameter.

**For the third determination mode:**

In some embodiments, the measurement scheme for the sidelink positioning reference signal corresponding to the third determination mode includes the Rx-Tx time difference measurement. The Rx-Tx time difference measurement is implemented by the sidelink terminal by receiving and transmitting the sidelink positioning reference signal. In some embodiments, as described above, the Rx-Tx time difference measurement includes two definitions. In some embodiments, for the Rx-Tx time difference measurement, in the case where it is necessary to wait for the end of the sidelink positioning reference signal actually transmitted by the sidelink terminal to other sidelink terminals to determine a measurement result of the Rx-Tx time difference (definition 2), the third determination mode is adopted to determine the measurement time. In some embodiments, the measurement scheme for the sidelink positioning reference signal corresponding to the third determination mode includes a double-sided RTT measurement based on the Rx-Tx time difference. The double-sided RTT measurement may reduce the influence of frequency offset, and higher layer signaling may configure/instruct the sidelink terminal to measure N Rx-Tx time differences for one resource of the sidelink positioning reference signal, such as one sidelink positioning reference signal reception + N sidelink positioning reference signal transmissions, or one sidelink positioning reference signal transmission + N sidelink positioning reference signal receptions.

In some embodiments, the third determination mode further includes the following two determination modes.

**For mode 1:**

In some embodiments, the measurement parameter includes at least one of:

· a first parameter;
· a second parameter; or
· a third parameter.

The first parameter is used to reflect the interval between the $s^{th}$ and $(s+1)^{th}$ measurements (receptions) of the sidelink positioning reference signal by the sidelink terminal. s is a positive integer. The second parameter is used to reflect the time of the last measurement and transmission of the sidelink positioning reference signal by the sidelink terminal. The third parameter is used to reflect the number of times the sidelink terminal measures the sidelink positioning reference signal. Exemplarily, the first parameter is $T_{effect}$, the second parameter is $T_{last}$, and the third parameter is S.

In some embodiments, the sidelink terminal determines, based on a position difference between a first time-domain position and a second time-domain position as well as a first condition, a first parameter for the $s^{th}$ measurement of the sidelink positioning reference signal by the sidelink terminal. The first time-domain position is a time-domain position of a resource of a sidelink positioning reference signal measured (received) by the sidelink terminal for the $s^{th}$ time. The second time-domain position is a time-domain position of a resource of the sidelink positioning reference signal measured (received) by the sidelink terminal for the $(s+1)^{th}$ time. The first condition is used to limit the position difference to be greater than the sum of a duration of the $s^{th}$ measurement and the first measurement capability. The duration of the $s^{th}$ measurement is used to reflect the duration of the resource of the sidelink positioning reference signal measured by the sidelink terminal for the $s^{th}$ time. The first measurement capability includes a reception processing time or a maximum value of the reception processing time and a transmission processing time. The reception processing time is used to reflect the minimum processing time for the sidelink terminal to receive the resource of the sidelink positioning reference signal (corresponding to component 4 in Table 2), and the transmission processing time is used to reflect the minimum processing time for the sidelink terminal to determine the Rx-Tx time difference based on the resource of the transmitted sidelink positioning reference signal.

In some embodiments, the transmission processing time is different from the reception processing time. In some embodiments, the transmission processing time is the same as the reception processing time. In some embodiments, the transmission processing time is the same capability shared with the reception processing time.

Exemplarily, the above process is expressed as $T_{effect,s} = t_{s+1} - t_s$, and $T_{effect,s} > T_{slprs,dur,s} + T_{proc}$. $T_{effect,s}$ represents the first parameter of the $s^{th}$ measurement of the sidelink positioning reference signal by the sidelink terminal, $t_{s+1}$ represents the second time-domain position, $t_s$ represents the first time-domain position, $T_{slprs,dur,s}$ represents the duration of the resource of the sidelink positioning reference signal measured by the sidelink terminal for the $s^{th}$ time, and $T_{proc}$ represents the first measurement capability.

In some embodiments, mode 1 is applicable to the case where every N sidelink positioning reference signal receptions of the sidelink terminal correspond to one sidelink positioning reference signal transmission.

In some embodiments, the sidelink terminal determines the second parameter based on a sum of a duration of a last measurement and a first measurement capability. The duration of the last measurement is used to reflect the duration of the resource of the sidelink positioning reference signal measured and transmitted by the sidelink terminal for the last time, depending on whether the sidelink positioning reference signal is transmitted before received or received before transmitted by the sidelink terminal. The first measurement capability includes a reception processing time or a maximum value of the reception processing time and a transmission processing time. The reception processing time is used to reflect the minimum processing time for the sidelink terminal to receive the resource of the sidelink positioning reference signal, and the transmission processing time is used to reflect the minimum processing time for the sidelink terminal to determine the Rx-Tx time difference based on the resource of the transmitted sidelink positioning reference signal.

Exemplarily, the above process is expressed as: $T_{last} = T_{slprs,dur,S} + T_{proc}$. $T_{last}$ represents the second parameter, and $T_{slprs,dur,S}$ represents the duration (time duration) of resources of the sidelink positioning reference signal received and transmitted in the last measurement/last period/$S^{th}$ measurement by the sidelink terminal, depending on whether the sidelink positioning reference signal is transmitted before received or received before transmitted by the sidelink terminal. $T_{proc}$ represents the first measurement capability.

In some embodiments, the third parameter is positively correlated with at least one of the following parameters:

· a number of samples;
· a receive beam factor;
· a timing error group factor;
· a number of measurements;
· a scaling factor; or
· a configuration coefficient.

The number of samples is used to reflect a number of samples of the sidelink positioning reference signal sampled by the sidelink terminal, the receive beam factor is used to reflect a number of receive beams traversed by the sidelink terminal in a process of measuring the sidelink positioning reference signal, the timing error group factor is related to a timing error group adopted by the sidelink terminal for measuring the sidelink positioning reference signal, and the number of measurements is used to reflect a number of resources of the sidelink positioning reference signal measured by the sidelink terminal. The configuration coefficient includes a number of configured sidelink positioning reference signals to be measured by the sidelink terminal for a transmission of a same sidelink positioning reference signal, a number of configured sidelink positioning reference signals to be transmitted by the sidelink terminal for a reception of a same sidelink positioning reference signal, or a number of configured measurement results of an Rx-Tx time difference to be reported by the sidelink terminal. In some embodiments, the value of the third parameter is at least related to the number of samples. Exemplarily, the number of samples is denoted as $N_{sample}$, the receive beam factor is denoted as $N_{RxBeam}$, the timing error group factor is denoted as $k_{multiTEG}$, and the configuration coefficient is denoted as N. It should be noted that for the determination mode of the scaling factor, reference may be made to relevant content in the first determination mode described above, and details are not repeated herein in the embodiments of the present disclosure.

In some embodiments, the configuration coefficient is configured based on higher layer signaling. As N sidelink positioning reference signal resources need to be measured when the sidelink terminal transmits one resource of the sidelink positioning reference signal, the third parameter S needs to be further multiplied by N. For example, $S = N \times S1 \times S2 \times N_{sample} \times k_{multiTEG} \times N_{RxBeam}$.

In some embodiments, the sidelink terminal determines a measurement time according to the formula

$$T_{SL\,RSTD} = \left[\sum_{s=1}^{S-1} T_{effect,s} + T_{last}\right]$$

after determining the first parameter, the second parameter, and the third parameter. $T_{SL\,RSTD}$ represents the calculated measurement time, S represents the third parameter, $T_{effect,s}$ represents the first parameter corresponding to the $s^{th}$ measurement, and $T_{last}$ represents the second parameter.

**For mode 2:**

In some embodiments, the measurement parameter includes at least one of:

· a first parameter;
· a second parameter; or
· a third parameter.

The first parameter is used to reflect the interval between resources of adjacent sidelink positioning reference signals of the sidelink terminal. The second parameter is used to reflect the time of the last measurement or transmission of the sidelink positioning reference signal by the sidelink terminal. The third parameter is used to reflect the number of resources of the sidelink positioning reference signal of the sidelink terminal. Exemplarily, the positioning reference signal of the sidelink terminal includes a received sidelink positioning reference signal and a transmitted sidelink positioning reference signal by the sidelink terminal during a measurement process. The adjacent sidelink positioning reference signals may be classified into the following cases: the transmitted sidelink positioning reference signal - the received sidelink positioning reference signal, the received sidelink positioning reference signal - the transmitted sidelink positioning reference signal, the transmitted sidelink positioning reference signal - the transmitted sidelink positioning reference signal, and the received sidelink positioning reference signal - the received sidelink positioning reference signal.

In some embodiments, the sidelink terminal determines the first parameter of the adjacent sidelink positioning reference signals based on a position difference between a first time-domain position and a second time-domain position as well as a first condition. The first time-domain position is a time-domain position of a resource of a preceding sidelink positioning reference signal among the adjacent sidelink positioning reference signals. The preceding sidelink positioning reference signal is a sidelink positioning reference signal received by the sidelink terminal or a sidelink positioning reference signal transmitted by the sidelink terminal. The second time-domain position is a time-domain position of a resource of a succeeding sidelink positioning reference signal among the adjacent sidelink positioning reference signals. The succeeding sidelink positioning reference signal is a sidelink positioning reference signal received by the sidelink terminal or a sidelink positioning reference signal transmitted by the sidelink terminal. The first condition is used to limit the position difference to be greater than a sum of a duration of the resource of the preceding sidelink positioning reference signal and a first measurement capability. The first measurement capability includes a reception processing time, a transmission processing time, or a maximum value of the reception processing time and the transmission processing time. The reception processing time is used to reflect the minimum processing time for the sidelink terminal to receive the resource of the sidelink positioning reference signal (corresponding to component 4 in Table 2), and the transmission processing time is used to reflect the minimum processing time for the sidelink terminal to determine the Rx-Tx time difference based on the resource of the transmitted sidelink positioning reference signal.

In some embodiments, the transmission processing time is different from the reception processing time. In some embodiments, the transmission processing time is the same as the reception processing time. In some embodiments, the transmission processing time is the same capability shared with the reception processing time.

Exemplarily, the above process is expressed as $T_{effect,s} = t_{s+1} - t_s$, and $T_{effect,s} > T_{slprs,dur,s} + T_{proc}$. $T_{effect,s}$ represents the first parameter corresponding to the $s^{th}$ and $(s+1)^{th}$ sidelink positioning reference signals of the sidelink terminal, $t_{s+1}$ represents the second time-domain position, $t_s$ represents the first time-domain position, $T_{slprs,dur,s}$ represents the duration of the resource of the $s^{th}$ sidelink positioning reference signal of the sidelink terminal, and $T_{proc}$ represents the first measurement capability.

In some embodiments, the sidelink terminal determines the second parameter based on a sum of a duration of a last measurement or transmission and a first measurement capability. The duration of the last measurement or transmission is used to reflect the duration of the resource of the sidelink positioning reference signal measured or transmitted by the sidelink terminal for the last time, and the first measurement capability includes a reception processing time, a transmission processing time, or a maximum value of the reception processing time and the transmission processing time. The reception processing time is used to reflect the minimum processing time for the sidelink terminal to receive the resource of the sidelink positioning reference signal, and the transmission processing time is used to reflect the minimum processing time for the sidelink terminal to determine the Rx-Tx time difference based on the resource of the transmitted sidelink positioning reference signal. For example, the sidelink terminal determines whether to adopt the reception processing time or the transmission processing time based on whether the sidelink positioning reference signal is actually received before transmitted or transmitted before received.

Exemplarily, the above process is expressed as: $T_{last} = T_{slprs,dur,S} + T_{proc}$. $T_{last}$ represents the second parameter, and $T_{slprs,dur,S}$ represents the duration (time duration) of the resource of the sidelink positioning reference signal received or transmitted by the sidelink terminal in the last measurement/last period/$S^{th}$ measurement. $T_{proc}$ represents the first measurement capability.

In some embodiments, the third parameter is positively correlated with at least one of the following parameters:

· a number of samples;
· a receive beam factor;
· a timing error group factor;
· a number of measurements;
· a scaling factor; or
· a configuration coefficient + a first value.

The number of samples is used to reflect a number of samples of the sidelink positioning reference signal sampled by the sidelink terminal, the receive beam factor is used to reflect a number of receive beams traversed by the sidelink terminal in a process of measuring the sidelink positioning reference signal, the timing error group factor is related to a timing error group adopted by the sidelink terminal for measuring the sidelink positioning reference signal, and the number of measurements is used to reflect a number of resources of the sidelink positioning reference signal measured by the sidelink terminal. The configuration coefficient includes a number of configured sidelink positioning reference signals to be measured by the sidelink terminal for a transmission of a same sidelink positioning reference signal, a number of configured sidelink positioning reference signals to be transmitted by the sidelink terminal for a reception of a same sidelink positioning reference signal, or a number of configured measurement results of an Rx-Tx time difference to be reported by the sidelink terminal. Exemplarily, the number of samples is denoted as $N_{sample}$, the receive beam factor is denoted as $N_{RxBeam}$, the timing error group factor is denoted as $k_{multiTEG}$, and the configuration coefficient is denoted as N. It should be noted that for the determination mode of the scaling factor, reference may be made to relevant content in the first determination mode described above, and details are not repeated herein in the embodiments of the present disclosure.

In some embodiments, the configuration coefficient is configured based on higher layer signaling. In some embodiments, the first value is 1. S is multiplied by (N+1), where the coefficient (N+1) is used to indicate the total number of resources of the sidelink positioning reference signal transmitted and received by the sidelink terminal. For example, $S = (N+1) \times S1 \times S2 \times N_{sample} \times k_{multiTEG} \times N_{RxBeam}$.

In some embodiments, the sidelink terminal determines a measurement time according to the formula

$$T_{SL\ RSTD} = \left[\sum_{s=1}^{S-1} T_{effect,s} + T_{last}\right]$$ after determining the first parameter, the second parameter, and the third parameter. $T_{SL\ RSTD}$ represents the calculated measurement time, S represents the third parameter, $T_{effect,s}$ represents the first parameter corresponding to the $s^{th}$ adjacent sidelink positioning reference signal, and $T_{last}$ represents the second parameter.

In summary, in the method according to the embodiments, the measurement parameter is determined based on the measurement capability of the sidelink terminal, and the measurement time of the sidelink positioning reference signal is determined based on the measurement parameter, thereby providing an implementation mode for determining the measurement time of the sidelink positioning reference signal based on the measurement capability of the sidelink terminal. In addition, for sidelink terminals with different measurement capabilities, the determined measurement time matches the measurement capabilities of the sidelink terminals.

The method according to the present disclosure provides a solution for determining a measurement time of a sidelink positioning reference signal based on the measurement capability of a terminal. According to the above solution, the measurement time of the sidelink positioning reference signal is determined, thereby providing an implementation mode for determining the measurement time of the sidelink positioning reference signal based on the measurement capability of the sidelink terminal. In addition, for sidelink terminals with different measurement capabilities, the determined measurement time matches the measurement capabilities of the sidelink terminals. The determination of the measurement time includes three determination modes:

**For the first determination mode:**

FIG. 7 is a flowchart of a method for determining a measurement time according to some exemplary embodiments of the present disclosure. The method is performed by a sidelink terminal. The method includes the following processes.

**In S702,** a measurement parameter is determined based on the measurement capability of the sidelink terminal by the first determination mode.

The sidelink terminal includes a terminal that supports the sidelink communication. The measurement parameter is used for determining the measurement time, by the sidelink terminal, of the sidelink positioning reference signal. The measurement capability is used to reflect the capability of the sidelink terminal to measure the sidelink positioning reference signal, for example, the related capability shown in Table 2 above. The sidelink positioning reference signal includes a reference signal used for positioning that is transmitted over a sidelink, for example, an SL PRS.

In some embodiments, the measurement scheme for the sidelink positioning reference signal corresponding to the first determination mode includes at least one of:

- · an RSTD measurement;
- · an RTOA measurement;
- · an RSRP measurement;
- · an RSRPP measurement;
- · an AOA measurement;
- · a ZOA measurement; or
- · an Rx-Tx time difference measurement.

The Rx-Tx time difference measurement is implemented by the sidelink terminal by receiving and transmitting the sidelink positioning reference signal. For example, sidelink terminal B needs to transmit the SL PRS to sidelink terminal A after receiving the SL PRS transmitted by sidelink terminal A, such that a single-sided RTT value is measured. In some embodiments, the Rx-Tx time difference measurement includes two definitions: (1) the sidelink terminal determines the measurement result of the Rx-Tx time difference without an actual transmission of an SL PRS; (2) the sidelink terminal needs an actual transmission of an SL PRS to determine the Rx-Tx time difference measurement result. In some embodiments, for the Rx-Tx time difference measurement, in the case where it is not required to use an actual transmission time of the sidelink positioning reference signal to determine a measurement result of the Rx-Tx time difference (definition 1), that is, in the case where it is not necessary to consider the sidelink positioning reference signal actually transmitted by the sidelink terminal to another sidelink terminal, the first determination mode is adopted to determine the measurement time.

In some embodiments, the measurement parameter includes at least one of:

· a first parameter;
· a second parameter; or
· a third parameter.

The first parameter is used to reflect the interval between the $s^{th}$ and $(s+1)^{th}$ measurements (receptions) of the sidelink positioning reference signal by the sidelink terminal. s is a positive integer and not greater than S. The second parameter is used to reflect the time of the last measurement of the sidelink positioning reference signal by the sidelink terminal. The third parameter is used to reflect the number of times the sidelink terminal measures the sidelink positioning reference signal. Exemplarily, the first parameter is $T_{effect}$, the second parameter is $T_{last}$, and the third parameter is S.

In some embodiments, the sidelink terminal determines, based on a position difference between a first time-domain position and a second time-domain position as well as a first condition, a first parameter for the $s^{th}$ measurement of the sidelink positioning reference signal by the sidelink terminal. The first time-domain position is a time-domain position of a resource of the sidelink positioning reference signal measured by the sidelink terminal for the $s^{th}$ time, for example, a time-domain start position of the resource of the sidelink positioning reference signal measured by the sidelink terminal for the $s^{th}$ time. The second time-domain position is a time-domain position of a resource of the sidelink positioning reference signal measured by the sidelink terminal for the $(s+1)^{th}$ time, for example, a time-domain start position of the resource of the sidelink positioning reference signal measured by the sidelink terminal for the $(s+1)^{th}$ time. The first condition is used to limit the position difference to be greater than the sum of a duration of the $s^{th}$ measurement and a first measurement capability. The duration of the $s^{th}$ measurement is used to reflect the duration of the resource of the sidelink positioning reference signal measured by the sidelink terminal for the $s^{th}$ time, and the first measurement capability is used to reflect the minimum processing time for the sidelink terminal to receive the resource of the sidelink positioning reference signal.

Exemplarily, the above process is expressed as $T_{effect,s} = t_{s+1} - t_s$, and $T_{effect,s} > T_{slprs,dur,s} + T_{proc}$. $T_{effect,s}$ represents the first parameter of the $s^{th}$ measurement of the sidelink positioning reference signal by the sidelink terminal, $t_{s+1}$ represents the second time-domain position, $t_s$ represents the first time-domain position, $T_{slprs,dur,s}$ represents the duration of the resource of the sidelink positioning reference signal measured by the sidelink terminal for the $s^{th}$ time, and $T_{proc}$ represents the first measurement capability (corresponding to component 4 in Table 2).

In some embodiments, in the case where a resource of a sidelink positioning reference signal of the next period that belongs to the same sidelink positioning reference signal resource group as one sidelink positioning reference signal appears during the processing time of the one sidelink positioning reference signal by the sidelink terminal, the sidelink terminal discards the one sidelink positioning reference signal.

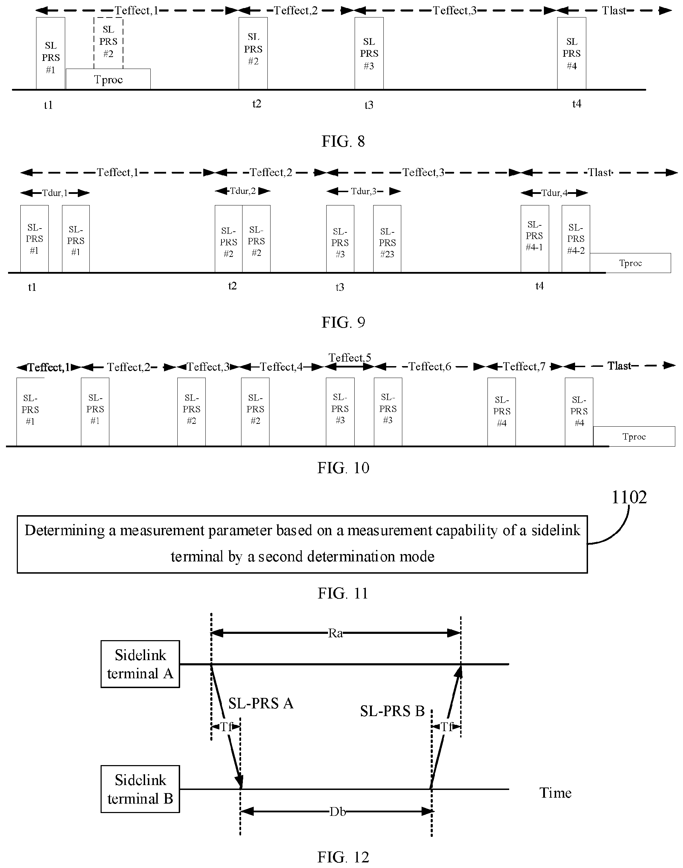

Exemplarily, FIG. 8 is a schematic diagram of resources of an SL PRS according to some exemplary embodiments of the present disclosure. As shown in FIG. 8, since SL PRS #2 falls within the processing time of SL PRS #1, the sidelink terminal discards SL PRS #2, and only the SL PRS at time t2 serves as new SL PRS #2. $T_{effect}$ is calculated based on actually measured/non-discarded SL PRS.

In some embodiments, the sidelink terminal determines the second parameter based on a sum of a duration of a last measurement and a first measurement capability. The duration of the last measurement is used to reflect the duration of the resource of the sidelink positioning reference signal measured by the sidelink terminal for the last time, and the first measurement capability is used to reflect the minimum processing time for the sidelink terminal to receive the resource of the sidelink positioning reference signal.

Exemplarily, the above process is expressed as: $T_{last} = T_{slprs,dur,s} + T_{proc}$. $T_{last}$ represents the second parameter, and $T_{slprs,dur,s}$ represents the duration (time duration) of resources of the sidelink positioning reference signal in the last measurement/last period/$S^{th}$ measurement by the sidelink terminal. For the determination mode, reference may be made to the relevant content described above. $T_{proc}$ represents the first measurement capability (corresponding to component 4 in Table 2).

Exemplarily, FIG. 9 is a schematic diagram of resources of an SL PRS according to some exemplary embodiments of the present disclosure. As shown in FIG. 9, $T_{slprs,dur,s}$ represents the length of several resources of the SL PRSs of the last $S^{th}$ measurement/period required to be measured, including empty slots between the SL PRSs. As shown in the figure, SL PRS #4-1 is slot #10, SL PRS #4-2 is slot #14, and then $T_{slprs,dur,S}$ represents a length of five slots.

In some embodiments, the third parameter is positively correlated with at least one of the following parameters:

· a number of samples;
· a receive beam factor;
· a timing error group factor;
· a number of measurements; or

· a scaling factor.

The number of samples is used to reflect a number of samples of the sidelink positioning reference signal sampled by the sidelink terminal, the receive beam factor is used to reflect a number of receive beams traversed by the sidelink terminal in a process of measuring the sidelink positioning reference signal, the timing error group factor is related to a timing error group adopted by the sidelink terminal for measuring the sidelink positioning reference signal, and the number of measurements is used to reflect a number of resources of the sidelink positioning reference signal measured by the sidelink terminal. In some embodiments, the value of the third parameter is at least related to the number of samples.

Exemplarily, the number of samples is denoted as $N_{sample}$, and typically $N_{sample}$ is equal to 4 or 1, depending on the measurement capability of the sidelink terminal. The receive beam factor is denoted as $N_{RxBeam}$; for example, in the case where the sidelink positioning reference signal supports FR 2, $N_{RxBeam}$ is equal to 8, or the receive beam factor is an Rx beam sweeping factor parameter reported by the sidelink terminal. The timing error group factor is denoted as $k_{multiTEG}$, and reference may be made to the description of the DL PRS above. In some embodiments, for the determination of the two parameters $N_{RxBeam}$ and $k_{multiTEG}$, reference may be made to the measurement of the DL PRS; for example, in the case where the sidelink positioning reference signal also supports FR 2 or a TEG function, those in the DL PRS may be adopted.

In some embodiments, the sidelink terminal determines the scaling factor based on the configuration of the sidelink positioning reference signal that needs to be measured. For example, in the case where the number of resources of the activated sidelink positioning reference signal exceeds the measurement capability of the sidelink terminal at a moment, or in the case where the number of time-domain units (slots) carrying the activated sidelink positioning reference signal exceeds the measurement capability of the sidelink terminal at a moment, the measurement time needs to be further extended.

In some embodiments, the scaling factor is related to at least one of a second measurement capability and a third measurement capability of a sidelink terminal. The second measurement capability is used to reflect the maximum number of resources of the activated sidelink positioning reference signal that are supported and processed by the sidelink terminal (corresponding to component 2 in Table 2), and the third measurement capability is used to reflect the maximum number of time-domain units carrying the activated sidelink positioning reference signal that are supported and processed by the sidelink terminal (corresponding to component 3 in Table 2). In some embodiments, the time-domain unit includes a slot. In some embodiments, the scaling factor includes at least one of a first scaling factor and a second scaling factor.

In some embodiments, the sidelink terminal determines the first scaling factor based on a ratio of first information to the second measurement capability, to determine the third parameter. The first information includes a number of configured resources of the sidelink positioning reference signal to be measured by the sidelink terminal. Exemplarily, the number of configured resources of the sidelink positioning reference signal to be measured by the sidelink terminal is denoted as X_cfg, and the second measurement capability is denoted as X_ue. Assuming that in a worst-case scenario where all sidelink positioning reference signals are activated simultaneously, the first scaling factor S1 is related to (X_cfg/X_ue), for example, rounding up or rounding down (X_cfg/X_ue), for example, S1 = ceil(X_cfg/X_ue).

In some embodiments, the sidelink terminal determines the first scaling factor based on a ratio of second information to the second measurement capability, to determine the third parameter. The second information includes a number of actually simultaneously activated resources of the sidelink positioning reference signal, or a maximum value of the number of actually simultaneously activated resources of the sidelink positioning reference signal. The numbers of simultaneously activated resources at different times may be different; for example, the sidelink terminal is configured to measure ten resources of the sidelink positioning reference signal, but the ten resources are scattered in the time domain, and the number of actually simultaneously activated resources may only be two. Exemplarily, the number of actually simultaneously activated resources of the sidelink positioning reference signal is denoted as X_act, the maximum value of the number of actually simultaneously activated resources of the sidelink positioning reference signal is denoted as X_act=max(X_act, i), the second measurement capability is denoted as X_ue, and the first scaling factor S1 is related to (X_act/X _ue), for example, rounding up or rounding down (X_cfg/X_ue), for example, S1 = ceil(X_act/X_ue).

In some embodiments, the sidelink terminal determines the first scaling factor based on a ratio of third information to the second measurement capability, to determine the third parameter. The third information includes a minimum value in first information and fourth information, the first information includes a number of configured resources of the sidelink positioning reference signal to be measured by the sidelink terminal, the fourth information is determined based on fifth information and sixth information, the fifth information includes a number of time-domain units corresponding to a first measurement capability, the sixth information includes a maximum value of the number of resources of the sidelink positioning reference signal configured on each time-domain unit, and the first measurement capability is used to reflect a minimum processing time for the sidelink terminal to receive the resource of the sidelink positioning reference signal. Exemplarily, the third information is denoted as X_3 = min(X_cfg, (Npro + second value) * K), where K represents the maximum value of the number of resources of the sidelink positioning reference signal configured on each time-domain unit (slot). Npro represents the number of slots corresponding to $T_{proc}$ (ms) of the sidelink terminal. Here, it is assumed that the periodicity of the sidelink positioning reference signal is greater than the processing time of the sidelink terminal;

otherwise, resources of a plurality of periods of the same sidelink positioning reference signal might reappear within the Npro processing delay. In some embodiments, the second value is 1, and in this case, the slot where the sidelink positioning reference signal itself is located is considered. The first scaling factor is related to $(X\_3/X\_ue)$, for example, rounding up or rounding down $(X\_3/X\_ue)$, for example, $S1 = ceil(X\_3/X\_ue)$.

In some embodiments, the sidelink terminal determines the second scaling factor based on a ratio of seventh information to the third measurement capability, to determine the third parameter. The seventh information is used to reflect a number of configured time-domain units carrying the sidelink positioning reference signal, and the seventh information is equal to first information; the first information includes a number of configured resources of the sidelink positioning reference signal to be measured by the sidelink terminal. Exemplarily, the number of slots carrying the sidelink positioning reference signal is denoted as $Y\_cfg=X\_cfg$ based on the configuration, and the third measurement capability is denoted as $Y\_ue$. Here, $Y\_cfg$ is acquired assuming a worst-case scenario where all resources of the sidelink positioning reference signal are scattered in different slots and are activated simultaneously. The second scaling factor $S2$ is related to $(Y\_cfg/Y\_ue)$, for example, rounding up or rounding down $(Y\_cfg/Y\_ue)$, for example, $S2 = ceil(Y\_cfg/Y\_ue)$.

In some embodiments, the sidelink terminal determines the second scaling factor based on a ratio of eighth information to the third measurement capability, to determine the third parameter. The eighth information includes a number of actually simultaneously activated time-domain units corresponding to the sidelink positioning reference signal, or a maximum value of the number of actually simultaneously activated time-domain units corresponding to the sidelink positioning reference signal. The number of resources activated simultaneously at different times may be different. Exemplarily, the number of actually simultaneously activated slots corresponding to the sidelink positioning reference signal is denoted as $Y\_act$, the maximum value of the number of actually simultaneously activated slots corresponding to the sidelink positioning reference signal is denoted as $Y\_act=max(Y\_act, i)$, and the second scaling factor $S2$ is related to $(Y\_act/Y\_ue)$, for example, rounding up or rounding down $(Y\_act/Y\_ue)$, for example, $S2 = ceil(Y\_act/Y\_ue)$.

In some embodiments, the sidelink terminal determines the second scaling factor based on a ratio of ninth information to the third measurement capability, to determine the third parameter. The ninth information includes a minimum value in first information and information determined based on fifth information, the first information includes a number of configured resources of the sidelink positioning reference signal to be measured by the sidelink terminal, the fifth information includes a number of time-domain units corresponding to a first measurement capability, and the first measurement capability is used to reflect a minimum processing time for the sidelink terminal to receive the resource of the sidelink positioning reference signal. Exemplarily, based on the configuration, the number of slots containing the sidelink positioning reference signal (the ninth information) is determined as $Y\_cfg=min(X\_cfg, Npro+1)$, and the third measurement capability is denoted as $Y\_ue$. $Y\_cfg$ is acquired assuming a worst-case scenario where all resources of the sidelink positioning reference signal are scattered in different slots and are activated simultaneously. Npro represents the number of slots corresponding to $T_{proc}$ (ms) of the sidelink terminal. In some embodiments, a third value is 1. The second scaling factor $S2$ is related to $(Y\_cfg/Y\_ue)$, for example, rounding up or rounding down $(Y\_cfg/Y\_ue)$, for example, $S2 = ceil$ and $(Y\_cfg/Y\_ue)$.

In some embodiments, in the case where the third measurement capability of the sidelink terminal is not defined, or the third measurement capability defaults to be very large, $S2 = 1$.

In some embodiments, the first scaling factor and the second scaling factor are multiplied by the number of samples and/or other scaling factors used for determining the third parameter, thereby obtaining the third parameter. For example, $S = S1 \times S2 \times N_{sample} \times k_{multiTEG} \times N_{RxBeam}$, or $S = ceil(S1 \times S2 \times N_{sample} \times k_{multiTEG} \times N_{RxBeam})$. In this case, rounding is skipped first when calculating S1 or S2, and the rounding is performed after multiplying all scaling factors to calculate the final S.

In some embodiments, in the case where periodicities of resources of the sidelink positioning reference signal measured by the sidelink terminal are different, the above-mentioned parameters are determined based on the resource of the sidelink positioning reference signal with the maximum periodicity.

In some embodiments, the third parameter is related to the number of resources of the sidelink positioning reference signal measured by the sidelink terminal, for example, $S =$ a number of resources of the measured SL PRS $\times$ $N_{sample}$. In this case, $T_{effect}$ represents a time interval between every two adjacent resources of the sidelink positioning reference signal.

Exemplarily, FIG. 10 is a schematic diagram of resources of an SL PRS according to some exemplary embodiments of the present disclosure. As shown in FIG. 10, in the case where S is related to the number of resources of the SL PRS measured by the sidelink terminal, $T_{effect}$ represents the time interval between two adjacent resources of the SL PRS, without distinguishing SL PRS resource groups.

$T_{slprs,dur,S}$ represents the length of a plurality of resources of the SL PRS of the last $S^{th}$ measurement/period required to be measured, including empty slots between the SL PRSs. As shown in the figure, SL PRS #4-1 is slot #10, SL PRS #4-2 is slot #14, and then $T_{slprs,dur,S}$ represents a length of five slots.

In some embodiments, the sidelink terminal determines a measurement time according to the formula

$$T_{\text{SL RSTD}} = \left[ \sum_{s=1}^{S-1} T_{\text{effect},s} + T_{\text{last}} \right]$$ after determining the first parameter, the second parameter, and the third parameter. $T_{\text{SL RSTD}}$ represents the calculated measurement time, S represents the third parameter, $T_{\text{effect},s}$ represents the first parameter corresponding to the $s^{\text{th}}$ measurement, and $T_{\text{last}}$ represents the second parameter.

Exemplarily, continuing to refer to FIG. 8, taking as an example where one resource of the SL PRS and S being equal to 4, $T_{\text{effect}}$ represents the interval between two adjacent SL PRS measurements, and the total measurement time is the sum of $T_{\text{effect}}$ and $T_{\text{last}}$.

The processes mentioned in the above embodiments may be implemented as independent embodiments, such as the processes of determining the first parameter, the processes of determining the second parameter, and the processes of determining the third parameter, which are implemented separately as a measurement parameter determination method on the sidelink terminal side.

In summary, in the method according to the embodiments, the measurement parameter is determined based on the measurement capability of the sidelink terminal, and the measurement time of the sidelink positioning reference signal is determined based on the measurement parameter, thereby providing an implementation mode for determining the measurement time of the sidelink positioning reference signal based on the measurement capability of the sidelink terminal. In addition, for sidelink terminals with different measurement capabilities, the determined measurement time matches the measurement capabilities of the sidelink terminals.

According to the method in the embodiments, the first parameter, the second parameter, and the third parameter are further determined based on the measurement capability, such that the parameters used for calculating the measurement time are determined based on the measurement capability, and the calculation process conform to the measurement capability of the terminal. In addition, the method according to the embodiments further provides determination modes of the first parameter, the second parameter, and the third parameter. By determining the scaling factor of the third parameter in conjunction with the measurement capability of the sidelink terminal, a more reasonable measurement time is determined. The first scaling factor is determined based on the number of configured resources of the sidelink positioning reference signal and the sidelink terminal capability, such that a method for calculating the first scaling factor simply and directly based on the configuration is provided. The first scaling factor is determined based on the number of actually activated resources of the sidelink positioning reference signal and the sidelink terminal capability, such that excessive increament of the measurement time is avoided to a certain extent. The first scaling factor is determined based on the third information and the measurement capability of the sidelink terminal, such that the flexibility of determining the first scaling factor is improved. The second scaling factor is determined based on the number of configured resources of the sidelink positioning reference signal and the sidelink terminal capability, such that a method for calculating the first scaling factor simply and directly based on the configuration is provided. The second scaling factor is determined based on the number of actually activated resources of the sidelink positioning reference signal and the sidelink terminal capability, such that excessive increament of the measurement time is avoided to a certain extent. The second scaling factor is determined based on the ninth information and the measurement capability of the sidelink terminal, such that the flexibility of determining the second scaling factor is improved.

**For the second determination mode:**

FIG. 11 is a flowchart of a method for determining a measurement time according to some exemplary embodiments of the present disclosure. The method is performed by a sidelink terminal. The method includes the following processes.

In S1102, a measurement parameter is determined based on the measurement capability of the sidelink terminal by the second determination mode.

The sidelink terminal includes a terminal that supports the sidelink communication. The measurement parameter is used for determining the measurement time, by the sidelink terminal, of the sidelink positioning reference signal. The measurement capability is used to reflect the capability of the sidelink terminal to measure the sidelink positioning reference signal, for example, the related capability shown in Table 2 above. The sidelink positioning reference signal includes a reference signal used for positioning that is transmitted over a sidelink, for example, an SL PRS.

In some embodiments, the measurement scheme for the sidelink positioning reference signal corresponding to the second determination mode includes the Rx-Tx time difference measurement. The Rx-Tx time difference measurement is implemented by the sidelink terminal by receiving and transmitting the sidelink positioning reference signal. In some embodiments, as described above, the Rx-Tx time difference measurement includes two definitions. In some embodiments, for the Rx-Tx time difference measurement, in the case where it is necessary to wait for the end of the sidelink positioning reference signal actually transmitted by the sidelink terminal to another sidelink terminal to determine a measurement result of the Rx-Tx time difference (definition 2), the second determination mode is adopted to determine the measurement time. In some embodiments, the measurement scheme for the sidelink positioning reference signal corresponding to the second determination mode includes the single-sided RTT measurement based on the Rx-Tx time difference.

Exemplarily, FIG. 12 is a schematic diagram of a single-sided RTT measurement according to some exemplary embodiments of the present disclosure. As shown in FIG. 12, for each of sidelink terminal A and sidelink terminal B, only one SL PRS received signal needs to be measured. The Rx-Tx time difference of sidelink terminal A is time difference Ra, the Rx-Tx time difference of sidelink terminal B is time difference Rb, and the transmission time of the SL PRS is Tf.

In some embodiments, the second determination mode further includes the following two determination modes.

**For Scheme 1:**

In some embodiments, the measurement parameter includes at least one of:

· a first parameter;
· a second parameter; or
· a third parameter.

The first parameter is used to reflect the interval between the $s^{th}$ and $(s+1)^{th}$ measurements of the sidelink positioning reference signal by the sidelink terminal. s is a positive integer. The second parameter is used to reflect the time of the last measurement and transmission of the sidelink positioning reference signal by the sidelink terminal. The third parameter is used to reflect the number of times the sidelink terminal measures the sidelink positioning reference signal. Exemplarily, the first parameter is $T_{effect}$, the second parameter is $T_{last}$, and the third parameter is S.

In some embodiments, the sidelink terminal determines, based on a position difference between a first time-domain position and a second time-domain position as well as a first condition, a first parameter for the $s^{th}$ measurement of the sidelink positioning reference signal by the sidelink terminal. The first time-domain position is a time-domain position of a resource of the sidelink positioning reference signal measured by the sidelink terminal for the $s^{th}$ time. In some embodiments, the time-domain position includes time-domain positions of resources for receiving and transmitting the sidelink positioning reference signal corresponding to the $s^{th}$ measurement. The second time-domain position is a time-domain position of a resource of the sidelink positioning reference signal measured by the sidelink terminal for the $(s+1)^{th}$ time. In some embodiments, the time-domain position includes time-domain positions of resources for receiving and transmitting the sidelink positioning reference signal corresponding to the $(s+1)^{th}$ measurement. The first condition is used to limit the position difference to be greater than the sum of a duration of the $s^{th}$ measurement and a first measurement capability. The duration of the $s^{th}$ measurement is used to reflect a duration of the resource of the sidelink positioning reference signal measured by the sidelink terminal for the $s^{th}$ time. In some embodiments, the sidelink positioning reference signal measured for the $s^{th}$ time includes received and transmitted sidelink positioning reference signals corresponding to the $s^{th}$ measurement. The first measurement capability includes a reception processing time or a maximum value of the reception processing time and a transmission processing time. The reception processing time is used to reflect the minimum processing time for the sidelink terminal to receive the resource of the sidelink positioning reference signal (corresponding to component 4 in Table 2), and the transmission processing time is used to reflect the minimum processing time for the sidelink terminal to determine the Rx-Tx time difference based on the resource of the transmitted sidelink positioning reference signal.

In some embodiments, the transmission processing time is different from the reception processing time. In some embodiments, the transmission processing time is the same as the reception processing time. In some embodiments, the transmission processing time is the same capability shared with the reception processing time.

Exemplarily, the above process is expressed as $T_{effect,s} = t_{s+1} - t_s$, and $T_{effect,s} > T_{slprs,dur,s} + T_{proc}$. $T_{effect,s}$ represents the first parameter of the $s^{th}$ measurement of the sidelink positioning reference signal by the sidelink terminal, $t_{s+1}$ represents the second time-domain position, $t_s$ represents the first time-domain position, $T_{slprs,dur,s}$ represents the duration of the resource of the sidelink positioning reference signal measured by the sidelink terminal for the $s^{th}$ time, and $T_{proc}$ represents the first measurement capability.

In some embodiments, Scheme 1 is applicable to the case where each reception of the sidelink positioning reference signal by the sidelink terminal corresponds to one transmission of the sidelink positioning reference signal, and/or the case where the time when the sidelink terminal transmits the sidelink positioning reference signal is not later than reception of the sidelink positioning reference signal in the next period.

In some embodiments, the sidelink terminal determines the second parameter based on a sum of a duration of a last measurement and a first measurement capability. The duration of the last measurement is used to reflect the duration of the resource of the sidelink positioning reference signal measured (received) and transmitted by the sidelink terminal for the last time. The first measurement capability includes a reception processing time or a maximum value of the reception processing time and a transmission processing time. The reception processing time is used to reflect the minimum processing time for the sidelink terminal to receive the resource of the sidelink positioning reference signal, and the transmission processing time is used to reflect the minimum processing time for the sidelink terminal to determine the Rx-Tx time difference based on the resource of the transmitted sidelink positioning reference signal.

Exemplarily, the above process is expressed as: $T_{last} = T_{slprs,dur,S} + T_{proc}$. $T_{last}$ represents the second parameter, and $T_{slprs,dur,S}$ represents the duration (time duration) of resources of the sidelink positioning reference signal received and transmitted in the last measurement/last period/$S^{th}$ measurement by the sidelink terminal. $T_{proc}$ represents the first measurement capability. For example, in the case where sidelink terminal B receives the SL PRS of the last slot in slot #n and transmits the SL PRS of the last slot in slot #m, $T_{slprs,dur,S}$ is from a start time of slot #n to an end time of slot #m, that is, (m - n + 1) slots. In some embodiments, in the case where the SL PRS used for measuring the Rx-Tx time difference is transmitted before the reception of the SL PRS, i.e., m < n, $T_{slprs,dur,S}$ only needs to consider the duration of the received SL PRS. In this case, $T_{slprs,dur,S}$ represents (n - m + 1) slots. Reference may be made to relevant content in the first determination scheme.

In some embodiments, the third parameter is positively correlated with at least one of the following parameters:

· a number of samples;
· a receive beam factor;
· a timing error group factor;
· a number of measurements; or
· a scaling factor.

The number of samples is used to reflect a number of samples of the sidelink positioning reference signal sampled by the sidelink terminal, the receive beam factor is used to reflect a number of receive beams traversed by the sidelink terminal in a process of measuring the sidelink positioning reference signal, the timing error group factor is related to a timing error group adopted by the sidelink terminal for measuring the sidelink positioning reference signal, and the number of measurements is used to reflect a number of resources of the sidelink positioning reference signal measured by the sidelink terminal. In some embodiments, the value of the third parameter is at least related to the number of samples. Exemplarily, the number of samples is denoted as $N_{sample}$, the receive beam factor is denoted as $N_{RxBeam}$, and the timing error group factor is denoted as $k_{multiTEG}$. It should be noted that for the determination mode of the scaling factor, reference may be made to relevant content in the first determination mode described above, and details are not repeated herein in the embodiments of the present disclosure.

In some embodiments, the sidelink terminal determines a measurement time according to the formula

$$T_{SL\ RSTD} = \left[\sum_{s=1}^{S-1} T_{effect,s} + T_{last}\right]$$ after determining the first parameter, the second parameter, and the third parameter. $T_{SL\ RSTD}$ represents the calculated measurement time, S represents the third parameter, $T_{effect,s}$ represents the first parameter corresponding to the $s^{th}$ measurement, and $T_{last}$ represents the second parameter.

**For Scheme 2:**

In some embodiments, the measurement parameter includes at least one of:

· a first parameter;
· a second parameter; or
· a third parameter.

The first parameter is used to reflect the interval between resources of adjacent sidelink positioning reference signals of the sidelink terminal. The second parameter is used to reflect the time of the last measurement or transmission of the sidelink positioning reference signal by the sidelink terminal. The third parameter is used to reflect the number of resources of the sidelink positioning reference signal of the sidelink terminal. Exemplarily, the positioning reference signal of the sidelink terminal includes a received sidelink positioning reference signal and a transmitted sidelink positioning reference signal by the sidelink terminal during a measurement process. The adjacent sidelink positioning reference signals may be classified into the following cases: the transmitted sidelink positioning reference signal - the received sidelink positioning reference signal, the received sidelink positioning reference signal - the transmitted sidelink positioning reference signal, the transmitted sidelink positioning reference signal - the transmitted sidelink positioning reference signal, and the received sidelink positioning reference signal - the received sidelink positioning reference signal.

In some embodiments, the sidelink terminal determines the first parameter of the adjacent sidelink positioning reference signals based on a position difference between a first time-domain position and a second time-domain position as well as a first condition. The first time-domain position is a time-domain position of a resource of a preceding sidelink positioning reference signal among the adjacent sidelink positioning reference signals. The preceding sidelink positioning reference signal is a sidelink positioning reference signal received by the sidelink terminal or a sidelink positioning reference signal transmitted by the sidelink terminal. The second time-domain position is a time-domain position of a resource of a succeeding sidelink positioning reference signal among the adjacent sidelink positioning reference signals. The succeeding sidelink positioning reference signal is a sidelink positioning reference signal received by the sidelink terminal or a sidelink positioning reference signal transmitted by the sidelink terminal. The first condition is used to limit the position difference to be greater than a sum of a duration of the resource of the preceding sidelink positioning reference signal and a first measurement capability. The first measurement capability includes a reception processing time, a transmission processing time, or a maximum value of the reception processing time and the transmission processing time. The reception processing time is used to reflect the minimum processing time for the sidelink terminal to receive the resource of the sidelink positioning reference signal (corresponding to component 4 in Table 2), and the transmission processing time is used to reflect the minimum processing time for the sidelink terminal to determine the Rx-Tx time difference based on the resource of the transmitted sidelink positioning reference signal.

In some embodiments, the transmission processing time is different from the reception processing time. In some embodiments, the transmission processing time is the same as the reception processing time. In some embodiments, the transmission processing time is the same capability shared with the reception processing time.

Exemplarily, the above process is expressed as $T_{effect,s} = t_{s+1} - t_s$, and $T_{effect,s} > T_{slprs,dur,s} + T_{proc}$. $T_{effect,s}$ represents the first parameter corresponding to the $s^{th}$ and $(s+1)^{th}$ sidelink positioning reference signals of the sidelink terminal, $t_{s+1}$ represents the second time-domain position, $t_s$ represents the first time-domain position, $T_{slprs,dur,s}$ represents the duration of the resource of the $s^{th}$ sidelink positioning reference signal of the sidelink terminal, and $T_{proc}$ represents the first measurement capability.

In some embodiments, the sidelink terminal determines the second parameter based on a sum of a duration of a last measurement or transmission and a first measurement capability. The duration of the last measurement or transmission is used to reflect the duration of the resource of the sidelink positioning reference signal measured or transmitted by the sidelink terminal for the last time, and the first measurement capability includes a reception processing time, a transmission processing time, or a maximum value of the reception processing time and the transmission processing time. The reception processing time is used to reflect the minimum processing time for the sidelink terminal to receive the resource of the sidelink positioning reference signal, and the transmission processing time is used to reflect the minimum processing time for the sidelink terminal to determine the Rx-Tx time difference based on the resource of the transmitted sidelink positioning reference signal. For example, the sidelink terminal determines whether to adopt the reception processing time or the transmission processing time based on whether the sidelink positioning reference signal is actually received before transmitted or transmitted before received.

Exemplarily, the above process is expressed as: $T_{last} = T_{slprs,dur,S} + T_{proc}$. $T_{last}$ represents the second parameter, and $T_{slprs,dur,S}$ represents the duration (time duration) of the resource of the sidelink positioning reference signal received or transmitted by the sidelink terminal in the last measurement/last period/Sth measurement. $T_{proc}$ represents the first measurement capability.

In some embodiments, the third parameter is positively correlated with at least one of the following parameters:

- · a number of samples;
- · a receive beam factor;
- · a timing error group factor;
- · a number of measurements;
- · a scaling factor; or
- · a specified coefficient.

The number of samples is used to reflect a number of samples of the sidelink positioning reference signal sampled by the sidelink terminal, the receive beam factor is used to reflect a number of receive beams traversed by the sidelink terminal in a process of measuring the sidelink positioning reference signal, the timing error group factor is related to a timing error group adopted by the sidelink terminal for measuring the sidelink positioning reference signal, and the number of measurements is used to reflect a number of resources of the sidelink positioning reference signal measured by the sidelink terminal. In some embodiments, the value of the third parameter is at least related to the number of samples. Exemplarily, the number of samples is denoted as $N_{sample}$, the receive beam factor is denoted as $N_{RxBeam}$, and the timing error group factor is denoted as $k_{multiTEG}$. It should be noted that for the determination scheme for the scaling factor, reference may be made to relevant content in the first determination scheme described above, and details are not repeated herein in the embodiments of the present disclosure.

In some embodiments, the specified coefficient is 2. Exemplarily, the calculation method of the third parameter is $S = 2 \times S1 \times S2 \times N_{sample} \times k_{multiTEG} \times N_{RxBeam}$, which is considered as the specified coefficient scaling up S by a factor of 2, that is, increasing the number of measurements by 2 times. This is used to reflect that transmission and reception corresponding to the measurement of the sidelink terminal each correspond to one resource of the sidelink positioning reference signal.

In some embodiments, the sidelink terminal determines a measurement time according to the formula

$$T_{\text{SL RSTD}} = \left[ \sum_{s=1}^{S-1} T_{\text{effect},s} + T_{\text{last}} \right]$$ after determining the first parameter, the second parameter, and the third

parameter. $T_{\text{SL RSTD}}$ represents the calculated measurement time, S represents the third parameter, $T_{\text{effect},s}$ represents the first parameter corresponding to the $s^{\text{th}}$ adjacent sidelink positioning reference signal, and $T_{\text{last}}$ represents the second parameter.

The processes mentioned in the above embodiments may be implemented as independent embodiments, such as the process of determining the first parameter, the process of determining the second parameter, and the process of determining the third parameter, which are implemented separately as a measurement parameter determination method on the sidelink terminal side.

In summary, in the method according to the embodiments, the measurement parameter is determined based on the measurement capability of the sidelink terminal, and the measurement time of the sidelink positioning reference signal is determined based on the measurement parameter, thereby providing an implementation scheme for determining an Rx-Tx time difference-based single-sided RTT measurement time based on the measurement capability of the sidelink terminal. In addition, for sidelink terminals with different measurement capabilities, the determined measurement time matches the measurement capabilities of the sidelink terminals.

According to the method in the embodiments, the first parameter, the second parameter, and the third parameter are further determined based on the measurement capability, such that the parameters used for calculating the measurement time are determined based on the measurement capability, and the calculation process conform to the measurement capability of the terminal. In addition, the method according to the embodiments further provides determination schemes of the first parameter, the second parameter, and the third parameter. By determining the scaling factor of the third parameter in conjunction with the measurement capability of the sidelink terminal, a more reasonable measurement time is determined.

**For the third determination scheme:**

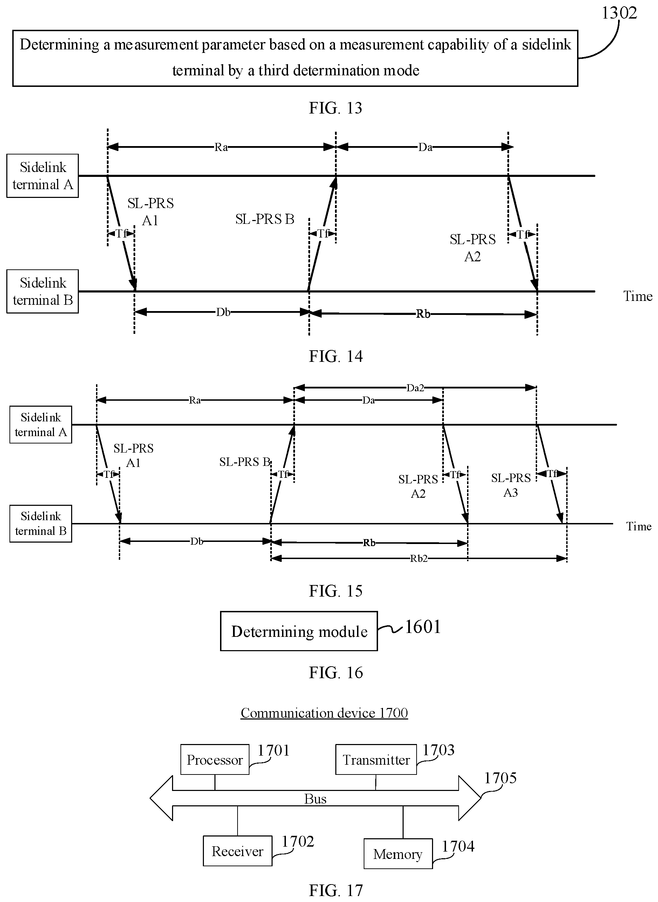

FIG. 13 is a flowchart of a method for determining a measurement time according to some exemplary embodiments of the present disclosure. The method is performed by a sidelink terminal. The method includes the following processes.

In S1302, a measurement parameter is determined based on the measurement capability of the sidelink terminal by the third determination scheme.

The sidelink terminal includes a terminal that supports the sidelink communication. The measurement parameter is used for determining the measurement time, by the sidelink terminal, of the sidelink positioning reference signal. The measurement capability is used to reflect the capability of the sidelink terminal to measure the sidelink positioning reference signal, for example, the related capability shown in Table 2 above. The sidelink positioning reference signal includes a reference signal used for positioning that is transmitted over a sidelink, for example, an SL PRS.

In some embodiments, the measurement scheme for the sidelink positioning reference signal corresponding to the third determination scheme includes the Rx-Tx time difference measurement. The Rx-Tx time difference measurement is implemented by the sidelink terminal by receiving and transmitting the sidelink positioning reference signal. In some embodiments, as described above, the Rx-Tx time difference measurement includes two definitions. In some embodiments, for the Rx-Tx time difference measurement, in the case where it is necessary to wait for the end of the sidelink positioning reference signal actually transmitted by the sidelink terminal to other sidelink terminals to determine a measurement result of the Rx-Tx time difference (definition 2), the third determination scheme is adopted to determine the measurement time. In some embodiments, the measurement scheme for the sidelink positioning reference signal corresponding to the third determination scheme includes a double-sided RTT measurement based on the Rx-Tx time difference. The double-sided RTT measurement may reduce the influence of frequency offset, and higher layer signaling may configure/instruct the sidelink terminal to measure N Rx-Tx time differences for one resource of the sidelink positioning reference signal, such as one sidelink positioning reference signal reception + N sidelink positioning reference signal transmissions, or one sidelink positioning reference signal transmission + N sidelink positioning reference signal receptions.

Exemplarily, FIG. 14 is a schematic diagram of a double-sided RTT measurement according to some exemplary embodiments of the present disclosure. As shown in FIG. 14, for sidelink terminal B, the SL PRS B transmission thereof corresponds to two SL PRS receptions, which are SL PRS A1 and SL PRS A2, respectively, and N=2 Rx-Tx time difference measurement results are reported. For device A, the SL PRS B reception thereof corresponds to two SL PRS transmissions, which are SL PRS A1 and SL PRS A2, respectively, and similarly, N=2 Rx-Tx time difference measurement results are also reported. Exemplarily, FIG. 15 is a schematic diagram of a double-sided RTT measurement according to some exemplary embodiments of the present disclosure. As shown in FIG. 15, the difference between FIGs. 15 and 14 is that N = 3. It should be noted that the order of SL PRS A1, SL PRS A2, SL PRS A3, and SL PRS B here is not limited; that is, SL PRS B may be before SL PRS A1 or after SL PRS A3, and both cases are supported.

The Rx-Tx time differences of sidelink terminal A are time differences Ra and Da, the Rx-Tx time differences of sidelink terminal B are time differences Db and Rb, and the transmission time of the SL PRS is Tf.

In some embodiments, the third determination scheme further includes the following two determination schemes.

**For Scheme 1:**

In some embodiments, the measurement parameter includes at least one of:

· a first parameter;
· a second parameter; or
· a third parameter.

The first parameter is used to reflect the interval between the $s^{th}$ and $(s+1)^{th}$ measurements (receptions) of the sidelink positioning reference signal by the sidelink terminal. s is a positive integer. The second parameter is used to reflect the time of the last measurement and transmission of the sidelink positioning reference signal by the sidelink terminal. The third parameter is used to reflect the number of times the sidelink terminal measures the sidelink positioning reference signal. Exemplarily, the first parameter is $T_{effect}$, the second parameter is $T_{last}$, and the third parameter is S.

In some embodiments, the sidelink terminal determines, based on a position difference between a first time-domain position and a second time-domain position as well as a first condition, a first parameter for the $s^{th}$ measurement of the sidelink positioning reference signal by the sidelink terminal. The first time-domain position is a time-domain position of a resource of a sidelink positioning reference signal measured (received) by the sidelink terminal for the $s^{th}$ time. The second time-domain position is a time-domain position of a resource of the sidelink positioning reference signal measured (received) by the sidelink terminal for the $(s+1)^{th}$ time. The first condition is used to limit the position difference to be greater than the sum of a duration of the $s^{th}$ measurement and the first measurement capability. The duration of the $s^{th}$ measurement is used to reflect the duration of the resource of the sidelink positioning reference signal measured by the sidelink terminal for the $s^{th}$ time. The first measurement capability includes a reception processing time or a maximum value of the reception processing time and a transmission processing time. The reception processing time is used to reflect the minimum processing time for the sidelink terminal to receive the resource of the sidelink positioning reference signal (corresponding to component 4 in Table 2), and the transmission processing time is used to reflect the minimum processing time for the sidelink terminal to determine the Rx-Tx time difference based on the resource of the transmitted sidelink positioning reference signal.

In some embodiments, the transmission processing time is different from the reception processing time. In some embodiments, the transmission processing time is the same as the reception processing time. In some embodiments, the transmission processing time is the same capability shared with the reception processing time.

Exemplarily, the above process is expressed as $T_{effect,s} = t_{s+1} - t_s$, and $T_{effect,s} > T_{slprs,dur,s} + T_{proc}$. $T_{effect,s}$ represents the first parameter of the $s^{th}$ measurement of the sidelink positioning reference signal by the sidelink terminal, $t_{s+1}$ represents the second time-domain position, $t_s$ represents the first time-domain position, $T_{slprs,dur,s}$ represents the duration of the resource of the sidelink positioning reference signal measured by the sidelink terminal for the $s^{th}$ time, and $T_{proc}$ represents the first measurement capability.

In some embodiments, Scheme 1 is applicable to the case where every N sidelink positioning reference signal receptions of the sidelink terminal correspond to one sidelink positioning reference signal transmission.

In some embodiments, the sidelink terminal determines the second parameter based on a sum of a duration of a last measurement and a first measurement capability. The duration of the last measurement is used to reflect the duration of the resource of the sidelink positioning reference signal measured and transmitted by the sidelink terminal for the last time, depending on whether the sidelink positioning reference signal is transmitted before received or received before transmitted by the sidelink terminal. The first measurement capability includes a reception processing time or a maximum value of the reception processing time and a transmission processing time. The reception processing time is used to reflect the minimum processing time for the sidelink terminal to receive the resource of the sidelink positioning reference signal, and the transmission processing time is used to reflect the minimum processing time for the sidelink terminal to determine the Rx-Tx time difference based on the resource of the transmitted sidelink positioning reference signal.

Exemplarily, the above process is expressed as: $T_{last} = T_{slprs,dur,S} + T_{proc}$. $T_{last}$ represents the second parameter, and $T_{slprs,dur,S}$ represents the duration (time duration) of resources of the sidelink positioning reference signal received and transmitted in the last measurement/last period/$S^{th}$ measurement by the sidelink terminal, depending on whether the sidelink positioning reference signal is transmitted before received or received before transmitted by the sidelink terminal. $T_{proc}$ represents the first measurement capability.

In some embodiments, the third parameter is positively correlated with at least one of the following parameters:

· a number of samples;
· a receive beam factor;
· a timing error group factor;
· a number of measurements;
· a scaling factor; or
· a configuration coefficient.

The number of samples is used to reflect a number of samples of the sidelink positioning reference signal sampled by the sidelink terminal, the receive beam factor is used to reflect a number of receive beams traversed by the sidelink terminal in a process of measuring the sidelink positioning reference signal, the timing error group factor is related to a timing error group adopted by the sidelink terminal for measuring the sidelink positioning reference signal, and the number of measurements is used to reflect a number of resources of the sidelink positioning reference signal measured by the sidelink terminal. The configuration coefficient includes a number of configured sidelink positioning reference signals to be measured by the sidelink terminal for a transmission of a same sidelink positioning reference signal, a number of configured sidelink positioning reference signals to be transmitted by the sidelink terminal for a reception of a same sidelink positioning reference signal, or a number of configured measurement results of an Rx-Tx time difference to be reported by the sidelink terminal. In some embodiments, the value of the third parameter is at least related to the number of samples. Exemplarily, the number of samples is denoted as $N_{sample}$, the receive beam factor is denoted as $N_{RxBeam}$, the timing error group factor is denoted as $k_{multiTEG}$, and the configuration coefficient is denoted as N. It should be noted that for the determination scheme for the scaling factor, reference may be made to relevant content in the first determination scheme described above, and details are not repeated herein in the embodiments of the present disclosure.

In some embodiments, the configuration coefficient is configured based on higher layer signaling. As N sidelink positioning reference signal resources need to be measured when the sidelink terminal transmits one resource of the sidelink positioning reference signal, the third parameter S needs to be further multiplied by N. For example, $S = N \times S1 \times S2 \times N_{sample} \times k_{multiTEG} \times N_{RxBeam}$.

In some embodiments, the sidelink terminal determines a measurement time according to the formula

$$T_{SL\ RSTD} = \left[ \sum_{s=1}^{S-1} T_{effect,s} + T_{last} \right]$$

after determining the first parameter, the second parameter, and the third parameter. $T_{SL\ RSTD}$ represents the calculated measurement time, S represents the third parameter, $T_{effect,s}$ represents the first parameter corresponding to the $s^{th}$ measurement, and $T_{last}$ represents the second parameter.

**For Scheme 2:**

In some embodiments, the measurement parameter includes at least one of:

· a first parameter;
· a second parameter; or
· a third parameter.

The first parameter is used to reflect the interval between resources of adjacent sidelink positioning reference signals of the sidelink terminal. The second parameter is used to reflect the time of the last measurement or transmission of the sidelink positioning reference signal by the sidelink terminal. The third parameter is used to reflect the number of resources of the sidelink positioning reference signal of the sidelink terminal. Exemplarily, the positioning reference signal of the sidelink terminal includes a received sidelink positioning reference signal and a transmitted sidelink positioning reference signal by the sidelink terminal during a measurement process. The adjacent sidelink positioning reference signals may be classified into the following cases: the transmitted sidelink positioning reference signal - the received sidelink positioning reference signal, the received sidelink positioning reference signal - the transmitted sidelink positioning reference signal, the transmitted sidelink positioning reference signal - the transmitted sidelink positioning reference signal, and the received sidelink positioning reference signal - the received sidelink positioning reference signal.

In some embodiments, the sidelink terminal determines the first parameter of the adjacent sidelink positioning reference signals based on a position difference between a first time-domain position and a second time-domain position as well as a first condition. The first time-domain position is a time-domain position of a resource of a preceding sidelink positioning reference signal among the adjacent sidelink positioning reference signals. The preceding sidelink positioning reference signal is a sidelink positioning reference signal received by the sidelink terminal or a sidelink positioning reference signal transmitted by the sidelink terminal. The second time-domain position is a time-domain position of a resource of a succeeding sidelink positioning reference signal among the adjacent sidelink positioning reference signals. The succeeding sidelink positioning reference signal is a sidelink positioning reference signal received by the sidelink terminal or a sidelink positioning reference signal transmitted by the sidelink terminal. The first condition is used to limit the position difference to be greater than a sum of a duration of the resource of the preceding sidelink positioning reference signal and a first measurement capability. The first measurement capability includes a reception processing time, a transmission processing time, or a maximum value of the reception processing time and the transmission processing time. The reception processing time is used to reflect the minimum processing time for the sidelink terminal to receive the resource of the sidelink positioning reference signal (corresponding to component 4 in Table 2), and the transmission processing time is used to reflect the minimum processing time for the sidelink terminal to determine the Rx-Tx time difference based on the resource of the transmitted sidelink positioning reference signal.

In some embodiments, the transmission processing time is different from the reception processing time. In some embodiments, the transmission processing time is the same as the reception processing time. In some embodiments, the transmission processing time is the same capability shared with the reception processing time.

Exemplarily, the above process is expressed as $T_{effect,s} = t_{s+1} - t_s$, and $T_{effect,s} > T_{slprs,dur,s} + T_{proc}$. $T_{effect,s}$ represents the first parameter corresponding to the $s^{th}$ and $(s+1)^{th}$ sidelink positioning reference signals of the sidelink terminal, $t_{s+1}$ represents the second time-domain position, $t_s$ represents the first time-domain position, $T_{slprs,dur,s}$ represents the duration of the resource of the $s^{th}$ sidelink positioning reference signal of the sidelink terminal, and $T_{proc}$ represents the first measurement capability.

In some embodiments, the sidelink terminal determines the second parameter based on a sum of a duration of a last measurement or transmission and a first measurement capability. The duration of the last measurement or transmission is used to reflect the duration of the resource of the sidelink positioning reference signal measured or transmitted by the sidelink terminal for the last time, and the first measurement capability includes a reception processing time, a transmission processing time, or a maximum value of the reception processing time and the transmission processing time. The reception processing time is used to reflect the minimum processing time for the sidelink terminal to receive the resource of the sidelink positioning reference signal, and the transmission processing time is used to reflect the minimum processing time for the sidelink terminal to determine the Rx-Tx time difference based on the resource of the transmitted sidelink positioning reference signal. For example, the sidelink terminal determines whether to adopt the reception processing time or the transmission processing time based on whether the sidelink positioning reference signal is actually received before transmitted or transmitted before received.

Exemplarily, the above process is expressed as: $T_{last} = T_{slprs,dur,S} + T_{proc}$. $T_{last}$ represents the second parameter, and $T_{slprs,dur,S}$ represents the duration (duration) of the resource of the sidelink positioning reference signal received or transmitted by the sidelink terminal in the last measurement/last period/$S^{th}$ measurement. $T_{proc}$ represents the first measurement capability.

In some embodiments, the third parameter is positively correlated with at least one of the following parameters:

· a number of samples;
· a receive beam factor;
· a timing error group factor;
· a number of measurements;
· a scaling factor; or
· a configuration coefficient + a first value.

The number of samples is used to reflect a number of samples of the sidelink positioning reference signal sampled by the sidelink terminal, the receive beam factor is used to reflect a number of receive beams traversed by the sidelink terminal in a process of measuring the sidelink positioning reference signal, the timing error group factor is related to a timing error group adopted by the sidelink terminal for measuring the sidelink positioning reference signal, and the number of measurements is used to reflect a number of resources of the sidelink positioning reference signal measured by the sidelink terminal. The configuration coefficient includes a number of configured sidelink positioning reference signals to be measured by the sidelink terminal for a transmission of a same sidelink positioning reference signal, a number of configured sidelink positioning reference signals to be transmitted by the sidelink terminal for a reception of a same sidelink positioning reference signal, or a number of configured measurement results of an Rx-Tx time difference to be reported by the sidelink terminal. Exemplarily, the number of samples is denoted as $N_{sample}$, the receive beam factor is denoted as $N_{RxBeam}$, the timing error group factor is denoted as $k_{multiTEG}$, and the configuration coefficient is denoted as N. It should be noted that for the determination scheme for the scaling factor, reference may be made to relevant content in the first determination scheme described above, and details are not repeated herein in the embodiments of the present disclosure.

In some embodiments, the configuration coefficient is configured based on higher layer signaling. In some embodiments, the first value is 1. S is multiplied by (N+1), where the coefficient (N+1) is used to indicate the total number of resources of the sidelink positioning reference signal transmitted and received by the sidelink terminal. For example, $S = (N+1) \times S1 \times S2 \times N_{sample} \times k_{multiTEG} \times N_{RxBeam}$.

In some embodiments, the sidelink terminal determines a measurement time according to the formula

$$T_{\text{SL RSTD}} = \left[ \sum_{s=1}^{S-1} T_{\text{effect},s} + T_{\text{last}} \right]$$ after determining the first parameter, the second parameter, and the third parameter. $T_{\text{SL RSTD}}$ represents the calculated measurement time, S represents the third parameter, $T_{\text{effect},s}$ represents the first parameter corresponding to the $s^{\text{th}}$ adjacent sidelink positioning reference signal, and $T_{\text{last}}$ represents the second parameter.

The processes mentioned in the above embodiments may be implemented as independent embodiments, such as the processes of determining the first parameter, the processes of determining the second parameter, and the processes of determining the third parameter, which are implemented separately as a measurement parameter determination method on the sidelink terminal side.

In summary, in the method according to the embodiments, the measurement parameter is determined based on the measurement capability of the sidelink terminal, and the measurement time of the sidelink positioning reference signal is determined based on the measurement parameter, thereby providing an implementation scheme for determining an Rx-Tx time difference-based double-sided RTT measurement time based on the measurement capability of the sidelink terminal. In addition, for sidelink terminals with different measurement capabilities, the determined measurement time matches the measurement capabilities of the sidelink terminals.

According to the method in the embodiments, the first parameter, the second parameter, and the third parameter are further determined based on the measurement capability, such that the parameters used for calculating the measurement time are determined based on the measurement capability, and the calculation process conform to the measurement capability of the terminal. In addition, the method according to the embodiments further provides determination schemes of the first parameter, the second parameter, and the third parameter. By determining the scaling factor of the third parameter in conjunction with the measurement capability of the sidelink terminal, a more reasonable measurement time is determined.

It should be noted that the sequence of the method processes in the embodiments of the present disclosure may be appropriately adjusted, and the processes may be increased or decreased according to the situation, and different processes may be freely combined to form a new embodiment. Any variations of the method easily derived by those skilled in the art within the technical scope disclosed by the present disclosure shall all fall within the scope of protection of the present disclosure and thus are not repeated herein. Moreover, the order of the different cases as described above does not have a preferred meaning, but is merely for the convenience of description.

FIG. 16 is a block diagram of an apparatus for determining a measurement time according to some exemplary embodiments of the present disclosure. The apparatus may be practiced as a sidelink terminal or a part of the sidelink terminal by software, hardware, or a combination thereof. The apparatus includes a determining module 1601.

The determining module 1601 is configured to determine a measurement parameter based on the measurement capability of a sidelink terminal. The measurement parameter is used for determining a measurement time of a sidelink positioning reference signal, and the measurement capability is used to reflect the capability of the sidelink terminal to measure the sidelink positioning reference signal. The sidelink positioning reference signal includes a reference signal used for positioning that is transmitted over a sidelink, for example, an SL PRS.

In some embodiments, according to the difference in the measurement quantity (measurement scheme) of the sidelink positioning reference signal, the determination of the measurement time includes the following three determination schemes.

**For the first determination scheme:**

In some embodiments, the measurement scheme for the sidelink positioning reference signal corresponding to the first determination scheme includes at least one of:

- · an RSTD measurement;
- · an RTOA measurement;
- · an RSRP measurement;
- · an RSRPP measurement;
- · an AOA measurement;
- · a ZOA measurement; or
- · an Rx-Tx time difference measurement.

The Rx-Tx time difference measurement is implemented by the sidelink terminal by receiving and transmitting the sidelink positioning reference signal. For example, sidelink terminal B needs to transmit the SL PRS to sidelink terminal A after receiving the SL PRS transmitted by sidelink terminal A such that a single-sided RTT value is measured. In some embodiments, the Rx-Tx time difference measurement includes two definitions: (1) the sidelink terminal determines the measurement result of the Rx-Tx time difference without an actual transmission of an SL PRS; (2) the sidelink terminal needs to wait for an actual transmission of an SL PRS to determine the Rx-Tx time difference measurement result. In some embodiments, for the Rx-Tx time difference measurement, in the case where it is not required to use an actual transmission time of the sidelink positioning reference signal to determine a measurement result of the Rx-Tx time difference (definition 1), that is, in the case where it is not necessary to consider the sidelink positioning reference signal actually transmitted by the sidelink terminal to another sidelink terminal, the first determination scheme is adopted to determine the measurement time.

In some embodiments, the measurement parameter includes at least one of:

· a first parameter;
· a second parameter; or
· a third parameter.

The first parameter is used to reflect the interval between the $s^{th}$ and $(s+1)^{th}$ measurements (receptions) of the sidelink positioning reference signal by the sidelink terminal. s is a positive integer and not greater than S. The second parameter is used to reflect the time of the last measurement of the sidelink positioning reference signal by the sidelink terminal. The third parameter is used to reflect the number of times the sidelink terminal measures the sidelink positioning reference signal. Exemplarily, the first parameter is $T_{effect}$, the second parameter is $T_{last}$, and the third parameter is S.

In some embodiments, the determining module 1601 is configured to determine, based on a position difference between a first time-domain position and a second time-domain position as well as a first condition, a first parameter of an $s^{th}$ measurement of the sidelink positioning reference signal by the sidelink terminal. The first time-domain position is a time-domain position of a resource of the sidelink positioning reference signal measured by the sidelink terminal for the $s^{th}$ time, the second time-domain position is a time-domain position of a resource of the sidelink positioning reference signal measured by the sidelink terminal for an $(s+1)^{th}$ time, the first condition is used to limit the position difference to be greater than a sum of a duration of the $s^{th}$ measurement and a first measurement capability, the duration of the $s^{th}$ measurement is used to reflect a duration of the resource of the sidelink positioning reference signal measured by the sidelink terminal for the $s^{th}$ time, and the first measurement capability is used to reflect a minimum processing time for the sidelink terminal to receive the resource of the sidelink positioning reference signal.

Exemplarily, the above process is expressed as $T_{effect,s} = t_{s+1} - t_s$, and $T_{effect,s} > T_{slprs,dur,s} + T_{proc}$. $T_{effect,s}$ represents the first parameter of the $s^{th}$ measurement of the sidelink positioning reference signal by the sidelink terminal, $t_{s+1}$ represents the second time-domain position, $t_s$ represents the first time-domain position, $T_{slprs,dur,s}$ represents the duration of the resource of the sidelink positioning reference signal measured by the sidelink terminal for the $s^{th}$ time, and $T_{proc}$ represents the first measurement capability (corresponding to component 4 in Table 2).

In some embodiments, in the case where a resource of a sidelink positioning reference signal of the next period that belongs to the same sidelink positioning reference signal resource group as one sidelink positioning reference signal appears during the processing time of the one sidelink positioning reference signal by the sidelink terminal, the sidelink terminal will discard that sidelink positioning reference signal. In some embodiments, for sidelink positioning reference signals within one time-domain unit (for example, a slot), whether the sidelink positioning reference signals belong to the same sidelink positioning reference signal resource is indicated by an ID. A plurality of periodic resources of the sidelink positioning reference signal transmitted by the same sidelink terminal may be regarded as one sidelink positioning reference signal resource group/set.

In some embodiments, in the case where the sidelink terminal only needs to measure one sidelink positioning reference signal resource group, $T_{slprs,dur}$ represents the time of one time-domain unit (for example, a slot). In the case where the measurement time is calculated in ms, one slot of 15 kHz corresponds to 1 ms, i.e., $T_{slprs,dur} = 1$ ms.

In some embodiments, in the case where the sidelink terminal needs to measure a plurality of sidelink positioning reference signal resource groups, $T_{slprs,dur}$ represents the total duration of the resources of the sidelink positioning reference signal processed each time. In this case, the value of $T_{slprs,dur}$ is the total duration of the plurality of resources of the sidelink positioning reference signal within each sampling/or each occasion/or each period, for example, from the start position of the slot of the first sidelink positioning reference signal resource to the end position of the slot of the last sidelink positioning reference signal resource, and any empty slots therebetween also need to be included. Similarly, the total duration may be converted into units such as ms according to the number of slots.

In some embodiments, the determining module 1601 is configured to determine the second parameter based on a sum of a duration of the last measurement and a first measurement capability. The duration of the last measurement is used to reflect a duration of the resource of the sidelink positioning reference signal measured by the sidelink terminal for the last time, and the first measurement capability is used to reflect a minimum processing time for the sidelink terminal to receive the resource of the sidelink positioning reference signal.

Exemplarily, the above process is expressed as: $T_{last} = T_{slprs,dur,S} + T_{proc}$. $T_{last}$ represents the second parameter, and $T_{slprs,dur,S}$ represents the duration (time duration) of resources of the sidelink positioning reference signal in the last measurement/last period/$S^{th}$ measurement by the sidelink terminal. For the determination scheme, reference may be made to the relevant content described above. $T_{proc}$ represents the first measurement capability (corresponding to component 4 in Table 2).

In some embodiments, the third parameter is positively correlated with at least one of the following parameters:

· a number of samples;
· a receive beam factor;
· a timing error group factor;
· a number of measurements; or
· a scaling factor.

The number of samples is used to reflect a number of samples of the sidelink positioning reference signal sampled by the sidelink terminal, the receive beam factor is used to reflect a number of receive beams traversed by the sidelink terminal in a process of measuring the sidelink positioning reference signal, the timing error group factor is related to a timing error group adopted by the sidelink terminal for measuring the sidelink positioning reference signal, and the number of measurements is used to reflect a number of resources of the sidelink positioning reference signal measured by the sidelink terminal. In some embodiments, the value of the third parameter is at least related to the number of samples.

Exemplarily, the number of samples is denoted as $N_{sample}$, and typically $N_{sample}$ is equal to 4 or 1, depending on the measurement capability of the sidelink terminal. The receive beam factor is denoted as $N_{RxBeam}$; for example, in the case where the sidelink positioning reference signal supports FR 2, $N_{RxBeam}$ is equal to 8, or the receive beam factor is an Rx beam sweeping factor parameter reported by the sidelink terminal. The timing error group factor is denoted as $k_{multiTEG}$, and reference may be made to the description of the DL PRS above. In some embodiments, for the determination of the two parameters $N_{RxBeam}$ and $k_{multiTEG}$, reference may be made to the measurement of the DL PRS; for example, in the case where the sidelink positioning reference signal also supports FR 2 or a TEG function, those in the DL PRS may be adopted.

In some embodiments, the sidelink terminal determines the scaling factor based on the configuration of the sidelink positioning reference signal that needs to be measured. For example, in the case where the number of resources of the activated sidelink positioning reference signal exceeds the measurement capability of the sidelink terminal at a moment, or in the case where the number of time-domain units (slots) carrying the activated sidelink positioning reference signal exceeds the measurement capability of the sidelink terminal at a moment, the measurement time needs to be further extended.

In some embodiments, the scaling factor is related to at least one of a second measurement capability and a third measurement capability of the sidelink terminal. The second measurement capability is used to reflect a maximum number of resources of an activated sidelink positioning reference signal that are supported and processed by the sidelink terminal, and the third measurement capability is used to reflect a maximum number of time-domain units carrying the activated sidelink positioning reference signal that are supported and processed by the sidelink terminal.

In some embodiments, the scaling factor includes a first scaling factor; the determining module 1601 is configured to determine the first scaling factor based on a ratio of first information to the second measurement capability, to determine the third parameter. The first information includes a number of configured resources of the sidelink positioning reference signal to be measured by the sidelink terminal. Exemplarily, the number of configured resources of the sidelink positioning reference signal to be measured by the sidelink terminal is denoted as $X\_cfg$, and the second measurement capability is denoted as $X\_ue$. Assuming that in a worst-case scenario where all sidelink positioning reference signals are activated simultaneously, the first scaling factor S1 is related to $(X\_cfg/X\_ue)$, for example, rounding up or rounding down $(X\_cfg/X\_ue)$, for example, $S1 = ceil(X\_cfg/X\_ue)$.

In some embodiments, the scaling factor includes a first scaling factor; the determining module 1601 is configured to determine the first scaling factor based on a ratio of second information to the second measurement capability, to determine the third parameter. The second information includes a number of actually simultaneously activated resources of the sidelink positioning reference signal, or a maximum value of the number of actually simultaneously activated resources of the sidelink positioning reference signal. Exemplarily, the number of actually simultaneously activated resources of the sidelink positioning reference signal is denoted as $X\_act$, the maximum value of the number of actually simultaneously activated resources of the sidelink positioning reference signal is denoted as $X\_act=max(X\_act, i)$, the second measurement capability is denoted as $X\_ue$, and the first scaling factor S1 is related to $(X\_act/X\_ue)$, for example, rounding up or rounding down $(X\_cfg/X\_ue)$, for example, $S1 = ceil(X\_act/X\_ue)$.

In some embodiments, the scaling factor includes a first scaling factor; the determining module 1601 is configured to determine the first scaling factor based on a ratio of third information to the second measurement capability, to determine the third parameter. The third information includes a minimum value in first information and fourth information, the first information includes a number of configured resources of the sidelink positioning reference signal to be measured by the sidelink terminal, the fourth information is determined based on fifth information and sixth information, the fifth information includes a number of time-domain units corresponding to a first measurement capability, the sixth information includes a maximum value of the number of resources of the sidelink positioning reference signal configured on each time-domain unit, and the first measurement capability is used to reflect a minimum processing time for the sidelink terminal to receive the resource of the sidelink positioning reference signal. Exemplarily, the third information is denoted as X_3 = min(X_cfg, (Npro + second value) * K), where K represents the maximum value of the number of resources of the sidelink positioning reference signal configured on each time-domain unit (slot). Npro represents the number of slots corresponding to $T_{proc}$ (ms) of the sidelink terminal. Here, it is assumed that the periodicity of the sidelink positioning reference signal is greater than the processing time of the sidelink terminal; otherwise, resources of a plurality of periods of the same sidelink positioning reference signal might reappear within the Npro processing delay. In some embodiments, the second value is 1, and in this case, the slot where the sidelink positioning reference signal itself is located is considered. The first scaling factor is related to (X_3/X_ue), for example, rounding up or rounding down (X_3/X_ue), for example, S1 = ceil(X_3/X_ue).

In some embodiments, the scaling factor includes a second scaling factor; the determining module 1601 is configured to determine the second scaling factor based on a ratio of seventh information to the third measurement capability, to determine the third parameter. The seventh information is used to reflect a number of configured time-domain units carrying the sidelink positioning reference signal, the seventh information is equal to first information, and the first information includes a number of configured resources of the sidelink positioning reference signal to be measured by the sidelink terminal. Exemplarily, the number of slots carrying the sidelink positioning reference signal is determined as Y_cfg=X_cfg based on the configuration, and the third measurement capability is denoted as Y_ue. Here, Y_cfg is acquired assuming a worst-case scenario where all resources of the sidelink positioning reference signal are scattered in different slots and are activated simultaneously. The second scaling factor S2 is related to (Y_cfg/Y_ue), for example, rounding up or rounding down (Y_cfg/Y_ue), for example, S2 = ceil(Y_cfg/Y_ue).

In some embodiments, the scaling factor includes a second scaling factor; the determining module 1601 is configured to determine the second scaling factor based on a ratio of eighth information to the third measurement capability, to determine the third parameter. The eighth information includes a number of actually simultaneously activated time-domain units corresponding to the sidelink positioning reference signal, or a maximum value of a number of actually simultaneously activated time-domain units corresponding to the sidelink positioning reference signal. Exemplarily, the number of actually simultaneously activated slots corresponding to the sidelink positioning reference signal is denoted as Y_act, the maximum value of the number of actually simultaneously activated slots corresponding to the sidelink positioning reference signal is denoted as Y_act=max(Y_act, i), and the second scaling factor S2 is related to (Y_act/Y_ue), for example, rounding up or rounding down (Y_act/Y_ue), for example, S2 = ceil(Y_act/Y_ue).

In some embodiments, the scaling factor includes a second scaling factor; the determining module 1601 is configured to determine the second scaling factor based on a ratio of ninth information to the third measurement capability, to determine the third parameter. The ninth information includes a minimum value in first information and information determined based on fifth information, the first information includes a number of configured resources of the sidelink positioning reference signal to be measured by the sidelink terminal, the fifth information includes a number of time-domain units corresponding to a first measurement capability, and the first measurement capability is used to reflect a minimum processing time for the sidelink terminal to receive the resource of the sidelink positioning reference signal. Exemplarily, based on the configuration, the number of slots containing the sidelink positioning reference signal (the ninth information) is determined as Y_cfg=min(X_cfg, Npro+1), and the third measurement capability is denoted as Y_ue. Y_cfg is acquired assuming a worst-case scenario where all resources of the sidelink positioning reference signal are scattered in different slots and are activated simultaneously. Npro represents the number of slots corresponding to $T_{proc}$ (ms) of the sidelink terminal. In some embodiments, a third value is 1. The second scaling factor S2 is related to (Y_cfg/Y_ue), for example, rounding up or rounding down (Y_cfg/Y_ue), for example, S2 = ceil and (Y_cfg/Y_ue).

In some embodiments, in the case where the third measurement capability of the sidelink terminal is not defined, or the third measurement capability defaults to be very large, S2 = 1.

In some embodiments, the first scaling factor and the second scaling factor are multiplied by the number of samples and/or other scaling factors used for determining the third parameter, thereby obtaining the third parameter. For example, $S = S1 \times S2 \times N_{sample} \times k_{multiTEG} \times N_{RxBeam}$, or $S = ceil(S1 \times S2 \times N_{sample} \times k_{multiTEG} \times N_{RxBeam})$. In this case, rounding is skipped first when calculating S1 or S2, and the rounding is performed after multiplying all scaling factors to calculate the final S.

In some embodiments, in the case where periodicities of resources of the sidelink positioning reference signal measured by the sidelink terminal are different, the above-mentioned parameters are determined based on the resource of the sidelink positioning reference signal with the maximum periodicity.

In some embodiments, the third parameter is related to the number of resources of the sidelink positioning reference signal measured by the sidelink terminal, for example, S = a number of resources of the measured SL PRS $\times$ $N_{sample}$. In this case, $T_{effect}$ represents a time interval between every two adjacent resources of the sidelink positioning reference signal.

In some embodiments, the sidelink terminal determines a measurement time according to the formula

$$T_{SL\ RSTD} = \left[ \sum_{s=1}^{S-1} T_{effect,s} + T_{last} \right]$$ after determining the first parameter, the second parameter, and the third parameter. $T_{SL\ RSTD}$ represents the calculated measurement time, S represents the third parameter, $T_{effect,s}$ represents the first parameter corresponding to the $s^{th}$ measurement, and $T_{last}$ represents the second parameter.

**For the second determination scheme:**

In some embodiments, the measurement scheme for the sidelink positioning reference signal corresponding to the second determination scheme includes the Rx-Tx time difference measurement. The Rx-Tx time difference measurement is implemented by the sidelink terminal by receiving and transmitting the sidelink positioning reference signal. In some embodiments, as described above, the Rx-Tx time difference measurement includes two definitions. In some embodiments, for the Rx-Tx time difference measurement, in the case where it is necessary to wait for the end of the sidelink positioning reference signal actually transmitted by the sidelink terminal to other sidelink terminals to determine a measurement result of the Rx-Tx time difference (definition 2), the second determination scheme is adopted to determine the measurement time. In some embodiments, the measurement scheme for the sidelink positioning reference signal corresponding to the second determination scheme includes a single-sided RTT measurement based on the Rx-Tx time difference.

In some embodiments, the second determination scheme further includes the following two determination schemes.

**For Scheme 1:**

In some embodiments, the measurement parameter includes at least one of:

· a first parameter;
· a second parameter; or
· a third parameter.

The first parameter is used to reflect the interval between the $s^{th}$ and $(s+1)^{th}$ measurements of the sidelink positioning reference signal by the sidelink terminal. s is a positive integer. The second parameter is used to reflect the time of the last measurement and transmission of the sidelink positioning reference signal by the sidelink terminal. The third parameter is used to reflect the number of times the sidelink terminal measures the sidelink positioning reference signal. Exemplarily, the first parameter is $T_{effect}$, the second parameter is $T_{last}$, and the third parameter is S.

In some embodiments, the determining module 1601 is configured to determine, based on a position difference between a first time-domain position and a second time-domain position as well as a first condition, a first parameter of an $s^{th}$ measurement of the sidelink positioning reference signal by the sidelink terminal. The first time-domain position is a time-domain position of a resource of the sidelink positioning reference signal measured by the sidelink terminal for the $s^{th}$ time, the second time-domain position is a time-domain position of a resource of the sidelink positioning reference signal measured by the sidelink terminal for an $(s+1)^{th}$ time, the first condition is used to limit the position difference to be greater than a sum of a duration of the $s^{th}$ measurement and a first measurement capability, the duration of the $s^{th}$ measurement is used to reflect a duration of the resource of the sidelink positioning reference signal measured by the sidelink terminal for the $s^{th}$ time, the first measurement capability includes a reception processing time or a maximum value of the reception processing time and a transmission processing time, the reception processing time is used to reflect a minimum processing time for the sidelink terminal to receive the resource of the sidelink positioning reference signal, and the transmission processing time is used to reflect a minimum processing time for the sidelink terminal to determine an Rx-Tx time difference based on the resource of the transmitted sidelink positioning reference signal.

In some embodiments, the transmission processing time is different from the reception processing time. In some embodiments, the transmission processing time is the same as the reception processing time. In some embodiments, the transmission processing time is the same capability shared with the reception processing time.

Exemplarily, the above process is expressed as $T_{effect,s} = t_{s+1} - t_s$, and $T_{effect,s} > T_{slprs,dur,s} + T_{proc}$. $T_{effect,s}$ represents the first parameter of the $s^{th}$ measurement of the sidelink positioning reference signal by the sidelink terminal, $t_{s+1}$ represents the second time-domain position, $t_s$ represents the first time-domain position, $T_{slprs,dur,s}$ represents the duration of the resource of the sidelink positioning reference signal measured by the sidelink terminal for the $s^{th}$ time, and $T_{proc}$ represents the first measurement capability.

In some embodiments, Scheme 1 is performed by the case where each reception of the sidelink positioning reference signal by the sidelink terminal corresponds to one transmission of the sidelink positioning reference signal, and/or the case where the time when the sidelink terminal transmits the sidelink positioning reference signal is not later than reception of the sidelink positioning reference signal in the next period.

In some embodiments, the determining module 1601 is configured to determine the second parameter based on a sum of a duration of the last measurement and a first measurement capability. The duration of the last measurement is used to reflect a duration of the resource of the sidelink positioning reference signal measured and transmitted by the sidelink terminal for the last time, the first measurement capability includes a reception processing time or a maximum value of the reception processing time and a transmission processing time, the reception processing time is used to reflect a minimum processing time for the sidelink terminal to receive the resource of the sidelink positioning reference signal, and the transmission processing time is used to reflect a minimum processing time for the sidelink terminal to determine an Rx-Tx time difference based on the resource of the transmitted sidelink positioning reference signal.

Exemplarily, the above process is expressed as: $T_{last} = T_{slprs,dur,S} + T_{proc}$. $T_{last}$ represents the second parameter, and $T_{slprs,dur,S}$ represents the duration (time duration) of resources of the sidelink positioning reference signal received and transmitted in the last measurement/last period/$S^{th}$ measurement by the sidelink terminal. $T_{proc}$ represents the first measurement capability. For example, in the case where sidelink terminal B receives the SL PRS of the last slot in slot #n and transmits the SL PRS of the last slot in slot #m, $T_{slprs,dur,S}$ is from a start time of slot #n to an end time of slot #m, that is, (m - n + 1) slots. In some embodiments, in the case where the SL PRS used for measuring the Rx-Tx time difference is transmitted before the reception of the SL PRS, i.e., m < n, $T_{slprs,dur,S}$ only needs to consider the duration of the received SL PRS. In this case, $T_{slprs,dur,S}$ represents (n - m + 1) slots. Reference may be made to relevant content in the first determination scheme.

In some embodiments, the third parameter is positively correlated with at least one of the following parameters:

- · a number of samples;
- · a receive beam factor;
- · a timing error group factor;
- · a number of measurements; or
- · a scaling factor.

The number of samples is used to reflect a number of samples of the sidelink positioning reference signal sampled by the sidelink terminal, the receive beam factor is used to reflect a number of receive beams traversed by the sidelink terminal in a process of measuring the sidelink positioning reference signal, the timing error group factor is related to a timing error group adopted by the sidelink terminal for measuring the sidelink positioning reference signal, and the number of measurements is used to reflect a number of resources of the sidelink positioning reference signal measured by the sidelink terminal. In some embodiments, the value of the third parameter is at least related to the number of samples. Exemplarily, the number of samples is denoted as $N_{sample}$, the receive beam factor is denoted as $N_{RxBeam}$, and the timing error group factor is denoted as $k_{multiTEG}$. It should be noted that for the determination scheme for the scaling factor, reference may be made to relevant content in the first determination scheme described above, and details are not repeated herein in the embodiments of the present disclosure.

In some embodiments, the sidelink terminal determines a measurement time according to the formula

$$T_{SL\ RSTD} = \left[ \sum_{s=1}^{S-1} T_{effect,s} + T_{last} \right]$$

after determining the first parameter, the second parameter, and the third parameter. $T_{SL\ RSTD}$ represents the calculated measurement time, S represents the third parameter, $T_{effect,s}$ represents the first parameter corresponding to the $s^{th}$ measurement, and $T_{last}$ represents the second parameter.

**For Scheme 2:**

In some embodiments, the measurement parameter includes at least one of:

- · a first parameter;
- · a second parameter; or
- · a third parameter.

The first parameter is used to reflect the interval between resources of adjacent sidelink positioning reference signals of the sidelink terminal. The second parameter is used to reflect the time of the last measurement or transmission of the sidelink positioning reference signal by the sidelink terminal. The third parameter is used to reflect the number of resources of the sidelink positioning reference signal of the sidelink terminal. Exemplarily, the positioning reference signal of the sidelink terminal includes a received sidelink positioning reference signal and a transmitted sidelink positioning reference signal by the sidelink terminal during a measurement process. The adjacent sidelink positioning reference signals may be classified into the following cases: the transmitted sidelink positioning reference signal - the received sidelink positioning reference signal, the received sidelink positioning reference signal - the transmitted sidelink positioning reference signal, the transmitted sidelink positioning reference signal - the transmitted sidelink positioning reference signal, and the received sidelink positioning reference signal - the received sidelink positioning reference signal.

In some embodiments, the determining module 1601 is configured to determine a first parameter of adjacent sidelink positioning reference signals based on a position difference between a first time-domain position and a second time-domain position as well as a first condition. The first time-domain position is a time-domain position of a resource of a preceding sidelink positioning reference signal among the adjacent sidelink positioning reference signals, the second time-domain position is a time-domain position of a resource of a succeeding sidelink positioning reference signal among the adjacent sidelink positioning reference signals, the first condition is used to limit the position difference to be greater than a sum of a duration of the resource of the preceding sidelink positioning reference signal and a first measurement capability, the first measurement capability includes a reception processing time, a transmission processing time, or a maximum value of the reception processing time and the transmission processing time, the reception processing time is used to reflect a minimum processing time for the sidelink terminal to receive the resource of the sidelink positioning reference signal, and the transmission processing time is used to reflect a minimum processing time for the sidelink terminal to determine an Rx-Tx time difference based on the resource of the transmitted sidelink positioning reference signal.

In some embodiments, the transmission processing time is different from the reception processing time. In some embodiments, the transmission processing time is the same as the reception processing time. In some embodiments, the transmission processing time is the same capability shared with the reception processing time.

Exemplarily, the above process is expressed as $T_{effect,s} = t_{s+1} - t_s$, and $T_{effect,s} > T_{slprs,dur,s} + T_{proc}$. $T_{effect,s}$ represents the first parameter corresponding to the $s^{th}$ and $(s+1)^{th}$ sidelink positioning reference signals of the sidelink terminal, $t_{s+1}$ represents the second time-domain position, $t_s$ represents the first time-domain position, $T_{slprs,dur,s}$ represents the duration of the resource of the $s^{th}$ sidelink positioning reference signal of the sidelink terminal, and $T_{proc}$ represents the first measurement capability.

In some embodiments, the determining module 1601 is configured to determine the second parameter based on a sum of a duration of the last measurement or transmission and a first measurement capability. The duration of the last measurement or transmission is used to reflect a duration of the resource of the sidelink positioning reference signal measured or transmitted by the sidelink terminal for the last time, the first measurement capability includes a reception processing time, a transmission processing time, or a maximum value of the reception processing time and the transmission processing time, the reception processing time is used to reflect a minimum processing time for the sidelink terminal to receive the resource of the sidelink positioning reference signal, and the transmission processing time is used to reflect a minimum processing time for the sidelink terminal to determine an Rx-Tx time difference based on the resource of the transmitted sidelink positioning reference signal.

Exemplarily, the above process is expressed as: $T_{last} = T_{slprs,dur,S} + T_{proc}$. $T_{last}$ represents the second parameter, and $T_{slprs,dur,S}$ represents the duration (time duration) of the resource of the sidelink positioning reference signal received or transmitted by the sidelink terminal in the last measurement/last period/$S^{th}$ measurement. $T_{proc}$ represents the first measurement capability.

In some embodiments, the third parameter is positively correlated with at least one of the following parameters:

· a number of samples;
· a receive beam factor;
· a timing error group factor;
· a number of measurements;
· a scaling factor; or
· a specified coefficient.

The number of samples is used to reflect a number of samples of the sidelink positioning reference signal sampled by the sidelink terminal, the receive beam factor is used to reflect a number of receive beams traversed by the sidelink terminal in a process of measuring the sidelink positioning reference signal, the timing error group factor is related to a timing error group adopted by the sidelink terminal for measuring the sidelink positioning reference signal, and the number of measurements is used to reflect a number of resources of the sidelink positioning reference signal measured by the sidelink terminal. In some embodiments, the value of the third parameter is at least related to the number of samples. Exemplarily, the number of samples is denoted as $N_{sample}$, the receive beam factor is denoted as $N_{RxBeam}$, and the timing error group factor is denoted as $k_{multiTEG}$. It should be noted that for the determination scheme for the scaling factor, reference may be made to relevant content in the first determination scheme described above, and details are not repeated herein in the embodiments of the present disclosure.

In some embodiments, the specified coefficient is 2. Exemplarily, the calculation method of the third parameter is $S = 2 \times S1 \times S2 \times N_{sample} \times k_{multiTEG} \times N_{RxBeam}$, which is considered as the specified coefficient scaling up S by a factor of 2, that is, increasing the number of measurements by 2 times. This is used to reflect that transmission and reception corresponding to the measurement of the sidelink terminal each correspond to one resource of the sidelink positioning reference signal.

In some embodiments, the sidelink terminal determines a measurement time according to the formula

$$T_{SL\,RSTD} = \left[ \sum_{s=1}^{S-1} T_{effect,s} + T_{last} \right]$$ determining the first parameter, the second parameter, and the third parameter.

$T_{SL\,RSTD}$ represents the calculated measurement time, S represents the third parameter, $T_{effect,s}$ represents the first parameter corresponding to the $s^{th}$ adjacent sidelink positioning reference signal, and $T_{last}$ represents the second parameter.

**For the third determination scheme:**

In some embodiments, the measurement scheme for the sidelink positioning reference signal corresponding to the third determination scheme includes the Rx-Tx time difference measurement. The Rx-Tx time difference measurement is implemented by the sidelink terminal by receiving and transmitting the sidelink positioning reference signal. In some embodiments, as described above, the Rx-Tx time difference measurement includes two definitions. In some embodiments, for the Rx-Tx time difference measurement, in the case where it is necessary to wait for the end of the sidelink positioning reference signal actually transmitted by the sidelink terminal to other sidelink terminals to determine a measurement result of the Rx-Tx time difference (definition 2), the third determination scheme is adopted to determine the measurement time. In some embodiments, the measurement scheme for the sidelink positioning reference signal corresponding to the third determination scheme includes a double-sided RTT measurement based on the Rx-Tx time difference. The double-sided RTT measurement may reduce the influence of frequency offset, and higher layer signaling may configure/instruct the sidelink terminal to measure N Rx-Tx time differences for one resource of the sidelink positioning reference signal, such as one sidelink positioning reference signal reception + N sidelink positioning reference signal transmissions, or one sidelink positioning reference signal transmission + N sidelink positioning reference signal receptions.

In some embodiments, the third determination scheme further includes the following two determination schemes.

**For Scheme 1:**

In some embodiments, the measurement parameter includes at least one of:

- · a first parameter;
- · a second parameter; or
- · a third parameter.

The first parameter is used to reflect the interval between the $s^{th}$ and $(s+1)^{th}$ measurements (receptions) of the sidelink positioning reference signal by the sidelink terminal. s is a positive integer. The second parameter is used to reflect the time of the last measurement and transmission of the sidelink positioning reference signal by the sidelink terminal. The third parameter is used to reflect the number of times the sidelink terminal measures the sidelink positioning reference signal. Exemplarily, the first parameter is $T_{effect}$, the second parameter is $T_{last}$, and the third parameter is S.

In some embodiments, the determining module 1601 is configured to determine, based on a position difference between a first time-domain position and a second time-domain position as well as a first condition, a first parameter of an $s^{th}$ measurement of the sidelink positioning reference signal by the sidelink terminal. The first time-domain position is a time-domain position of a resource of the sidelink positioning reference signal measured by the sidelink terminal for the $s^{th}$ time, the second time-domain position is a time-domain position of a resource of the sidelink positioning reference signal measured by the sidelink terminal for an $(s+1)^{th}$ time, the first condition is used to limit the position difference to be greater than a sum of a duration of the $s^{th}$ measurement and the first measurement capability, the duration of the $s^{th}$ measurement is used to reflect a duration of the resource of the sidelink positioning reference signal measured by the sidelink terminal for the $s^{th}$ time, the first measurement capability includes a reception processing time or a maximum value of the reception processing time and a transmission processing time, the reception processing time is used to reflect a minimum processing time for the sidelink terminal to receive the resource of the sidelink positioning reference signal, and the transmission processing time is used to reflect a minimum processing time for the sidelink terminal to determine an Rx-Tx time difference based on the resource of the transmitted sidelink positioning reference signal.

In some embodiments, the transmission processing time is different from the reception processing time. In some embodiments, the transmission processing time is the same as the reception processing time. In some embodiments, the transmission processing time is the same capability shared with the reception processing time.

Exemplarily, the above process is expressed as $T_{effect,s} = t_{s+1} - t_s$, and $T_{effect,s} > T_{slprs,dur,s} + T_{proc}$. $T_{effect,s}$ represents the first parameter of the $s^{th}$ measurement of the sidelink positioning reference signal by the sidelink terminal, $t_{s+1}$ represents the second time-domain position, $t_s$ represents the first time-domain position, $T_{slprs,dur,s}$ represents the duration of the resource of the sidelink positioning reference signal measured by the sidelink terminal for the $s^{th}$ time, and

$T_{proc}$ represents the first measurement capability.

In some embodiments, Scheme 1 is applicable to the case where every N sidelink positioning reference signal receptions of the sidelink terminal correspond to one sidelink positioning reference signal transmission.

In some embodiments, the determining module 1601 is configured to determine the second parameter based on a sum of a duration of the last measurement and a first measurement capability. The duration of the last measurement is used to reflect a duration of the resource of the sidelink positioning reference signal measured and transmitted by the sidelink terminal for the last time, the first measurement capability includes a reception processing time or a maximum value of the reception processing time and a transmission processing time, the reception processing time is used to reflect a minimum processing time for the sidelink terminal to receive the resource of the sidelink positioning reference signal, and the transmission processing time is used to reflect a minimum processing time for the sidelink terminal to determine an Rx-Tx time difference based on the resource of the transmitted sidelink positioning reference signal.

Exemplarily, the above process is expressed as: $T_{last} = T_{slpts,dur,S} + T_{proc}$. $T_{last}$ represents the second parameter, and $T_{slprs,dur,S}$ represents the duration (time duration) of resources of the sidelink positioning reference signal received and transmitted in the last measurement/last period/$S^{th}$ measurement by the sidelink terminal, depending on whether the sidelink positioning reference signal is transmitted before received or received before transmitted by the sidelink terminal. $T_{proc}$ represents the first measurement capability.

In some embodiments, the third parameter is positively correlated with at least one of the following parameters:

- a number of samples;
- a receive beam factor;
- a timing error group factor;
- a number of measurements;
- a scaling factor; or
- a configuration coefficient.

The number of samples is used to reflect a number of samples of the sidelink positioning reference signal sampled by the sidelink terminal, the receive beam factor is used to reflect a number of receive beams traversed by the sidelink terminal in a process of measuring the sidelink positioning reference signal, the timing error group factor is related to a timing error group adopted by the sidelink terminal for measuring the sidelink positioning reference signal, and the number of measurements is used to reflect a number of resources of the sidelink positioning reference signal measured by the sidelink terminal. The configuration coefficient includes a number of configured sidelink positioning reference signals to be measured by the sidelink terminal for a transmission of a same sidelink positioning reference signal, a number of configured sidelink positioning reference signals to be transmitted by the sidelink terminal for a reception of a same sidelink positioning reference signal, or a number of configured measurement results of an Rx-Tx time difference to be reported by the sidelink terminal. In some embodiments, the value of the third parameter is at least related to the number of samples. Exemplarily, the number of samples is denoted as $N_{sample}$, the receive beam factor is denoted as $N_{RxBeam}$, the timing error group factor is denoted as $k_{multiTEG}$, and the configuration coefficient is denoted as N. It should be noted that for the determination scheme for the scaling factor, reference may be made to relevant content in the first determination scheme described above, and details are not repeated herein in the embodiments of the present disclosure.

In some embodiments, the configuration coefficient is configured based on higher layer signaling. As N sidelink positioning reference signal resources need to be measured when the sidelink terminal transmits one resource of the sidelink positioning reference signal, the third parameter S needs to be further multiplied by N. For example, $S = N \times S1 \times S2 \times N_{sample} \times k_{multiTEG} \times N_{RxBeam}$.

In some embodiments, the sidelink terminal determines a measurement time according to the formula

$$T_{SL\ RSTD} = \left[ \sum_{s=1}^{S-1} T_{effect,s} + T_{last} \right]$$ after determining the first parameter, the second parameter, and the third parameter. Where $T_{SL\ RSTD}$ represents the calculated measurement time, S represents the third parameter, $T_{effect,s}$ represents the first parameter corresponding to the $s^{th}$ measurement, and $T_{last}$ represents the second parameter.

**For Scheme 2:**

In some embodiments, the measurement parameter includes at least one of:

- a first parameter;
- a second parameter; or
- a third parameter.

The first parameter is used to reflect the interval between resources of adjacent sidelink positioning reference signals of the sidelink terminal. The second parameter is used to reflect the time of the last measurement or transmission of the sidelink positioning reference signal by the sidelink terminal. The third parameter is used to reflect the number of resources of the sidelink positioning reference signal of the sidelink terminal. Exemplarily, the positioning reference signal of the sidelink terminal includes a received sidelink positioning reference signal and a transmitted sidelink positioning reference signal by the sidelink terminal during a measurement process. The adjacent sidelink positioning reference signals may be classified into the following cases: the transmitted sidelink positioning reference signal - the received sidelink positioning reference signal, the received sidelink positioning reference signal - the transmitted sidelink positioning reference signal, the transmitted sidelink positioning reference signal - the transmitted sidelink positioning reference signal, and the received sidelink positioning reference signal - the received sidelink positioning reference signal.

In some embodiments, the determining module 1601 is configured to determine a first parameter of adjacent sidelink positioning reference signals based on a position difference between a first time-domain position and a second time-domain position as well as a first condition. The first time-domain position is a time-domain position of a resource of a preceding sidelink positioning reference signal among the adjacent sidelink positioning reference signals, the second time-domain position is a time-domain position of a resource of a succeeding sidelink positioning reference signal among the adjacent sidelink positioning reference signals, the first condition is used to limit the position difference to be greater than a sum of a duration of the resource of the preceding sidelink positioning reference signal and a first measurement capability, the first measurement capability includes a reception processing time, a transmission processing time, or a maximum value of the reception processing time and the transmission processing time, the reception processing time is used to reflect a minimum processing time for the sidelink terminal to receive the resource of the sidelink positioning reference signal, and the transmission processing time is used to reflect a minimum processing time for the sidelink terminal to determine an Rx-Tx time difference based on the resource of the transmitted sidelink positioning reference signal.

In some embodiments, the transmission processing time is different from the reception processing time. In some embodiments, the transmission processing time is the same as the reception processing time. In some embodiments, the transmission processing time is the same capability shared with the reception processing time.

Exemplarily, the above process is expressed as $T_{effect,s} = t_{s+1} - t_s$, and $T_{effect,s} > T_{slprs,dur,s} + T_{proc}$. $T_{effect,s}$ represents the first parameter corresponding to the $s^{th}$ and $(s+1)^{th}$ sidelink positioning reference signals of the sidelink terminal, $t_{s+1}$ represents the second time-domain position, $t_s$ represents the first time-domain position, $T_{slprs,dur,s}$ represents the duration of the resource of the $s^{th}$ sidelink positioning reference signal of the sidelink terminal, and $T_{proc}$ represents the first measurement capability.

In some embodiments, the determining module 1601 is configured to determine the second parameter based on a sum of a duration of the last measurement or transmission and a first measurement capability. The duration of the last measurement or transmission is used to reflect a duration of the resource of the sidelink positioning reference signal measured or transmitted by the sidelink terminal for the last time, the first measurement capability includes a reception processing time, a transmission processing time, or a maximum value of the reception processing time and the transmission processing time, the reception processing time is used to reflect a minimum processing time for the sidelink terminal to receive the resource of the sidelink positioning reference signal, and the transmission processing time is used to reflect a minimum processing time for the sidelink terminal to determine an Rx-Tx time difference based on the resource of the transmitted sidelink positioning reference signal.

Exemplarily, the above process is expressed as: $T_{last} = T_{slprs,dur,S} + T_{proc}$. $T_{last}$ represents the second parameter, and $T_{slprs,dur,S}$ represents the duration (time duration) of the resource of the sidelink positioning reference signal received or transmitted by the sidelink terminal in the last measurement/last period/$S^{th}$ measurement. $T_{proc}$ represents the first measurement capability.

In some embodiments, the third parameter is positively correlated with at least one of the following parameters:

· a number of samples;
· a receive beam factor;
· a timing error group factor;
· a number of measurements;
· a scaling factor; or
· a configuration coefficient + a first value.

The number of samples is used to reflect a number of samples of the sidelink positioning reference signal sampled by the sidelink terminal, the receive beam factor is used to reflect a number of receive beams traversed by the sidelink terminal in a process of measuring the sidelink positioning reference signal, the timing error group factor is related to a timing error group adopted by the sidelink terminal for measuring the sidelink positioning reference signal, and the number of measurements is used to reflect a number of resources of the sidelink positioning reference signal measured by the sidelink terminal. The configuration coefficient includes a number of configured sidelink positioning reference signals to be measured by the sidelink terminal for a transmission of a same sidelink positioning reference signal, a number of configured sidelink positioning reference signals to be transmitted by the sidelink terminal for a reception of a same sidelink positioning reference signal, or a number of configured measurement results of an Rx-Tx time difference to be reported by the sidelink terminal. Exemplarily, the number of samples is denoted as $N_{sample}$, the receive beam factor is denoted as $N_{RxBeam}$, the timing error group factor is denoted as $k_{multiTEG}$, and the configuration coefficient is denoted as N. It should be noted that for the determination scheme for the scaling factor, reference may be made to relevant content in the first determination scheme described above, and details are not repeated herein in the embodiments of the present disclosure.

In some embodiments, the configuration coefficient is configured based on higher layer signaling. In some embodiments, the first value is 1. S is multiplied by (N+1), where the coefficient (N+1) is used to indicate the total number of resources of the sidelink positioning reference signal transmitted and received by the sidelink terminal. For example, $S = (N+1) \times S1 \times S2 \times N_{sample} \times k_{multiTEG} \times N_{RxBeam}$.

In some embodiments, the sidelink terminal determines a measurement time according to the formula $T_{SL\ RSTD} = \left[ \sum_{s=1}^{S-1} T_{effect,s} + T_{last} \right]$ after determining the first parameter, the second parameter, and the third parameter. $T_{SL\ RSTD}$ represents the calculated measurement time, S represents the third parameter, $T_{effect,s}$ represents the first parameter corresponding to the $s^{th}$ adjacent sidelink positioning reference signal, and $T_{last}$ represents the second parameter.

In summary, in the apparatus according to the embodiments, the measurement parameter is determined based on the measurement capability of the sidelink terminal, and the measurement time of the sidelink positioning reference signal is determined based on the measurement parameter, thereby providing an implementation scheme for determining the measurement time of the sidelink positioning reference signal based on the measurement capability of the sidelink terminal. In addition, for sidelink terminals with different measurement capabilities, the determined measurement time matches the measurement capabilities of the sidelink terminals.

It should be noted that in the case where the apparatus according to the above embodiments implements the functions thereof, the division of the functional modules is merely exemplary. In practical applications, the above functions may be assigned to different functional modules according to actual needs; that is, the internal structure of the device may be divided into different functional modules, so as to implement all or a part of the above functions.

With regard to the apparatus in the above embodiments, the specific manner in which each module performs the operation has been described in detail in the embodiments related to the method and will not be described in detail herein.

FIG. 17 is a schematic structural diagram of a communication device according to some exemplary embodiments of the present disclosure. The communication device is a sidelink terminal, and the communication device 1700 includes a processor 1701, a receiver 1702, a transmitter 1703, a memory 1704, and a bus 1705.

The processor 1701 includes one or more processing cores, and the processor 1701 performs various functional applications and information processing by running software programs and modules.

The receiver 1702 and the transmitter 1703 may be practiced as a communication assembly, which may be a communication chip.

The memory 1704 is connected to the processor 1701 via the bus 1705. The memory 1704 is configured to store at least one instruction, and the processor 1701 is configured to execute the at least one instruction to perform the processes in the above method embodiments.

In addition, the memory 1704 may be implemented by any type or combination of volatile or non-volatile storage devices including, but not limited to: magnetic or optical disks, electrically erasable programmable read-only memories (EEPROMs), erasable programmable read-only memories (EPROMs), static random access memories (SRAMs), read-only memories (ROMs), magnetic memories, flash memories, and programmable read-only memories (PROMs).

In some embodiments, the processor 1701 is configured to determine a measurement parameter based on the measurement capability of the sidelink terminal. The measurement parameter is used for determining a measurement time of a sidelink positioning reference signal, and the measurement capability is used to reflect the capability of the sidelink terminal to measure the sidelink positioning reference signal. In some embodiments, the transmitter 1703 is configured to perform processes involving transmitting in the method embodiments, such as the process of transmitting the sidelink positioning reference signal. In some embodiments, the receiver 1702 is configured to perform processes involving receiving in the method embodiments, such as the process of receiving the sidelink positioning reference signal.

In some embodiments, the receiver 1702 independently receives signals/data, or the processor 1701 controls the receiver 1702 to receive signals/data, or the processor 1701 requests the receiver 1702 to receive signals/data, or the processor 1701 cooperates with the receiver 1702 to receive signals/data.

In some embodiments, the transmitter 1703 independently transmits signals/data, or the processor 1701 controls the transmitter 1703 to transmit signals/data, or the processor 1701 requests the transmitter 1703 to transmit signals/data, or the processor 1701 cooperates with the transmitter 1703 to transmit signals/data.

In some embodiments, the processor 1701 and the receiver 1702 are practiced as one module, or the processor 1701 is practiced as a part of the receiver 1702. In some embodiments, the receiver 1702 is practiced as a receiver unit. In some embodiments, the receiver unit includes or does not include the processor 1701. In some embodiments, the processor 1701 and the transmitter 1703 are practiced as one module, or the processor 1701 is practiced as a part of the transmitter 1703. In some embodiments, the transmitter 1703 is practiced as a transmitter unit. In some embodiments, the receiver unit includes or does not include the processor 1701.

In some exemplary embodiments, a computer-readable storage medium is further provided. The computer-readable storage medium stores at least one instruction, at least one program, a code set, or an instruction set. The at least one instruction, the at least one program, the code set, or the instruction set, when loaded and executed by the processor, causes the processor to perform the method for determining the measurement time according to the above method embodiments.

In some exemplary embodiments, a chip is further provided. The chip includes programmable logic circuitry and/or one or more program instructions. The chip, when running the programmable logic circuitry and/or the one or more program instructions on a communication device, causes the communication device to perform the method for determining the measurement time according to the above method embodiments.

In some exemplary embodiments, a computer program product is further provided. The computer program product, when running on a processor of a computer device, causes the computer device to perform the method for determining the measurement time as described above.

In some exemplary embodiments, a computer program is further provided. The computer program includes one or more computer instructions. The one or more computer instructions, when loaded and executed by a processor of a computer device, cause the computer device to perform the method for determining the measurement time as described above.

Those skilled in the art should recognize that in the one or more examples described above, the functions described in the embodiments of the present disclosure may be implemented using hardware, software, firmware, or any combination thereof. The functions, when implemented using software, are stored in a computer-readable medium or transmitted as one or more instructions or codes on the computer-readable medium. The computer-readable medium includes a computer storage medium and a communication medium, where the communication medium includes any medium that facilitates the transfer of a computer program from one place to another. The storage medium is any available medium that is accessible by a general-purpose or special-purpose computer.

Described above are merely exemplary embodiments of the present disclosure and are not intended to limit the present disclosure. Any modifications, equivalent substitutions, improvements, and the like, made within the spirit and principle of the present disclosure should fall within the protection scope of the present disclosure.

**Claims**

1. A method for determining a measurement time, performed by a sidelink terminal, the method comprising:
   determining a measurement parameter based on a measurement capability of the sidelink terminal; wherein the measurement parameter is used for determining a measurement time of a sidelink positioning reference signal, and the measurement capability is used to reflect a capability of the sidelink terminal to measure the sidelink positioning reference signal.

2. The method according to claim 1, wherein the measurement parameter comprises at least one of:

   a first parameter;
   a second parameter; or
   a third parameter;
   wherein the first parameter is used to reflect an interval between an $s^{th}$ measurement and an $(s+1)^{th}$ measurement of the sidelink positioning reference signal by the sidelink terminal, s being a positive integer; the second parameter is used to reflect a time of a last measurement of the sidelink positioning reference signal by the sidelink terminal; and the third parameter is used to reflect a number of times the sidelink terminal measures the sidelink positioning reference signal.

3. The method according to claim 2, wherein determining the measurement parameter based on the measurement capability of the sidelink terminal comprises:
   determining, based on a position difference between a first time-domain position and a second time-domain position as well as a first condition, the first parameter for the $s^{th}$ measurement of the sidelink positioning reference signal by the sidelink terminal; wherein the first time-domain position is a time-domain position of a resource of the sidelink positioning reference signal measured by the sidelink terminal for an $s^{th}$ time, the second time-domain position is a time-domain position of a resource of the sidelink positioning reference signal measured by the sidelink terminal for an

$(s+1)^{th}$ time, and the first condition is used to limit the position difference to be greater than a sum of a duration of the $s^{th}$ measurement and a first measurement capability, wherein the duration of the $s^{th}$ measurement is used to reflect a duration of the resource of the sidelink positioning reference signal measured by the sidelink terminal for the $s^{th}$ time, and the first measurement capability is used to reflect a minimum processing time for the sidelink terminal to receive the resource of the sidelink positioning reference signal.

**4.** The method according to claim 2 or 3, wherein determining the measurement parameter based on the measurement capability of the sidelink terminal comprises:
determining the second parameter based on a sum of a duration of the last measurement and a first measurement capability; wherein the duration of the last measurement is used to reflect a duration of a resource of the sidelink positioning reference signal measured by the sidelink terminal for a last time, and the first measurement capability is used to reflect a minimum processing time for the sidelink terminal to receive the resource of the sidelink positioning reference signal.

**5.** The method according to any one of claims 2 to 4, wherein the third parameter is positively correlated with at least one of following parameters:

a number of samples;
a receive beam factor;
a timing error group factor;
a number of measurements; or
a scaling factor;
wherein the number of samples is used to reflect a number of samples of the sidelink positioning reference signal sampled by the sidelink terminal, the receive beam factor is used to reflect a number of receive beams traversed by the sidelink terminal in a process of measuring the sidelink positioning reference signal, the timing error group factor is related to a timing error group adopted by the sidelink terminal for measuring the sidelink positioning reference signal, and the number of measurements is used to reflect a number of resources of the sidelink positioning reference signal measured by the sidelink terminal.

**6.** The method according to claim 5, wherein the scaling factor is related to at least one of a second measurement capability and a third measurement capability of the sidelink terminal;
wherein the second measurement capability is used to reflect a maximum number of resources of an activated sidelink positioning reference signal that are supported and processed by the sidelink terminal, and the third measurement capability is used to reflect a maximum number of time-domain units carrying the activated sidelink positioning reference signal that are supported and processed by the sidelink terminal.

**7.** The method according to claim 6, wherein the scaling factor comprises a first scaling factor; and
determining the measurement parameter based on the measurement capability of the sidelink terminal comprises:
determining the first scaling factor based on a ratio of first information to the second measurement capability, to determine the third parameter; wherein the first information comprises a number of configured resources of the sidelink positioning reference signal to be measured by the sidelink terminal.

**8.** The method according to claim 6 or 7, wherein the scaling factor comprises a first scaling factor; and
determining the measurement parameter based on the measurement capability of the sidelink terminal comprises:
determining the first scaling factor based on a ratio of second information to the second measurement capability, to determine the third parameter; wherein the second information comprises a number of actually simultaneously activated resources of the sidelink positioning reference signal, or a maximum value of the number of actually simultaneously activated resources of the sidelink positioning reference signal.

**9.** The method according to any one of claims 6 to 8, wherein the scaling factor comprises a first scaling factor; and
determining the measurement parameter based on the measurement capability of the sidelink terminal comprises:
determining the first scaling factor based on a ratio of third information to the second measurement capability, to determine the third parameter; wherein the third information comprises a minimum value in first information and fourth information, wherein the first information comprises a number of configured resources of the sidelink positioning reference signal to be measured by the sidelink terminal, and the fourth information is determined based on fifth information and sixth information, wherein the fifth information comprises a number of time-domain units corresponding to a first measurement capability, the sixth information comprises a maximum value of the number of resources of the sidelink positioning reference signal configured on each of the time-domain units, and the first measurement capability is used to reflect a minimum processing time for the sidelink terminal to receive the resource of the sidelink positioning reference signal.

10. The method according to any one of claims 6 to 9, wherein the scaling factor comprises a second scaling factor; and determining the measurement parameter based on the measurement capability of the sidelink terminal comprises: determining the second scaling factor based on a ratio of seventh information to the third measurement capability, to determine the third parameter; wherein the seventh information is used to reflect a number of configured time-domain units carrying the sidelink positioning reference signal, and the seventh information is equal to first information, wherein the first information comprises a number of configured resources of the sidelink positioning reference signal to be measured by the sidelink terminal.

11. The method according to any one of claims 6 to 10, wherein the scaling factor comprises a second scaling factor; and determining the measurement parameter based on the measurement capability of the sidelink terminal comprises: determining the second scaling factor based on a ratio of eighth information to the third measurement capability, to determine the third parameter; wherein the eighth information comprises a number of actually simultaneously activated time-domain units corresponding to the sidelink positioning reference signal, or a maximum value of the number of actually simultaneously activated time-domain units corresponding to the sidelink positioning reference signal.

12. The method according to any one of claims 6 to 11, wherein the scaling factor comprises a second scaling factor; and determining the measurement parameter based on the measurement capability of the sidelink terminal comprises: determining the second scaling factor based on a ratio of ninth information to the third measurement capability, to determine the third parameter; wherein the ninth information comprises a minimum value in first information and information determined based on fifth information, wherein the first information comprises a number of configured resources of the sidelink positioning reference signal to be measured by the sidelink terminal, the fifth information comprises a number of time-domain units corresponding to a first measurement capability, and the first measurement capability is used to reflect a minimum processing time for the sidelink terminal to receive the resource of the sidelink positioning reference signal.

13. The method according to any one of claims 2 to 12, wherein a measurement scheme for the sidelink positioning reference signal comprises at least one of:

    a reference signal time difference (RSTD) measurement;
    a relative time of arrival (RTOA) measurement;
    a reference signal received power (RSRP) measurement;
    a reference signal received power path (RSRPP) measurement;
    an angle of arrival (AOA) measurement;
    a zenith angle of arrival (ZOA) measurement; or
    a receive-transmit (Rx-Tx) time difference measurement.

14. The method according to any one of claims 1 to 13, wherein the measurement parameter comprises at least one of:

    a first parameter;
    a second parameter; or
    a third parameter;
    wherein the first parameter is used to reflect an interval between an $s^{th}$ measurement and an $(s+1)^{th}$ measurement of the sidelink positioning reference signal by the sidelink terminal, s being a positive integer; the second parameter is used to reflect a time of a last measurement and transmission of the sidelink positioning reference signal by the sidelink terminal; and the third parameter is used to reflect a number of times the sidelink terminal measures the sidelink positioning reference signal.

15. The method according to claim 14, wherein determining the measurement parameter based on the measurement capability of the sidelink terminal comprises:
    determining, based on a position difference between a first time-domain position and a second time-domain position as well as a first condition, the first parameter for the $s^{th}$ measurement of the sidelink positioning reference signal by the sidelink terminal; wherein the first time-domain position is a time-domain position of a resource of the sidelink positioning reference signal measured by the sidelink terminal for an $s^{th}$ time, the second time-domain position is a time-domain position of a resource of the sidelink positioning reference signal measured by the sidelink terminal for an (s+1)$^{th}$ time, and the first condition is used to limit the position difference to be greater than a sum of a duration of the s$^{th}$ measurement and a first measurement capability, wherein the duration of the s$^{th}$ measurement is used to reflect a duration of the resource of the sidelink positioning reference signal measured by the sidelink terminal for the s$^{th}$ time, and the first measurement capability comprises a reception processing time or a maximum value of the reception processing time and a transmission processing time, wherein the reception processing time is used to reflect a minimum processing time for the sidelink terminal to receive the resource of the sidelink positioning reference signal, and the transmission processing time is used to reflect a minimum processing time for the sidelink terminal to determine a receive-transmit (Rx-Tx) time difference based on the resource of the transmitted sidelink positioning reference signal.

16. The method according to claim 14 or 15, wherein determining the measurement parameter based on the measurement capability of the sidelink terminal comprises:
determining the second parameter based on a sum of a duration of the last measurement and a first measurement capability; wherein the duration of the last measurement is used to reflect a duration of a resource of the sidelink positioning reference signal measured and transmitted by the sidelink terminal for a last time, and the first measurement capability comprises a reception processing time or a maximum value of the reception processing time and a transmission processing time, wherein the reception processing time is used to reflect a minimum processing time for the sidelink terminal to receive the resource of the sidelink positioning reference signal, and the transmission processing time is used to reflect a minimum processing time for the sidelink terminal to determine a receive-transmit (Rx-Tx) time difference based on the resource of the transmitted sidelink positioning reference signal.

17. The method according to any one of claims 14 to 16, wherein the third parameter is positively correlated with at least one of following parameters:

a number of samples;
a receive beam factor;
a timing error group factor;
a number of measurements; or
a scaling factor;
wherein the number of samples is used to reflect a number of samples of the sidelink positioning reference signal sampled by the sidelink terminal, the receive beam factor is used to reflect a number of receive beams traversed by the sidelink terminal in a process of measuring the sidelink positioning reference signal, the timing error group factor is related to a timing error group adopted by the sidelink terminal for measuring the sidelink positioning reference signal, and the number of measurements is used to reflect a number of resources of the sidelink positioning reference signal measured by the sidelink terminal.

18. The method according to any one of claims 1 to 17, wherein the measurement parameter comprises at least one of:

a first parameter;
a second parameter; or
a third parameter;
wherein the first parameter is used to reflect an interval between resources of adjacent sidelink positioning reference signals of the sidelink terminal; the second parameter is used to reflect a time of a last measurement or transmission of the sidelink positioning reference signal by the sidelink terminal; and the third parameter is used to reflect a number of resources of the sidelink positioning reference signal of the sidelink terminal.

19. The method according to claim 18, wherein determining the measurement parameter based on the measurement capability of the sidelink terminal comprises:
determining the first parameter of the adjacent sidelink positioning reference signals based on a position difference between a first time-domain position and a second time-domain position as well as a first condition; wherein the first time-domain position is a time-domain position of a resource of a preceding sidelink positioning reference signal among the adjacent sidelink positioning reference signals, the second time-domain position is a time-domain position of a resource of a succeeding sidelink positioning reference signal among the adjacent sidelink positioning reference signals, and the first condition is used to limit the position difference to be greater than a sum of a duration of the resource of the preceding sidelink positioning reference signal and a first measurement capability, wherein the first measurement capability comprises a reception processing time, a transmission processing time, or a maximum value of the reception processing time and the transmission processing time, wherein the reception processing time is used to reflect a minimum processing time for the sidelink terminal to receive the resource of the sidelink positioning reference signal, and the transmission processing time is used to reflect a minimum processing time for the sidelink terminal to determine a receive-transmit (Rx-Tx) time difference based on the resource of the transmitted sidelink positioning reference signal.

20. The method according to claim 18 or 19, wherein determining the measurement parameter based on the measurement capability of the sidelink terminal comprises:
determining the second parameter based on a sum of a duration of the last measurement or transmission and a first measurement capability; wherein the duration of the last measurement or transmission is used to reflect a duration of a resource of the sidelink positioning reference signal measured or transmitted by the sidelink terminal for a last time, and the first measurement capability comprises a reception processing time, a transmission processing time, or a maximum value of the reception processing time and the transmission processing time, wherein the reception processing time is used to reflect a minimum processing time for the sidelink terminal to receive the resource of the sidelink positioning reference signal, and the transmission processing time is used to reflect a minimum processing time for the sidelink terminal to determine a receive-transmit (Rx-Tx) time difference based on the resource of the transmitted sidelink positioning reference signal.

21. The method according to any one of claims 18 to 20, wherein the third parameter is positively correlated with at least one of following parameters:

a number of samples;
a receive beam factor;
a timing error group factor;
a number of measurements;
a scaling factor; or
a specified coefficient;
wherein the number of samples is used to reflect a number of samples of the sidelink positioning reference signal sampled by the sidelink terminal, the receive beam factor is used to reflect a number of receive beams traversed by the sidelink terminal in a process of measuring the sidelink positioning reference signal, the timing error group factor is related to a timing error group adopted by the sidelink terminal for measuring the sidelink positioning reference signal, and the number of measurements is used to reflect a number of resources of the sidelink positioning reference signal measured by the sidelink terminal.

22. The method according to claim 21, wherein the specified coefficient is 2.

23. The method according to any one of claims 14 to 22, wherein a measurement scheme for the sidelink positioning reference signal comprises a single-sided round trip time (RTT) measurement.

24. The method according to any one of claims 1 to 23, wherein the measurement parameter comprises at least one of:

a first parameter;
a second parameter; or
a third parameter;
wherein the first parameter is used to reflect an interval between an $s^{th}$ measurement and an $(s+1)^{th}$ measurement of the sidelink positioning reference signal by the sidelink terminal, s being a positive integer; the second parameter is used to reflect a time of a last measurement and transmission of the sidelink positioning reference signal by the sidelink terminal; and the third parameter is used to reflect a number of times the sidelink terminal measures the sidelink positioning reference signal.

25. The method according to claim 24, wherein determining the measurement parameter based on the measurement capability of the sidelink terminal comprises:
determining, based on a position difference between a first time-domain position and a second time-domain position as well as a first condition, the first parameter for the $s^{th}$ measurement of the sidelink positioning reference signal by the sidelink terminal; wherein the first time-domain position is a time-domain position of a resource of the sidelink positioning reference signal measured by the sidelink terminal for an $s^{th}$ time, the second time-domain position is a time-domain position of a resource of the sidelink positioning reference signal measured by the sidelink terminal for an $(s+1)^{th}$ time, and the first condition is used to limit the position difference to be greater than a sum of a duration of the $s^{th}$ measurement and a first measurement capability, wherein the duration of the $s^{th}$ measurement is used to reflect a duration of the resource of the sidelink positioning reference signal measured by the sidelink terminal for the $s^{th}$ time, and the first measurement capability comprises a reception processing time or a maximum value of the reception processing time and a transmission processing time, wherein the reception processing time is used to reflect a minimum processing time for the sidelink terminal to receive the resource of the sidelink positioning reference signal, and the transmission processing time is used to reflect a minimum processing time for the sidelink terminal to determine a receive-transmit (Rx-Tx) time difference based on the resource of the transmitted sidelink positioning reference signal.

26. The method according to claim 24 or 25, wherein determining the measurement parameter based on the measurement capability of the sidelink terminal comprises:

> determining the second parameter based on a sum of a duration of the last measurement and a first measurement capability;
> wherein the duration of the last measurement is used to reflect a duration of a resource of the sidelink positioning reference signal measured and transmitted by the sidelink terminal for a last time, and the first measurement capability comprises a reception processing time or a maximum value of the reception processing time and a transmission processing time, wherein the reception processing time is used to reflect a minimum processing time for the sidelink terminal to receive the resource of the sidelink positioning reference signal, and the transmission processing time is used to reflect a minimum processing time for the sidelink terminal to determine a receive-transmit (Rx-Tx) time difference based on the resource of the transmitted sidelink positioning reference signal.

27. The method according to any one of claims 24 to 26, wherein the third parameter is positively correlated with at least one of following parameters:

> a number of samples;
> a receive beam factor;
> a timing error group factor;
> a number of measurements;
> a scaling factor; or
> a configuration coefficient;
> wherein the number of samples is used to reflect a number of samples of the sidelink positioning reference signal sampled by the sidelink terminal, the receive beam factor is used to reflect a number of receive beams traversed by the sidelink terminal in a process of measuring the sidelink positioning reference signal, the timing error group factor is related to a timing error group adopted by the sidelink terminal for measuring the sidelink positioning reference signal, the number of measurements is used to reflect a number of resources of the sidelink positioning reference signal measured by the sidelink terminal, and the configuration coefficient comprises a number of configured sidelink positioning reference signals to be measured by the sidelink terminal for a transmission of a same sidelink positioning reference signal, a number of configured sidelink positioning reference signals to be transmitted by the sidelink terminal for a reception of a same sidelink positioning reference signal, or a number of configured measurement results of a receive-transmit (Rx-Tx) time difference to be reported by the sidelink terminal.

28. The method according to any one of claims 1 to 27, wherein the measurement parameter comprises at least one of:

> a first parameter;
> a second parameter; or
> a third parameter;
> wherein the first parameter is used to reflect an interval between resources of adjacent sidelink positioning reference signals of the sidelink terminal; the second parameter is used to reflect a time of a last measurement or transmission of the sidelink positioning reference signal by the sidelink terminal; and the third parameter is used to reflect a number of resources of the sidelink positioning reference signal of the sidelink terminal.

29. The method according to claim 28, wherein determining the measurement parameter based on the measurement capability of the sidelink terminal comprises:
determining the first parameter of the adjacent sidelink positioning reference signals based on a position difference between a first time-domain position and a second time-domain position as well as a first condition; wherein the first time-domain position is a time-domain position of a resource of a preceding sidelink positioning reference signal among the adjacent sidelink positioning reference signals, the second time-domain position is a time-domain position of a resource of a succeeding sidelink positioning reference signal among the adjacent sidelink positioning reference signals, and the first condition is used to limit the position difference to be greater than a sum of a duration of the resource of the preceding sidelink positioning reference signal and a first measurement capability, wherein the first measurement capability comprises a reception processing time, a transmission processing time, or a maximum value of the reception processing time and the transmission processing time, wherein the reception processing time is used to reflect a minimum processing time for the sidelink terminal to receive the resource of the sidelink positioning reference signal, and the transmission processing time is used to reflect a minimum processing time for the sidelink terminal to determine a receive-transmit (Rx-Tx) time difference based on the resource of the transmitted sidelink positioning reference signal.

30. The method according to claim 28 or 29, wherein determining the measurement parameter based on the measurement capability of the sidelink terminal comprises:

determining the second parameter based on a sum of a duration of the last measurement or transmission and a first measurement capability;
wherein the duration of the last measurement or transmission is used to reflect a duration of a resource of the sidelink positioning reference signal measured or transmitted by the sidelink terminal for a last time, and the first measurement capability comprises a reception processing time, a transmission processing time, or a maximum value of the reception processing time and the transmission processing time, wherein the reception processing time is used to reflect a minimum processing time for the sidelink terminal to receive the resource of the sidelink positioning reference signal, and the transmission processing time is used to reflect a minimum processing time for the sidelink terminal to determine a receive-transmit (Rx-Tx) time difference based on the resource of the transmitted sidelink positioning reference signal.

31. The method according to any one of claims 28 to 30, wherein the third parameter is positively correlated with at least one of following parameters:

a number of samples;
a receive beam factor;
a timing error group factor;
a number of measurements;
a scaling factor; or
a configuration coefficient + a first value;
wherein the number of samples is used to reflect a number of samples of the sidelink positioning reference signal sampled by the sidelink terminal, the receive beam factor is used to reflect a number of receive beams traversed by the sidelink terminal in a process of measuring the sidelink positioning reference signal, the timing error group factor is related to a timing error group adopted by the sidelink terminal for measuring the sidelink positioning reference signal, the number of measurements is used to reflect a number of resources of the sidelink positioning reference signal measured by the sidelink terminal, and the configuration coefficient comprises a number of configured sidelink positioning reference signals to be measured by the sidelink terminal for a transmission of a same sidelink positioning reference signal, a number of configured sidelink positioning reference signals to be transmitted by the sidelink terminal for a reception of a same sidelink positioning reference signal, or a number of configured measurement results of a receive-transmit (Rx-Tx) to be reported by the sidelink terminal.

32. The method according to claim 31, wherein the first value is 1.

33. The method according to any one of claims 24 to 32, wherein a measurement scheme for the sidelink positioning reference signal comprises a double-sided round trip time (RTT) measurement.

34. An apparatus for determining a measurement time, comprising:
a determining module, configured to determine a measurement parameter based on a measurement capability of a sidelink terminal; wherein the measurement parameter is used for determining a measurement time of a sidelink positioning reference signal, and the measurement capability is used to reflect a capability of the sidelink terminal to measure the sidelink positioning reference signal.

35. The apparatus according to claim 34, wherein the measurement parameter comprises at least one of:

a first parameter;

a second parameter; or

a third parameter;

wherein the first parameter is used to reflect an interval between an $s^{th}$ measurement and an $(s+1)^{th}$ measurement of the sidelink positioning reference signal by the sidelink terminal, s being a positive integer; the second parameter is used to reflect a time of a last measurement of the sidelink positioning reference signal by the sidelink terminal; and the third parameter is used to reflect a number of times the sidelink terminal measures the sidelink positioning reference signal.

36. The apparatus according to claim 35, wherein the determining module is configured to:

determine, based on a position difference between a first time-domain position and a second time-domain position as well as a first condition, the first parameter for the $s^{th}$ measurement of the sidelink positioning reference signal by the sidelink terminal; wherein the first time-domain position is a time-domain position of a resource of the sidelink positioning reference signal measured by the sidelink terminal for an $s^{th}$ time, the second time-domain position is a time-domain position of a resource of the sidelink positioning reference signal measured by the sidelink terminal for an $(s+1)^{th}$ time, and the first condition is used to limit the position difference to be greater than a sum of a duration of the $s^{th}$ measurement and a first measurement capability, wherein the duration of the $s^{th}$ measurement is used to reflect a duration of the resource of the sidelink positioning reference signal measured by the sidelink terminal for the $s^{th}$ time, and the first measurement capability is used to reflect a minimum processing time for the sidelink terminal to receive the resource of the sidelink positioning reference signal.

37. The apparatus according to claim 35 or 36, wherein the determining module is configured to:

determine the second parameter based on a sum of a duration of the last measurement and a first measurement capability; wherein the duration of the last measurement is used to reflect a duration of a resource of the sidelink positioning reference signal measured by the sidelink terminal for a last time, and the first measurement capability is used to reflect a minimum processing time for the sidelink terminal to receive the resource of the sidelink positioning reference signal.

38. The apparatus according to any one of claims 35 to 37, wherein the third parameter is positively correlated with at least one of following parameters:

a number of samples;

a receive beam factor;

a timing error group factor;

a number of measurements; or

a scaling factor;

wherein the number of samples is used to reflect a number of samples of the sidelink positioning reference signal sampled by the sidelink terminal, the receive beam factor is used to reflect a number of receive beams traversed by the sidelink terminal in a process of measuring the sidelink positioning reference signal, the timing error group factor is related to a timing error group adopted by the sidelink terminal for measuring the sidelink positioning reference signal, and the number of measurements is used to reflect a number of resources of the sidelink positioning reference signal measured by the sidelink terminal.

39. The apparatus according to claim 38, wherein the scaling factor is related to at least one of a second measurement capability and a third measurement capability of the sidelink terminal;

wherein the second measurement capability is used to reflect a maximum number of resources of an activated sidelink positioning reference signal that are supported and processed by the sidelink terminal, and the third measurement capability is used to reflect a maximum number of time-domain units carrying the activated sidelink positioning reference signal that are supported and processed by the sidelink terminal.

40. The apparatus according to claim 39, wherein the scaling factor comprises a first scaling factor; and the determining module is configured to:

determine the first scaling factor based on a ratio of first information to the second measurement capability, to determine the third parameter; wherein the first information comprises a number of configured resources of the sidelink positioning reference signal to be measured by the sidelink terminal.

41. The apparatus according to claim 39 or 40, wherein the scaling factor comprises a first scaling factor; and the determining module is configured to:

determine the first scaling factor based on a ratio of second information to the second measurement capability, to determine the third parameter; wherein the second information comprises a number of actually simultaneously activated resources of the sidelink positioning reference signal, or a maximum value of the number of actually simultaneously activated resources of the sidelink positioning reference signal.

42. The apparatus according to any one of claims 39 to 41, wherein the scaling factor comprises a first scaling factor; and the determining module is configured to:
determine the first scaling factor based on a ratio of third information to the second measurement capability, to determine the third parameter; wherein the third information comprises a minimum value in first information and fourth information, wherein the first information comprises a number of configured resources of the sidelink positioning reference signal to be measured by the sidelink terminal, and the fourth information is determined based on fifth information and sixth information, wherein the fifth information comprises a number of time-domain units corresponding to a first measurement capability, the sixth information comprises a maximum value of the number of resources of the sidelink positioning reference signal configured on each of the time-domain units, and the first measurement capability is used to reflect a minimum processing time for the sidelink terminal to receive the resource of the sidelink positioning reference signal.

43. The apparatus according to any one of claims 39 to 42, wherein the scaling factor comprises a second scaling factor; and the determining module is configured to:
determine the second scaling factor based on a ratio of seventh information to the third measurement capability, to determine the third parameter; wherein the seventh information is used to reflect a number of configured time-domain units carrying the sidelink positioning reference signal, and the seventh information is equal to first information, wherein the first information comprises a number of configured resources of the sidelink positioning reference signal to be measured by the sidelink terminal.

44. The apparatus according to any one of claims 39 to 43, wherein the scaling factor comprises a second scaling factor; and the determining module is configured to:
determine the second scaling factor based on a ratio of eighth information to the third measurement capability, to determine the third parameter; wherein the eighth information comprises a number of actually simultaneously activated time-domain units corresponding to the sidelink positioning reference signal, or a maximum value of the number of actually simultaneously activated time-domain units corresponding to the sidelink positioning reference signal.

45. The apparatus according to any one of claims 39 to 44, wherein the scaling factor comprises a second scaling factor; and the determining module is configured to:
determine the second scaling factor based on a ratio of ninth information to the third measurement capability, to determine the third parameter; wherein the ninth information comprises a minimum value in first information and information determined based on fifth information, wherein the first information comprises a number of configured resources of the sidelink positioning reference signal to be measured by the sidelink terminal, the fifth information comprises a number of time-domain units corresponding to a first measurement capability, and the first measurement capability is used to reflect a minimum processing time for the sidelink terminal to receive the resource of the sidelink positioning reference signal.

46. The apparatus according to any one of claims 35 to 45, wherein a measurement scheme for the sidelink positioning reference signal comprises at least one of:

   a reference signal time difference (RSTD) measurement;
   a relative time of arrival (RTOA) measurement;
   a reference signal received power (RSRP) measurement;
   a reference signal received power path (RSRPP) measurement;
   an angle of arrival (AOA) measurement;
   a zenith angle of arrival (ZOA) measurement; or
   a receive-transmit (Rx-Tx) time difference measurement.

47. The apparatus according to any one of claims 34 to 46, wherein the measurement parameter comprises at least one of:

   a first parameter;

a second parameter; or
a third parameter;
wherein the first parameter is used to reflect an interval between an $s^{th}$ measurement and an $(s+1)^{th}$ measurement of the sidelink positioning reference signal by the sidelink terminal, s being a positive integer; the second parameter is used to reflect a time of a last measurement and transmission of the sidelink positioning reference signal by the sidelink terminal; and the third parameter is used to reflect a number of times the sidelink terminal measures the sidelink positioning reference signal.

48. The apparatus according to claim 47, wherein the determining module is configured to:

determine, based on a position difference between a first time-domain position and a second time-domain position as well as a first condition, the first parameter for the $s^{th}$ measurement of the sidelink positioning reference signal by the sidelink terminal; wherein the first time-domain position is a time-domain position of a resource of the sidelink positioning reference signal measured by the sidelink terminal for an $s^{th}$ time, the second time-domain position is a time-domain position of a resource of the sidelink positioning reference signal measured by the sidelink terminal for an $(s+1)^{th}$ time, and the first condition is used to limit the position difference to be greater than a sum of a duration of the $s^{th}$ measurement and a first measurement capability, wherein the duration of the $s^{th}$ measurement is used to reflect a duration of the resource of the sidelink positioning reference signal measured by the sidelink terminal for the $s^{th}$ time, and the first measurement capability comprises a reception processing time or a maximum value of the reception processing time and a transmission processing time, wherein the reception processing time is used to reflect a minimum processing time for the sidelink terminal to receive the resource of the sidelink positioning reference signal, and the transmission processing time is used to reflect a minimum processing time for the sidelink terminal to determine a receive-transmit (Rx-Tx) time difference based on the resource of the transmitted sidelink positioning reference signal.

49. The apparatus according to claim 47 or 48, wherein the determining module is configured to:

determine the second parameter based on a sum of a duration of the last measurement and a first measurement capability;
wherein the duration of the last measurement is used to reflect a duration of a resource of the sidelink positioning reference signal measured and transmitted by the sidelink terminal for a last time, and the first measurement capability comprises a reception processing time or a maximum value of the reception processing time and a transmission processing time, wherein the reception processing time is used to reflect a minimum processing time for the sidelink terminal to receive the resource of the sidelink positioning reference signal, and the transmission processing time is used to reflect a minimum processing time for the sidelink terminal to determine a receive-transmit (Rx-Tx) time difference based on the resource of the transmitted sidelink positioning reference signal.

50. The apparatus according to any one of claims 47 to 49, wherein the third parameter is positively correlated with at least one of following parameters:

a number of samples;
a receive beam factor;
a timing error group factor;
a number of measurements; or
a scaling factor;
wherein the number of samples is used to reflect a number of samples of the sidelink positioning reference signal sampled by the sidelink terminal, the receive beam factor is used to reflect a number of receive beams traversed by the sidelink terminal in a process of measuring the sidelink positioning reference signal, the timing error group factor is related to a timing error group adopted by the sidelink terminal for measuring the sidelink positioning reference signal, and the number of measurements is used to reflect a number of resources of the sidelink positioning reference signal measured by the sidelink terminal.

51. The apparatus according to any one of claims 34 to 50, wherein the measurement parameter comprises at least one of:

a first parameter;
a second parameter; or
a third parameter;

wherein the first parameter is used to reflect an interval between resources of adjacent sidelink positioning reference signals of the sidelink terminal; the second parameter is used to reflect a time of a last measurement or transmission of the sidelink positioning reference signal by the sidelink terminal; and the third parameter is used to reflect a number of resources of the sidelink positioning reference signal of the sidelink terminal.

52. The apparatus according to claim 51, wherein the determining module is configured to:
determine the first parameter of the adjacent sidelink positioning reference signals based on a position difference between a first time-domain position and a second time-domain position as well as a first condition; wherein the first time-domain position is a time-domain position of a resource of a preceding sidelink positioning reference signal among the adjacent sidelink positioning reference signals, the second time-domain position is a time-domain position of a resource of a succeeding sidelink positioning reference signal among the adjacent sidelink positioning reference signals, and the first condition is used to limit the position difference to be greater than a sum of a duration of the resource of the preceding sidelink positioning reference signal and a first measurement capability, wherein the first measurement capability comprises a reception processing time, a transmission processing time, or a maximum value of the reception processing time and the transmission processing time, wherein the reception processing time is used to reflect a minimum processing time for the sidelink terminal to receive the resource of the sidelink positioning reference signal, and the transmission processing time is used to reflect a minimum processing time for the sidelink terminal to determine a receive-transmit (Rx-Tx) time difference based on the resource of the transmitted sidelink positioning reference signal.

53. The apparatus according to claim 51 or 52, wherein the determining module is configured to:
determine the second parameter based on a sum of a duration of the last measurement or transmission and a first measurement capability; wherein the duration of the last measurement or transmission is used to reflect a duration of a resource of the sidelink positioning reference signal measured or transmitted by the sidelink terminal for a last time, and the first measurement capability comprises a reception processing time, a transmission processing time, or a maximum value of the reception processing time and the transmission processing time, wherein the reception processing time is used to reflect a minimum processing time for the sidelink terminal to receive the resource of the sidelink positioning reference signal, and the transmission processing time is used to reflect a minimum processing time for the sidelink terminal to determine a receive-transmit (Rx-Tx) time difference based on the resource of the transmitted sidelink positioning reference signal.

54. The apparatus according to any one of claims 51 to 53, wherein the third parameter is positively correlated with at least one of following parameters:

    a number of samples;
    a receive beam factor;
    a timing error group factor;
    a number of measurements;
    a scaling factor; or
    a specified coefficient;
    wherein the number of samples is used to reflect a number of samples of the sidelink positioning reference signal sampled by the sidelink terminal, the receive beam factor is used to reflect a number of receive beams traversed by the sidelink terminal in a process of measuring the sidelink positioning reference signal, the timing error group factor is related to a timing error group adopted by the sidelink terminal for measuring the sidelink positioning reference signal, and the number of measurements is used to reflect a number of resources of the sidelink positioning reference signal measured by the sidelink terminal.

55. The apparatus according to claim 54, wherein the specified coefficient is 2.

56. The apparatus according to any one of claims 47 to 55, wherein a measurement scheme for the sidelink positioning reference signal comprises a single-sided round trip time (RTT) measurement.

57. The apparatus according to any one of claims 34 to 56, wherein the measurement parameter comprises at least one of:

    a first parameter;
    a second parameter; or
    a third parameter;

wherein the first parameter is used to reflect an interval between an $s^{th}$ measurement and an $(s+1)^{th}$ measurement of the sidelink positioning reference signal by the sidelink terminal, s being a positive integer; the second parameter is used to reflect a time of a last measurement and transmission of the sidelink positioning reference signal by the sidelink terminal; and the third parameter is used to reflect a number of times the sidelink terminal measures the sidelink positioning reference signal.

58. The apparatus according to claim 57, wherein the determining module is configured to:
determine, based on a position difference between a first time-domain position and a second time-domain position as well as a first condition, the first parameter for the $s^{th}$ measurement of the sidelink positioning reference signal by the sidelink terminal; wherein the first time-domain position is a time-domain position of a resource of the sidelink positioning reference signal measured by the sidelink terminal for an $s^{th}$ time, the second time-domain position is a time-domain position of a resource of the sidelink positioning reference signal measured by the sidelink terminal for an $(s+1)^{th}$ time, and the first condition is used to limit the position difference to be greater than a sum of a duration of the $s^{th}$ measurement and a first measurement capability, wherein the duration of the $s^{th}$ measurement is used to reflect a duration of the resource of the sidelink positioning reference signal measured by the sidelink terminal for the $s^{th}$ time, and the first measurement capability comprises a reception processing time or a maximum value of the reception processing time and a transmission processing time, wherein the reception processing time is used to reflect a minimum processing time for the sidelink terminal to receive the resource of the sidelink positioning reference signal, and the transmission processing time is used to reflect a minimum processing time for the sidelink terminal to determine a receive-transmit (Rx-Tx) time difference based on the resource of the transmitted sidelink positioning reference signal.

59. The apparatus according to claim 57 or 58, wherein the determining module is configured to:
determine the second parameter based on a sum of a duration of the last measurement and a first measurement capability;
wherein the duration of the last measurement is used to reflect a duration of a resource of the sidelink positioning reference signal measured and transmitted by the sidelink terminal for a last time, and the first measurement capability comprises a reception processing time or a maximum value of the reception processing time and a transmission processing time, wherein the reception processing time is used to reflect a minimum processing time for the sidelink terminal to receive the resource of the sidelink positioning reference signal, and the transmission processing time is used to reflect a minimum processing time for the sidelink terminal to determine a receive-transmit (Rx-Tx) time difference based on the resource of the transmitted sidelink positioning reference signal.

60. The apparatus according to any one of claims 57 to 59, wherein the third parameter is positively correlated with at least one of following parameters:

a number of samples;
a receive beam factor;
a timing error group factor;
a number of measurements;
a scaling factor; or
a configuration coefficient;
wherein the number of samples is used to reflect a number of samples of the sidelink positioning reference signal sampled by the sidelink terminal, the receive beam factor is used to reflect a number of receive beams traversed by the sidelink terminal in a process of measuring the sidelink positioning reference signal, the timing error group factor is related to a timing error group adopted by the sidelink terminal for measuring the sidelink positioning reference signal, the number of measurements is used to reflect a number of resources of the sidelink positioning reference signal measured by the sidelink terminal, and the configuration coefficient comprises a number of configured sidelink positioning reference signals to be measured by the sidelink terminal for a transmission of a same sidelink positioning reference signal, a number of configured sidelink positioning reference signals to be transmitted by the sidelink terminal for a reception of a same sidelink positioning reference signal, or a number of configured measurement results of a receive-transmit (Rx-Tx) to be reported by the sidelink terminal.

61. The apparatus according to any one of claims 34 to 60, wherein the measurement parameter comprises at least one of:

a first parameter;

a second parameter; or

a third parameter;

wherein the first parameter is used to reflect an interval between resources of adjacent sidelink positioning reference signals of the sidelink terminal; the second parameter is used to reflect a time of a last measurement or transmission of the sidelink positioning reference signal by the sidelink terminal; and the third parameter is used to reflect a number of resources of the sidelink positioning reference signal of the sidelink terminal.

62. The apparatus according to claim 61, wherein the determining module is configured to:

determine the first parameter of the adjacent sidelink positioning reference signals based on a position difference between a first time-domain position and a second time-domain position as well as a first condition; wherein the first time-domain position is a time-domain position of a resource of a preceding sidelink positioning reference signal among the adjacent sidelink positioning reference signals, the second time-domain position is a time-domain position of a resource of a succeeding sidelink positioning reference signal among the adjacent sidelink positioning reference signals, and the first condition is used to limit the position difference to be greater than a sum of a duration of the resource of the preceding sidelink positioning reference signal and a first measurement capability, wherein the first measurement capability comprises a reception processing time, a transmission processing time, or a maximum value of the reception processing time and the transmission processing time, wherein the reception processing time is used to reflect a minimum processing time for the sidelink terminal to receive the resource of the sidelink positioning reference signal, and the transmission processing time is used to reflect a minimum processing time for the sidelink terminal to determine a receive-transmit (Rx-Tx) time difference based on the resource of the transmitted sidelink positioning reference signal.

63. The apparatus according to claim 61 or 62, wherein the determining module is configured to:

determine the second parameter based on a sum of a duration of the last measurement or transmission and a first measurement capability;

wherein the duration of the last measurement or transmission is used to reflect a duration of a resource of the sidelink positioning reference signal measured or transmitted by the sidelink terminal for a last time, and the first measurement capability comprises a reception processing time, a transmission processing time, or a maximum value of the reception processing time and the transmission processing time, wherein the reception processing time is used to reflect a minimum processing time for the sidelink terminal to receive the resource of the sidelink positioning reference signal, and the transmission processing time is used to reflect a minimum processing time for the sidelink terminal to determine a receive-transmit (Rx-Tx) time difference based on the resource of the transmitted sidelink positioning reference signal.

64. The apparatus according to any one of claims 61 to 63, wherein the third parameter is positively correlated with at least one of following parameters:

a number of samples;

a receive beam factor;

a timing error group factor;

a number of measurements;

a scaling factor; or

a configuration coefficient + a first value;

wherein the number of samples is used to reflect a number of samples of the sidelink positioning reference signal sampled by the sidelink terminal, the receive beam factor is used to reflect a number of receive beams traversed by the sidelink terminal in a process of measuring the sidelink positioning reference signal, the timing error group factor is related to a timing error group adopted by the sidelink terminal for measuring the sidelink positioning reference signal, the number of measurements is used to reflect a number of resources of the sidelink positioning reference signal measured by the sidelink terminal, and the configuration coefficient comprises a number of configured sidelink positioning reference signals to be measured by the sidelink terminal for a transmission of a same sidelink positioning reference signal, a number of configured sidelink positioning reference signals to be transmitted by the sidelink terminal for a reception of a same sidelink positioning reference signal, or a number of configured measurement results of a receive-transmit (Rx-Tx) to be reported by the sidelink terminal.

65. The apparatus according to claim 64, wherein the first value is 1.

**66.** The apparatus according to any one of claims 57 to 65, wherein a measurement scheme for the sidelink positioning reference signal comprises a double-sided round trip time (RTT) measurement.

**67.** A sidelink terminal, comprising:

a processor;
a transceiver, connected to the processor; and
a memory, configured to store one or more executable instructions of the processor;
wherein the sidelink terminal is configured to determine a measurement parameter based on a measurement capability of the sidelink terminal; wherein the measurement parameter is used for determining a measurement time of a sidelink positioning reference signal, and the measurement capability is used to reflect a capability of the sidelink terminal to measure the sidelink positioning reference signal.

**68.** The sidelink terminal according to claim 67, wherein the measurement parameter comprises at least one of:

a first parameter;
a second parameter; or
a third parameter;
wherein the first parameter is used to reflect an interval between an $s^{th}$ measurement and an $(s+1)^{th}$ measurement of the sidelink positioning reference signal by the sidelink terminal, s being a positive integer; the second parameter is used to reflect a time of a last measurement of the sidelink positioning reference signal by the sidelink terminal; and the third parameter is used to reflect a number of times the sidelink terminal measures the sidelink positioning reference signal.

**69.** The sidelink terminal according to claim 68, wherein the sidelink terminal is configured to:
determine, based on a position difference between a first time-domain position and a second time-domain position as well as a first condition, the first parameter for the $s^{th}$ measurement of the sidelink positioning reference signal by the sidelink terminal; wherein the first time-domain position is a time-domain position of a resource of the sidelink positioning reference signal measured by the sidelink terminal for an $s^{th}$ time, the second time-domain position is a time-domain position of a resource of the sidelink positioning reference signal measured by the sidelink terminal for an $(s+1)^{th}$ time, and the first condition is used to limit the position difference to be greater than a sum of a duration of the $s^{th}$ measurement and a first measurement capability, wherein the duration of the $s^{th}$ measurement is used to reflect a duration of the resource of the sidelink positioning reference signal measured by the sidelink terminal for the $s^{th}$ time, and the first measurement capability is used to reflect a minimum processing time for the sidelink terminal to receive the resource of the sidelink positioning reference signal.

**70.** The sidelink terminal according to claim 68 or 69, wherein the sidelink terminal is configured to:

determine the second parameter based on a sum of a duration of the last measurement and a first measurement capability;
wherein the duration of the last measurement is used to reflect a duration of a resource of the sidelink positioning reference signal measured by the sidelink terminal for a last time, and the first measurement capability is used to reflect a minimum processing time for the sidelink terminal to receive the resource of the sidelink positioning reference signal.

**71.** The sidelink terminal according to any one of claims 68 to 70, wherein the third parameter is positively correlated with at least one of following parameters:

a number of samples;
a receive beam factor;
a timing error group factor;
a number of measurements; or
a scaling factor;
wherein the number of samples is used to reflect a number of samples of the sidelink positioning reference signal sampled by the sidelink terminal, the receive beam factor is used to reflect a number of receive beams traversed by the sidelink terminal in a process of measuring the sidelink positioning reference signal, the timing error group factor is related to a timing error group adopted by the sidelink terminal for measuring the sidelink positioning reference signal, and the number of measurements is used to reflect a number of resources of the sidelink positioning reference signal measured by the sidelink terminal.

72. The sidelink terminal according to claim 71, wherein the scaling factor is related to at least one of a second measurement capability and a third measurement capability of the sidelink terminal; wherein the second measurement capability is used to reflect a maximum number of resources of an activated sidelink positioning reference signal that are supported and processed by the sidelink terminal, and the third measurement capability is used to reflect a maximum number of time-domain units carrying the activated sidelink positioning reference signal that are supported and processed by the sidelink terminal.

73. The sidelink terminal according to claim 72, wherein the scaling factor comprises a first scaling factor; and the sidelink terminal is configured to:
determine the first scaling factor based on a ratio of first information to the second measurement capability, to determine the third parameter; wherein the first information comprises a number of configured resources of the sidelink positioning reference signal to be measured by the sidelink terminal.

74. The sidelink terminal according to claim 72 or 73, wherein the scaling factor comprises a first scaling factor; and the sidelink terminal is configured to:
determine the first scaling factor based on a ratio of second information to the second measurement capability, to determine the third parameter; wherein the second information comprises a number of actually simultaneously activated resources of the sidelink positioning reference signal, or a maximum value of the number of actually simultaneously activated resources of the sidelink positioning reference signal.

75. The sidelink terminal according to any one of claims 72 to 74, wherein the scaling factor comprises a first scaling factor; and the sidelink terminal is configured to:
determine the first scaling factor based on a ratio of third information to the second measurement capability, to determine the third parameter; wherein the third information comprises a minimum value in first information and fourth information, wherein the first information comprises a number of configured resources of the sidelink positioning reference signal to be measured by the sidelink terminal, and the fourth information is determined based on fifth information and sixth information, wherein the fifth information comprises a number of time-domain units corresponding to a first measurement capability, the sixth information comprises a maximum value of the number of resources of the sidelink positioning reference signal configured on each of the time-domain units, and the first measurement capability is used to reflect a minimum processing time for the sidelink terminal to receive the resource of the sidelink positioning reference signal.

76. The sidelink terminal according to any one of claims 72 to 75, wherein the scaling factor comprises a second scaling factor; and the sidelink terminal is configured to:
determine the second scaling factor based on a ratio of seventh information to the third measurement capability, to determine the third parameter; wherein the seventh information is used to reflect a number of configured time-domain units carrying the sidelink positioning reference signal, and the seventh information is equal to first information, wherein the first information comprises a number of configured resources of the sidelink positioning reference signal to be measured by the sidelink terminal.

77. The sidelink terminal according to any one of claims 72 to 76, wherein the scaling factor comprises a second scaling factor; and the sidelink terminal is configured to:
determine the second scaling factor based on a ratio of eighth information to the third measurement capability, to determine the third parameter; wherein the eighth information comprises a number of actually simultaneously activated time-domain units corresponding to the sidelink positioning reference signal, or a maximum value of the number of actually simultaneously activated time-domain units corresponding to the sidelink positioning reference signal.

78. The sidelink terminal according to any one of claims 72 to 77, wherein the scaling factor comprises a second scaling factor; and the sidelink terminal is configured to:
determine the second scaling factor based on a ratio of ninth information to the third measurement capability, to determine the third parameter; wherein the ninth information comprises a minimum value in first information and information determined based on fifth information, wherein the first information comprises a number of configured resources of the sidelink positioning reference signal to be measured by the sidelink terminal, the fifth information comprises a number of time-domain units corresponding to a first measurement capability, and the first measurement capability is used to reflect a minimum processing time for the sidelink terminal to receive the resource of the sidelink positioning reference signal.

79. The sidelink terminal according to any one of claims 68 to 78, wherein a measurement scheme for the sidelink positioning reference signal comprises at least one of:

a reference signal time difference (RSTD) measurement;
a relative time of arrival (RTOA) measurement;
a reference signal received power (RSRP) measurement;
a reference signal received power path (RSRPP) measurement;
an angle of arrival (AOA) measurement;
a zenith angle of arrival (ZOA) measurement; or
a receive-transmit (Rx-Tx) time difference measurement.

80. The sidelink terminal according to any one of claims 67 to 79, wherein the measurement parameter comprises at least one of:

a first parameter;
a second parameter; or
a third parameter;
wherein the first parameter is used to reflect an interval between an $s^{th}$ measurement and an $(s+1)^{th}$ measurement of the sidelink positioning reference signal by the sidelink terminal, s being a positive integer; the second parameter is used to reflect a time of a last measurement and transmission of the sidelink positioning reference signal by the sidelink terminal; and the third parameter is used to reflect a number of times the sidelink terminal measures the sidelink positioning reference signal.

81. The sidelink terminal according to claim 80, wherein the sidelink terminal is configured to:
determine, based on a position difference between a first time-domain position and a second time-domain position as well as a first condition, the first parameter for the $s^{th}$ measurement of the sidelink positioning reference signal by the sidelink terminal; wherein the first time-domain position is a time-domain position of a resource of the sidelink positioning reference signal measured by the sidelink terminal for an $s^{th}$ time, the second time-domain position is a time-domain position of a resource of the sidelink positioning reference signal measured by the sidelink terminal for an $(s+1)^{th}$ time, and the first condition is used to limit the position difference to be greater than a sum of a duration of the $s^{th}$ measurement and a first measurement capability, wherein the duration of the $s^{th}$ measurement is used to reflect a duration of the resource of the sidelink positioning reference signal measured by the sidelink terminal for the $s^{th}$ time, and the first measurement capability comprises a reception processing time or a maximum value of the reception processing time and a transmission processing time, wherein the reception processing time is used to reflect a minimum processing time for the sidelink terminal to receive the resource of the sidelink positioning reference signal, and the transmission processing time is used to reflect a minimum processing time for the sidelink terminal to determine a receive-transmit (Rx-Tx) time difference based on the resource of the transmitted sidelink positioning reference signal.

82. The sidelink terminal according to claim 80 or 81, wherein the sidelink terminal is configured to:

determine the second parameter based on a sum of a duration of the last measurement and a first measurement capability;
wherein the duration of the last measurement is used to reflect a duration of a resource of the sidelink positioning reference signal measured and transmitted by the sidelink terminal for a last time, and the first measurement capability comprises a reception processing time or a maximum value of the reception processing time and a transmission processing time, wherein the reception processing time is used to reflect a minimum processing time for the sidelink terminal to receive the resource of the sidelink positioning reference signal, and the transmission processing time is used to reflect a minimum processing time for the sidelink terminal to determine a receive-transmit (Rx-Tx) time difference based on the resource of the transmitted sidelink positioning reference signal.

83. The sidelink terminal according to any one of claims 80 to 82, wherein the third parameter is positively correlated with at least one of following parameters:

a number of samples;

a receive beam factor;
a timing error group factor;
a number of measurements; or
a scaling factor;
wherein the number of samples is used to reflect a number of samples of the sidelink positioning reference signal sampled by the sidelink terminal, the receive beam factor is used to reflect a number of receive beams traversed by the sidelink terminal in a process of measuring the sidelink positioning reference signal, the timing error group factor is related to a timing error group adopted by the sidelink terminal for measuring the sidelink positioning reference signal, and the number of measurements is used to reflect a number of resources of the sidelink positioning reference signal measured by the sidelink terminal.

84. The sidelink terminal according to any one of claims 67 to 83, wherein the measurement parameter comprises at least one of:

a first parameter;
a second parameter; or
a third parameter;
wherein the first parameter is used to reflect an interval between resources of adjacent sidelink positioning reference signals of the sidelink terminal; the second parameter is used to reflect a time of a last measurement or transmission of the sidelink positioning reference signal by the sidelink terminal; and the third parameter is used to reflect a number of resources of the sidelink positioning reference signal of the sidelink terminal.

85. The sidelink terminal according to claim 84, wherein the sidelink terminal is configured to:
determine the first parameter of the adjacent sidelink positioning reference signals based on a position difference between a first time-domain position and a second time-domain position as well as a first condition; wherein the first time-domain position is a time-domain position of a resource of a preceding sidelink positioning reference signal among the adjacent sidelink positioning reference signals, the second time-domain position is a time-domain position of a resource of a succeeding sidelink positioning reference signal among the adjacent sidelink positioning reference signals, and the first condition is used to limit the position difference to be greater than a sum of a duration of the resource of the preceding sidelink positioning reference signal and a first measurement capability, wherein the first measurement capability comprises a reception processing time, a transmission processing time, or a maximum value of the reception processing time and the transmission processing time, wherein the reception processing time is used to reflect a minimum processing time for the sidelink terminal to receive the resource of the sidelink positioning reference signal, and the transmission processing time is used to reflect a minimum processing time for the sidelink terminal to determine a receive-transmit (Rx-Tx) time difference based on the resource of the transmitted sidelink positioning reference signal.

86. The sidelink terminal according to claim 84 or 85, wherein the sidelink terminal is configured to:
determine the second parameter based on a sum of a duration of the last measurement or transmission and a first measurement capability; wherein the duration of the last measurement or transmission is used to reflect a duration of a resource of the sidelink positioning reference signal measured or transmitted by the sidelink terminal for a last time, and the first measurement capability comprises a reception processing time, a transmission processing time, or a maximum value of the reception processing time and the transmission processing time, wherein the reception processing time is used to reflect a minimum processing time for the sidelink terminal to receive the resource of the sidelink positioning reference signal, and the transmission processing time is used to reflect a minimum processing time for the sidelink terminal to determine a receive-transmit (Rx-Tx) time difference based on the resource of the transmitted sidelink positioning reference signal.

87. The sidelink terminal according to any one of claims 84 to 86, wherein the third parameter is positively correlated with at least one of following parameters:

a number of samples;
a receive beam factor;
a timing error group factor;
a number of measurements;
a scaling factor; or
a specified coefficient;
wherein the number of samples is used to reflect a number of samples of the sidelink positioning reference signal sampled by the sidelink terminal, the receive beam factor is used to reflect a number of receive beams traversed by the sidelink terminal in a process of measuring the sidelink positioning reference signal, the timing error group factor is related to a timing error group adopted by the sidelink terminal for measuring the sidelink positioning reference signal, and the number of measurements is used to reflect a number of resources of the sidelink positioning reference signal measured by the sidelink terminal.

88. The sidelink terminal according to claim 87, wherein the specified coefficient is 2.

89. The sidelink terminal according to any one of claims 80 to 88, wherein a measurement scheme for the sidelink positioning reference signal comprises a single-sided round trip time (RTT) measurement.

90. The sidelink terminal according to any one of claims 67 to 89, wherein the measurement parameter comprises at least one of:

   a first parameter;
   a second parameter; or
   a third parameter;
   wherein the first parameter is used to reflect an interval between an $s^{th}$ measurement and an $(s+1)^{th}$ measurement of the sidelink positioning reference signal by the sidelink terminal, s being a positive integer; the second parameter is used to reflect a time of a last measurement and transmission of the sidelink positioning reference signal by the sidelink terminal; and the third parameter is used to reflect a number of times the sidelink terminal measures the sidelink positioning reference signal.

91. The sidelink terminal according to claim 90, wherein the sidelink terminal is configured to:
   determine, based on a position difference between a first time-domain position and a second time-domain position as well as a first condition, the first parameter for the $s^{th}$ measurement of the sidelink positioning reference signal by the sidelink terminal; wherein the first time-domain position is a time-domain position of a resource of the sidelink positioning reference signal measured by the sidelink terminal for an $s^{th}$ time, the second time-domain position is a time-domain position of a resource of the sidelink positioning reference signal measured by the sidelink terminal for an $(s+1)^{th}$ time, and the first condition is used to limit the position difference to be greater than a sum of a duration of the $s^{th}$ measurement and a first measurement capability, wherein the duration of the $s^{th}$ measurement is used to reflect a duration of the resource of the sidelink positioning reference signal measured by the sidelink terminal for the $s^{th}$ time, and the first measurement capability comprises a reception processing time or a maximum value of the reception processing time and a transmission processing time, wherein the reception processing time is used to reflect a minimum processing time for the sidelink terminal to receive the resource of the sidelink positioning reference signal, and the transmission processing time is used to reflect a minimum processing time for the sidelink terminal to determine a receive-transmit (Rx-Tx) time difference based on the resource of the transmitted sidelink positioning reference signal.

92. The sidelink terminal according to claim 90 or 91, wherein the sidelink terminal is configured to:
   determine the second parameter based on a sum of a duration of the last measurement and a first measurement capability; wherein the duration of the last measurement is used to reflect a duration of a resource of the sidelink positioning reference signal measured and transmitted by the sidelink terminal for a last time, and the first measurement capability comprises a reception processing time or a maximum value of the reception processing time and a transmission processing time, wherein the reception processing time is used to reflect a minimum processing time for the sidelink terminal to receive the resource of the sidelink positioning reference signal, and the transmission processing time is used to reflect a minimum processing time for the sidelink terminal to determine a receive-transmit (Rx-Tx) time difference based on the resource of the transmitted sidelink positioning reference signal.

93. The sidelink terminal according to any one of claims 90 to 92, wherein the third parameter is positively correlated with at least one of following parameters:

   a number of samples;
   a receive beam factor;
   a timing error group factor;
   a number of measurements;
   a scaling factor; or

a configuration coefficient;

wherein the number of samples is used to reflect a number of samples of the sidelink positioning reference signal sampled by the sidelink terminal, the receive beam factor is used to reflect a number of receive beams traversed by the sidelink terminal in a process of measuring the sidelink positioning reference signal, the timing error group factor is related to a timing error group adopted by the sidelink terminal for measuring the sidelink positioning reference signal, the number of measurements is used to reflect a number of resources of the sidelink positioning reference signal measured by the sidelink terminal, and the configuration coefficient comprises a number of configured sidelink positioning reference signals to be measured by the sidelink terminal for a transmission of a same sidelink positioning reference signal, a number of configured sidelink positioning reference signals to be transmitted by the sidelink terminal for a reception of a same sidelink positioning reference signal, or a number of configured measurement results of a receive-transmit (Rx-Tx) to be reported by the sidelink terminal.

94. The sidelink terminal according to any one of claims 67 to 93, wherein the measurement parameter comprises at least one of:

a first parameter;
a second parameter; or
a third parameter;

wherein the first parameter is used to reflect an interval between resources of adjacent sidelink positioning reference signals of the sidelink terminal; the second parameter is used to reflect a time of a last measurement or transmission of the sidelink positioning reference signal by the sidelink terminal; and the third parameter is used to reflect a number of resources of the sidelink positioning reference signal of the sidelink terminal.

95. The sidelink terminal according to claim 94, wherein the sidelink terminal is configured to:
determine the first parameter of the adjacent sidelink positioning reference signals based on a position difference between a first time-domain position and a second time-domain position as well as a first condition; wherein the first time-domain position is a time-domain position of a resource of a preceding sidelink positioning reference signal among the adjacent sidelink positioning reference signals, the second time-domain position is a time-domain position of a resource of a succeeding sidelink positioning reference signal among the adjacent sidelink positioning reference signals, and the first condition is used to limit the position difference to be greater than a sum of a duration of the resource of the preceding sidelink positioning reference signal and a first measurement capability, wherein the first measurement capability comprises a reception processing time, a transmission processing time, or a maximum value of the reception processing time and the transmission processing time, wherein the reception processing time is used to reflect a minimum processing time for the sidelink terminal to receive the resource of the sidelink positioning reference signal, and the transmission processing time is used to reflect a minimum processing time for the sidelink terminal to determine a receive-transmit (Rx-Tx) time difference based on the resource of the transmitted sidelink positioning reference signal.

96. The sidelink terminal according to claim 94 or 95, wherein the sidelink terminal is configured to:
determine the second parameter based on a sum of a duration of the last measurement or transmission and a first measurement capability; wherein the duration of the last measurement or transmission is used to reflect a duration of a resource of the sidelink positioning reference signal measured or transmitted by the sidelink terminal for a last time, and the first measurement capability comprises a reception processing time, a transmission processing time, or a maximum value of the reception processing time and the transmission processing time, wherein the reception processing time is used to reflect a minimum processing time for the sidelink terminal to receive the resource of the sidelink positioning reference signal, and the transmission processing time is used to reflect a minimum processing time for the sidelink terminal to determine a receive-transmit (Rx-Tx) time difference based on the resource of the transmitted sidelink positioning reference signal.

97. The sidelink terminal according to any one of claims 94 to 96, wherein the third parameter is positively correlated with at least one of following parameters:

a number of samples;
a receive beam factor;
a timing error group factor;
a number of measurements;
a scaling factor; or
a configuration coefficient + a first value;

wherein the number of samples is used to reflect a number of samples of the sidelink positioning reference signal sampled by the sidelink terminal, the receive beam factor is used to reflect a number of receive beams traversed by the sidelink terminal in a process of measuring the sidelink positioning reference signal, the timing error group factor is related to a timing error group adopted by the sidelink terminal for measuring the sidelink positioning reference signal, the number of measurements is used to reflect a number of resources of the sidelink positioning reference signal measured by the sidelink terminal, and the configuration coefficient comprises a number of configured sidelink positioning reference signals to be measured by the sidelink terminal for a transmission of a same sidelink positioning reference signal, a number of configured sidelink positioning reference signals to be transmitted by the sidelink terminal for a reception of a same sidelink positioning reference signal, or a number of configured measurement results of a receive-transmit (Rx-Tx) to be reported by the sidelink terminal.

98. The sidelink terminal according to claim 97, wherein the first value is 1.

99. The sidelink terminal according to any one of claims 90 to 98, wherein a measurement scheme for the sidelink positioning reference signal comprises a double-sided round trip time (RTT) measurement.

100.
A computer-readable storage medium, storing one or more executable instructions, wherein the one or more executable instructions, when loaded and executed by a processor, cause the processor to perform the method for determining the measurement time as defined in any one of claims 1 to 33.

101.
A chip, comprising: programmable logic circuitry or one or more programs, wherein the chip, when running the programmable logic circuitry or the one or more programs, is caused to perform the method for determining the measurement time as defined in any one of claims 1 to 33.

102.
A computer program product, comprising: one or more computer instructions stored in a computer-readable storage medium, wherein the one or more computer instructions, when read by a processor of a computer device from the computer-readable storage medium and executed by the processor, cause the computer device to perform the method for determining the measurement time as defined in any one of claims 1 to 33.

FIG. 1

FIG. 2

FIG. 3

FIG. 4

FIG. 5

602

Determining a measurement parameter based on a measurement capability of a sidelink terminal

FIG. 6

702

Determining a measurement parameter based on a measurement capability of a sidelink terminal by a first determination mode

FIG. 7

EP 4 765 968 A1

FIG. 8

FIG. 9

FIG. 10

Determining a measurement parameter based on a measurement capability of a sidelink terminal by a second determination mode

1102

FIG. 11

FIG. 12

65

1302

| Determining a measurement parameter based on a measurement capability of a sidelink terminal by a third determination mode |
|---|

FIG. 13

FIG. 14

FIG. 15

| Determining module | 1601 |
|---|---|

FIG. 16

Communication device 1700

| Processor 1701 | Transmitter 1703 |
|---|---|
| Bus 1705 | |
| Receiver 1702 | Memory 1704 |

FIG. 17

## INTERNATIONAL SEARCH REPORT

| | International application No. |
|---|---|
| | **PCT/CN2023/129790** |

| | |
|---|---|
| **A. CLASSIFICATION OF SUBJECT MATTER** | |
| H04W 64/00(2009.01)i | |

According to International Patent Classification (IPC) or to both national classification and IPC

**B. FIELDS SEARCHED**

Minimum documentation searched (classification system followed by classification symbols)

    IPC: H04W

Documentation searched other than minimum documentation to the extent that such documents are included in the fields searched

Electronic data base consulted during the international search (name of data base and, where practicable, search terms used)

    3GPP, CNTXT, ENTXTC, DWPI: 侧链, 侧行, 定位, 参考信号, 测量, 间隔, 能力, 时间, 周期, 次数, 处理时间, sidelink, positioning, reference, signal, PRS, measurement, gap, period, capability, time, slot, sensing, process+

**C. DOCUMENTS CONSIDERED TO BE RELEVANT**

| Category* | Citation of document, with indication, where appropriate, of the relevant passages | Relevant to claim No. |
|---|---|---|
| X | NOKIA et al. "RRM Requirements for SL Positioning"<br>*3GPP TSG-RAN WG4 Meeting #107, R4-2309676*, 26 May 2023 (2023-05-26),<br><br>section 1 | 1, 2, 14, 18, 24, 28, 34, 35, 47, 51, 57, 61, 67, 68, 80, 84, 90, 94, 100-102 |
| A | WO 2022126455 A1 (GUANGDONG OPPO MOBILE COMMUNICATIONS CO., LTD.) 23 June 2022 (2022-06-23)<br>    entire document | 1-102 |
| A | US 2022317232 A1 (QUALCOMM INC.) 06 October 2022 (2022-10-06)<br>    description, paragraphs 173-210 | 1-102 |
| A | CN 115428390 A (QUALCOMM INC.) 02 December 2022 (2022-12-02)<br>    entire document | 1-102 |
| A | WO 2023184308 A1 (ZTE CORP.) 05 October 2023 (2023-10-05)<br>    entire document | 1-102 |

☑ Further documents are listed in the continuation of Box C.      ☑ See patent family annex.

| | | |
|---|---|---|
| \* | Special categories of cited documents: | |
| "A" | document defining the general state of the art which is not considered to be of particular relevance | |
| "D" | document cited by the applicant in the international application | |
| "E" | earlier application or patent but published on or after the international filing date | |
| "L" | document which may throw doubts on priority claim(s) or which is cited to establish the publication date of another citation or other special reason (as specified) | |
| "O" | document referring to an oral disclosure, use, exhibition or other means | |
| "P" | document published prior to the international filing date but later than the priority date claimed | |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| **15 July 2024** | **19 July 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2023/129790** |

**C.      DOCUMENTS CONSIDERED TO BE RELEVANT**

| Category* | Citation of document, with indication, where appropriate, of the relevant passages | Relevant to claim No. |
| --- | --- | --- |
| A | LENOVO. "On Potential SL Positioning Solutions"<br>*3GPP TSG RAN WG1#109-e, R1-2204559,* 20 May 2022 (2022-05-20),<br>entire document | 1-102 |
| A | NOKIA et al. "Design of SL Positioning Reference Signal SL-PRS"<br>*3GPP TSG RAN WG1 #112, R1-2300040,* 03 March 2023 (2023-03-03),<br>entire document | 1-102 |

Form PCT/ISA/210 (second sheet) (July 2022)

## INTERNATIONAL SEARCH REPORT
### Information on patent family members

| International application No. |
| --- |
| **PCT/CN2023/129790** |

| Patent document cited in search report | | | Publication date (day/month/year) | Patent family member(s) | | | Publication date (day/month/year) |
| --- | --- | --- | --- | --- | --- | --- | --- |
| WO | 2022126455 | A1 | 23 June 2022 | EP | 4262298 | A1 | 18 October 2023 |
| | | | | EP | 4262298 | A4 | 28 February 2024 |
| | | | | US | 2023327731 | A1 | 12 October 2023 |
| US | 2022317232 | A1 | 06 October 2022 | WO | 2022212994 | A1 | 06 October 2022 |
| | | | | CN | 117099427 | A | 21 November 2023 |
| | | | | KR | 20230161984 | A | 28 November 2023 |
| | | | | EP | 4316057 | A1 | 07 February 2024 |
| | | | | JP | 2024516507 | A | 16 April 2024 |
| CN | 115428390 | A | 02 December 2022 | EP | 4143598 | A1 | 08 March 2023 |
| | | | | US | 2021337377 | A1 | 28 October 2021 |
| | | | | US | 2023336976 | A1 | 19 October 2023 |
| | | | | WO | 2021221952 | A1 | 04 November 2021 |
| WO | 2023184308 | A1 | 05 October 2023 | None | | | |

Form PCT/ISA/210 (patent family annex) (July 2022)